# EUROPEAN PATENT SPECIFICATION

(11) **EP 1 105 792 B1**
(45) Date of publication and mention of the grant of the patent: **05.05.2010**
(21) Application number: 99943892.2
(22) Date of filing: 24.08.1999
(51) Int. Cl.: G06F 9/38

(54) **SYSTEM WITH WIDE OPERAND ARCHITECTURE, AND METHOD**
SYSTEM MIT BREITER OPERANDENARCHITEKTUR UND VERFAHREN
SYSTEME A ARCHITECTURE D'OPERANDE LARGE ET PROCEDE ASSOCIE

(30) Priority: 24.08.1998 US 97635 P; 13.10.1998 US 169963
(43) Date of publication of application: 13.06.2001
(73) Proprietor: MicroUnity Systems Engineering, Inc., Santa Clara, CA 95050 (US)
(72) Inventor: HANSEN, Craig, Los Altos, CA 94022 (US)
(74) Representative: Clark, Jane Anne
(86) International application number: PCT/US1999/019342
(87) International publication number: WO 2000/023875

(56) References cited:
- US-A- 4 785 393
- US-A- 5 031 135
- US-A- 5 481 686
- US-A- 5 740 093
- US-A- 5 742 840
- HANSEN C., "Architecture of a Broadband Mediaprocessor", IEEE, 29 February 1996, pages 1-8 XP002921975
- RICE E.," Multiprecision Division on an 8-bit Processor", IEEE, 1997, pages 74-81, XP002921976

## Description

### Field of the Invention

The present invention relates to general purpose processor architectures, and particularly relates to wide operand architectures.

### BACKGROUND OF THE INVENTION

The performance level of a processor, and particularly a general purpose processor, can be estimated from the multiple of a plurality of interdependent factors: clock rate, gates per clock, number of operands, operand and data path width, and operand and data path partitioning. Clock rate is largely influenced by the choice of circuit and logic technology, but is also influenced by the number of gates per clock. Gates per clock is how many gates in a pipeline may change state in a single clock cycle. This can be reduced by inserting latches into the data path: when the number of gates between latches is reduced, a higher clock is possible. However, the additional latches produce a longer pipeline length, and thus come at a cost of increased instruction latency. The number of operands is straightforward; for example, by adding with carry-save techniques, three values may be added together with little more delay than is required for adding two values. Operand and data path width defines how much data can be processed at once; wider data paths can perform more complex functions, but generally this comes at a higher implementation cost. Operand and data path partitioning refers to the efficient use of the data path as width is increased, with the objective of maintaining substantially peak usage.

The last factor, operand and data path partitioning, is treated extensively in commonly-assigned U.S. Patent No.'s 5,742,840,5,794,060,5,794,061,5,809,321, and 5,822,603, which describe systems and methods for enhancing the utilization of a general purpose processor by adding classes of instructions. These classes of instructions use the contents of general purpose registers as data path sources, partition the operands into symbols of a specified size, perform operations in parallel, catenate the results and place the catenated results into a general-purpose register. These patents, all of which are assigned to the same assignee as the present invention, teach a general purpose microprocessor which has been optimized for processing and transmitting media data streams through significant parallelism.

While the foregoing patents offered significant improvements in utilization and performance of a general purpose microprocessor, particularly for handling broadband communications such as media data streams, other improvements are possible.

Many general purpose processors have general registers to store operands for instructions, with the register width matched to the size of the data path. Processor designs generally limit the number of accessible registers per instruction because the hardware to access these registers is relatively expensive in power and area. While the number of accessible registers varies among processor designs, it is often limited to two, three or four registers per instruction when such instructions are designed to operate in a single processor clock cycle or a single pipeline flow. Some processors, such as the Motorola 68000 have instructions to save and restore an unlimited number of registers, but require multiple cycles to perform such an instruction.

The Motorola 68000 also attempts to overcome a narrow data path combined with a narrow register file by taking multiple cycles or pipeline flows to perform an instruction, and thus emulating a wider data path. However, such multiple precision techniques offer only marginal improvement in view of the additional clock cycles required. The width and accessible number of the general purpose registers thus fundamentally limits the amount of processing that can be performed by a single instruction in a register-based machine.

Existing processors may provide instructions that accept operands for which one or more operands are read from a general purpose processor's memory system. However, as these memory operands are generally specified by register operands, and the memory system data path is no wider than the processor data path, the width and accessible number of general purpose operands per instruction per cycle or pipeline flow is not enhanced.

The number of general purpose register operands accessible per instruction is generally limited by logical complexity and instruction size. For example, it might be possible to implement certain desirable but complex functions by specifying a large number of general purpose registers, but substantial additional logic would have to be added to a conventional design to permit simultaneous reading and bypassing of the register values. While dedicated registers have been used in some prior art designs to increase the number or size of source operands or results, explicit instructions load or store values into these dedicated registers, and additional instructions are required to save and restore these registers upon a change of processor context.

There has therefore been a need for a processor system capable of efficient handling of operands of greater width than either the memory system or any accessible general purpose register.

The paper entitled "Architecture of a Broadband Media Processor" by Craig Hansen in Proceedings of Institute of Electrical and Electronic Engines COMPCON96, February 25-29, 1996 describes a broadband media processor in which media processor group instructions may be implemented which perform operations on corresponding groups of symbols from two registers. For example, corresponding symbol groups from two registers may be added, subtracted, multiplied, or multiplied and then added to corresponding symbol groups from another register. Group switching operations are also possible in which group symbols from two register files are rearranged, swopped, extracted, expanded or compressed, for example.

### SUMMARY OF THE INVENTION

According to a first aspect of the present invention, there is provided a method as set out in Claim 1. In another aspect, the present invention provides a system as set out in Claim 15.

The present invention provides a system and method for improving the performance of general purpose processors by expanding at least one source operand to a width greater than the width of either the general purpose register or the data path width. In addition, several classes of instructions will be provided which cannot be performed efficiently if the operands are limited to the width and accessible number of general purpose registers.

In the present invention, operands are provided which are substantially larger than the data path width of the processor. This is achieved, in part, by using a general purpose register to specify a memory address from which at least more than one, but typically several data path widths of data can be read. To permit such a wide operand to be performed in a single cycle, the data path functional unit is augmented with dedicated storage to which the memory operand is copied on an initial execution of the instruction. Further execution of the instruction or other similar instructions that specify the same memory address can read the dedicated storage to obtain the operand value. However, such reads are subject to conditions to verify that the memory operand has not been altered by intervening instructions. If the memory operand remains current - that is, the conditions are met - the memory operand fetch can be combined with one or more register operands in the functional unit, producing a result. The size of the result is, typically, constrained to that of a general register so that no dedicated or other special storage is required for the result.

Exemplary instructions using wide operations include wide instructions that perform bit-level switching (Wide Switch), byte or larger table-lookup (Wide Translate), Wide Multiply Matrix, Wide Multiply Matrix Extract, Wide Multiply Matrix Extract Immediate, Wide Multiply Matrix Floating point, and Wide Multiply Matrix Galois.

Another aspect of the present invention addresses efficient usage of a multiplier array that is fully used for high precision arithmetic, but is only partly used for other, lower precision operations. This can be accomplished by extracting the high-order portion of the multiplier product or sum of products, adjusted by a dynamic shift amount from a general register or an adjustment specified as part of the instruction, and rounded by a control value from a register or instruction portion. The rounding may be any of several types, including round-to-nearest/even, toward zero, floor, or ceiling. Overflows are typically handled by limiting the result to the largest and smallest values that can be accurately represented in the output result.

When an extract is controlled by a register, the size of the result can be specified, allowing rounding and limiting to a smaller number of bits than can fit in the result. This permits the result to be scaled for use in subsequent operations without concern of overflow or rounding. As a result, performance is enhanced. In those instances where the extract is controlled by a register, a single register value defines the size of the operands, the shift amount and size of the result, and the rounding control. By placing such control information in a single register, the size of the instruction is reduced over the number of bits that such an instruction would otherwise require, again improving performance and enhancing processor flexibility. Exemplary instructions are Ensemble Convolve Extract, Ensemble Multiply Extract, Ensemble Multiply Add Extract, and Ensemble Scale Add Extract. With particular regard to the Ensemble Scale Add Extract Instruction, the extract control information is combined in a register with two values used as scalar multipliers to the contents of two vector multiplicands. This combination reduces the number of registers otherwise required, thus reducing the number of bits required for the instruction.

### THE FIGURES

Figure 1 is a system level diagram showing the functional blocks of a system in accordance with an exemplary embodiment of the present invention.
Figure 2 is a matrix representation of a wide matrix multiply in accordance with an exemplary embodiment of the present invention.
Figure 3 is a further representation of a wide matrix multiple in accordance with an exemplary embodiment of the present invention.
Figure 4 is a system level diagram showing the functional blocks of a system incorporating a combined Simultaneous Multi Threading and Decoupled Access from Execution processor in accordance with an exemplary embodiment of the present invention.
Figure 5 illustrates a wide operand in accordance with an exemplary embodiment of the present invention.
Figure 6 illustrates an approach to specifier decoding in accordance with an exemplary embodiment of the present invention.
Figure 7 illustrates in operational block form a Wide Function Unit in accordance with an exemplary embodiment of the present invention.
Figure 8 illustrates in flow diagram form the Wide Microcache control function in accordance with an exemplary embodiment of the present invention.
Figures 9 and 10 illustrate a Wide Microcache control in accordance with an exemplary embodiment of the present invention.
Figure 11 illustrates a Wide Switch instruction in accordance with an exemplary embodiment of the present invention.
Figure 12 illustrates a Wide Translate instruction in accordance with an exemplary embodiment of the present invention.
Figures 13 and 14 illustrate a Wide Multiply Matrix instruction in accordance with an exemplary embodiment of the present invention.
Figures 15 and 16 illustrate a Wide Multiply Matrix Extract instruction in accordance with an exemplary embodiment of the present invention.
Figures 17 and 18 illustrate a Wide Multiply Matrix Extract Immediate instruction in accordance with an exemplary embodiment of the present invention.
Figures 19 and 20 illustrate a Wide Multiply Matrix Floating-point instruction in accordance with an exemplary embodiment of the present invention.
Figure 21 illustrates a Wide.Multiply Matrix Galois instruction in accordance with an exemplary embodiment of the present invention.
Figures 22 and 23 illustrate an Ensemble Extract Inplace instruction in accordance with an exemplary embodiment of the present invention.
Figures 25-31 illustrate an Ensemble Extract instruction in accordance with an exemplary embodiment of the present invention.
Figures 32 and 33 illustrate a System and Privileged Library Calls in accordance with an exemplary embodiment of the present invention.

### DETAILED DESCRIPTION OF THE INVENTION

### Processor Layout

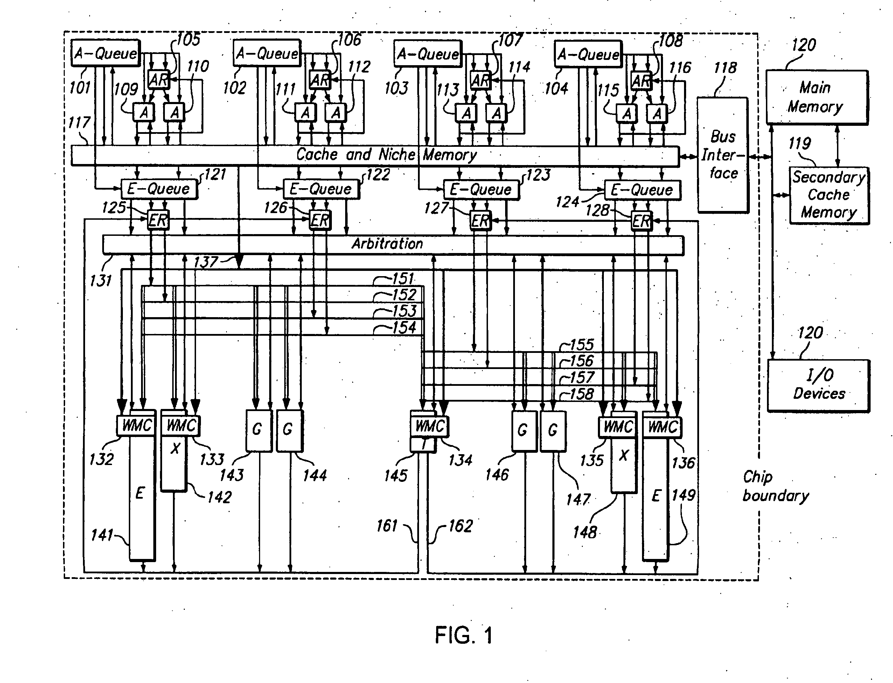

Referring first to Figure 1, a general purpose processor is illustrated therein in block diagram form. In Figure 1, four copies of an access unit are shown, each with an access instruction fetch queue A-Queue 101-104. Each access instruction fetch queue A-Queue 101-104 is coupled to an access register file AR 105-108, which are each coupled to two access functional units A 109-116. In a typical embodiment, each thread of the processor may have on the order of sixty-four general purpose registers (e.g., the AR's 105-108 and ER's 125-128). The access units function independently for four simultaneous threads of execution, and each compute program control flow by performing arithmetic and branch instructions and access memory by performing load and store instructions. These access units also provide wide operand specifiers for wide operand instructions. These eight access functional units A 109-116 produce results for access register files AR 105-108 and memory addresses to a shared memory system 117-120.

The memory system is comprised of a combined cache and niche memory 117, an external bus interface 118, and, externally to the device, a secondary cache 119 and main memory system with I/O devices 120. The memory contents fetched from memory system 117-120 are combined with execute instructions not performed by the access unit, and entered into the four execute instruction queues E-Queue 121-124. For wide instructions, memory contents fetched from memory system 117-120 are also provided to wide operand microcaches 132-136 by bus 137. Instructions and memory data from E-queue 121-124 are presented to execution register files 125-128, which fetch execution register file source operands. The instructions are coupled to the execution unit arbitration unit Arbitration 131, that selects which instructions from the four threads are to be routed to the available execution functional units E 141 and 149, X 142 and 148, G 143-144 and 146-147, and T 145. The execution functional units E 141 and 149, the execution functional units X 142 and 148, and the execution functional unit T 145 each contain a wide operand microcache 132-136, which are each coupled to the memory system 117 by bus 137.

The execution functional units G 143-144 and 146-147 are group arithmetic and logical units that perform simple arithmetic and logical instructions, including group operations wherein the source and result operands represent a group of values of a specified symbol size, which are partitioned and operated on separately, with results catenated together. In a presently preferred embodiment the data path is 128 bits wide, although the present invention is not intended to be limited to any specific size of data path.

The execution functional units X 142 and 148 are crossbar switch units that perform crossbar switch instructions. The crossbar switch units 142 and 148 perform data handling operations on the data stream provided over the data path source operand buses 151-158, including deals, shuffles, shifts, expands, compresses, swizzles, permutes and reverses, plus the wide operations discussed hereinafter. In a key element of a first aspect of the invention, at least one such operation will be expanded to a width greater than the general register and data path width.

The execution functional units E 141 and 149 are ensemble units that perform ensemble instructions using a large array multiplier, including group or vector multiply and matrix multiply of operands partitioned from data path source operand buses 151-158 and treated as integer, floating-point, polynomial or Galois field values. Matrix multiply instructions and other operations utilize a wide operand loaded into the wide operand microcache 132 and 136.

The execution functional unit T 145 is a translate unit that performs table-look-up operations on a group of operands partitioned from a register operand, and catenates the result. The Wide Translate instruction utilizes a wide operand loaded into the wide operand microcache 134.

The execution functional units E 141, 149, execution functional units X -142, 148, and execution functional unit T each contain dedicated storage to permit storage of source operands including wide operands as discussed hereinafter. The dedicated storage 132-136, which may be thought of as a wide microcache, typically has a width which is a multiple of the width of the data path operands related to the data path source operand buses 151-158. Thus, if the width of the data path 151-158 is 128 bits, the dedicated storage 132-136 may have a width of 256, 512,1024 or 2048 bits. Operands which utilize the full width of the dedicated storage are referred to herein as wide operands, although it is not necessary in all instances that a wide operand use the entirety of the width of the dedicated storage; it is sufficient that the wide operand use a portion greater than the width of the memory data path of the output of the memory system 117-120 and the functional unit data path of the input of the execution functional units 141-149, though not necessarily greater than the width of the two combined. Because the width of the dedicated storage 132-136 is greater than the width of the memory operand bus 137, portions of wide operands are loaded sequentially into the dedicated storage 132-136. However, once loaded, the wide operands may then be used at substantially the same time. It can be seen that functional units 141-149 and associated execution registers 125-128 form a data functional unit, the exact elements of which may vary with implementation.

The execution register file ER 125-128 source operands are coupled to the execution units 141-145 using source operand buses 151-154 and to the execution units 145-149 using source operand buses 155-158. The function unit result operands from execution units 141-145 are coupled to the execution register file ER 125-128 using result bus 161 and the function units result operands from execution units 145-149 are coupled to the execution register file using result bus 162.

### Wide Multiply Matrix

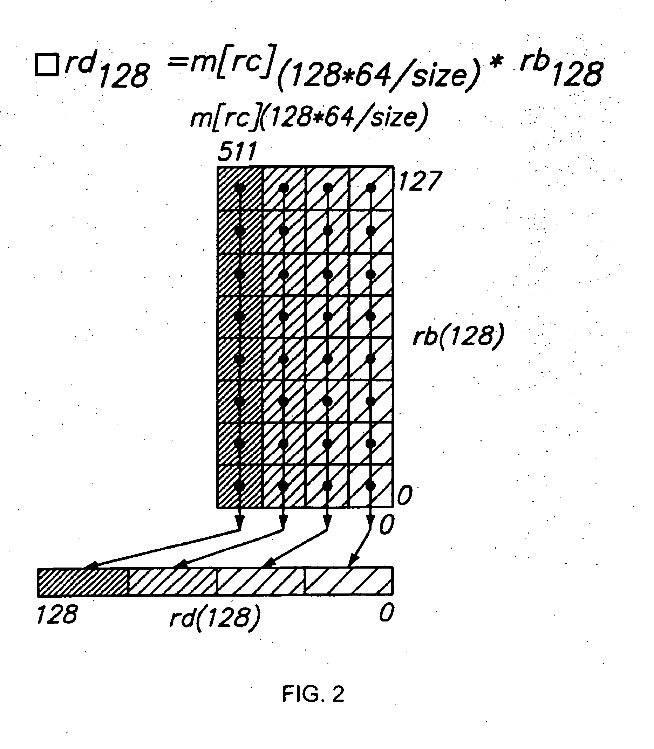

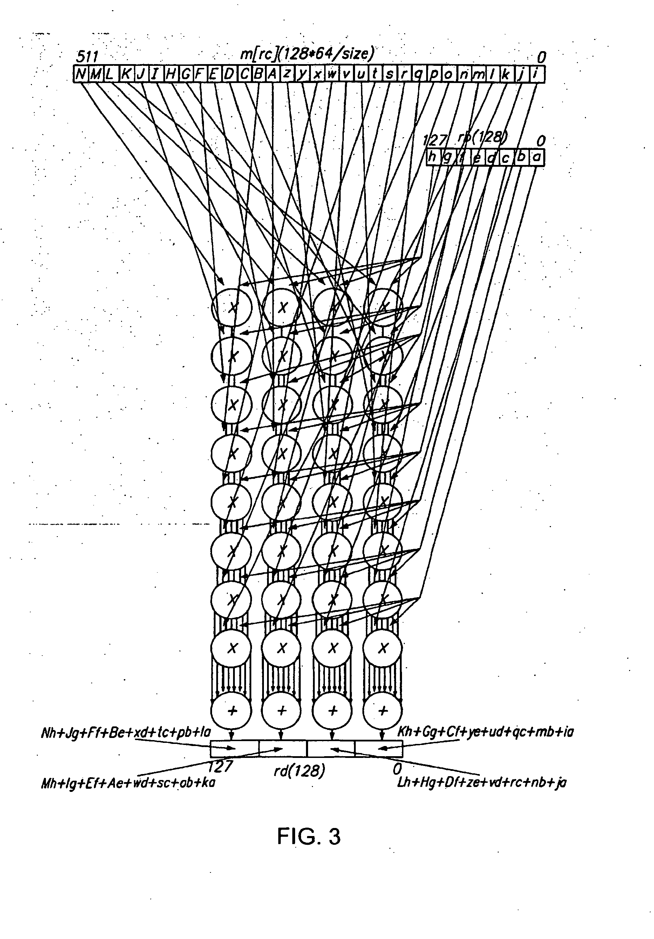

The wide operands of the present invention provide the ability to execute complex instructions such as the wide multiply matrix instruction shown in Figure 2, which can be appreciated in an alternative form, as well, from Figure 3. As can be appreciated from Figures 2 and 3, a wide operand permits, for example, the matrix multiplication of various sizes and shapes which exceed the data path width. The example of Figure 2 involves a matrix specified by register rc having 128*64/size bits (512 bits for this example) multiplied by a vector contained in register rb having 128 bits, to yield a result, placed in register rd, of 128 bits.

The notation used in Figure 2 and similar figures and Annexes illustrates a multiplication as a shaded area at the intersection of two operands projected in the horizontal and vertical dimensions. A summing node is illustrated as a line segment connecting a darkened dots at the location of multiplier products that are summed. Products that are subtracted at the summing node are indicated with a minus symbol within the shaded area.

When the instruction operates on floating-point values, the multiplications and summations illustrated are floating-point multiplications and summations. An exemplary embodiment may perform these operations without rounding the intermediate results, thus computing the final result as if computed to infinite precision and then rounded only once.

It can be appreciated that an exemplary embodiment of the multipliers may compute the product in carry-save form and may encode the multiplier rb using Booth encoding to minimize circuit area and delay. It can be appreciated that an exemplary embodiment of such summing nodes may perform the summation of the products in any order, with particular attention to minimizing computation delay, such as by performing the additions in a binary or higher-radix tree, and may use carry-save adders to perform the addition to minimize the summation delay. It can also be appreciated that an exemplary embodiment may perform the summation using sufficient intermediate precision that no fixed-point or floating-point overflows occur on intermediate results.

A comparison of Figures 2 and 3 can be used to clarify the relation between the notation used in Figure 2 and the more conventional schematic notation in Figure 3, as the same operation is illustrated in these two figures.

### Wide Operand

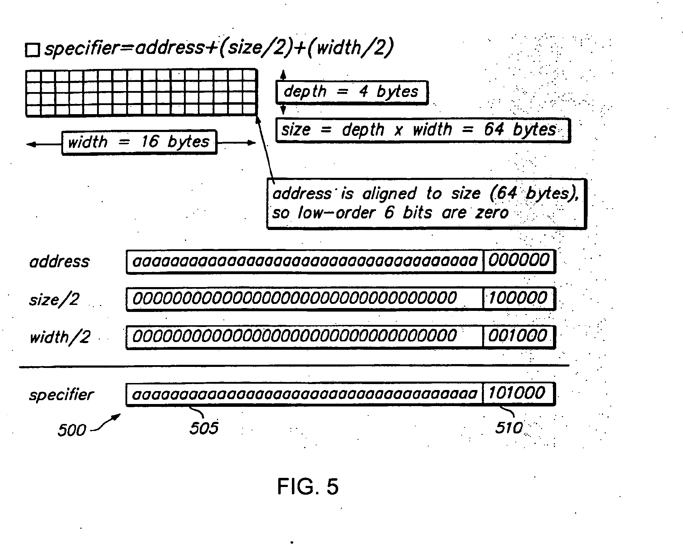

The operands that are substantially larger than the data path width of the processor are provided by using a general-purpose register to specify a memory specifier from which several data path widths of data can be read into the dedicated storage. The memory specifier typically includes the memory address together with the size and shape of the matrix of data being operated on. The memory specifier or wide operand specifier can be better appreciated from Figure 5, in which a specifier 500 is seen to be an address, plus a field representative of the size/2 and a further field representative of width/2, where size is the product of the depth and width of the data. The address is aligned to a specified size, for example sixty-four bytes, so that a plurality of low order bits (for example, six bits) are zero. The specifier 500 can thus be seen to comprise a first field 505 for the address, plus two field indicia 510 within the low order six bits to indicate size and width.

### Specifier Decoding

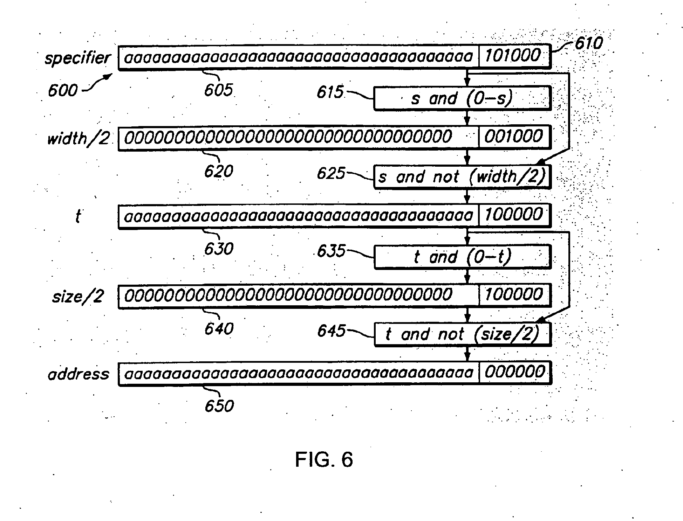

The decoding of the specifier 500 may be further appreciated form Figure 6 where, for a given specifier 600 made up of an address field 605 together with a field 610 comprising plurality of low order bits. By a series of arithmetic operations shown at steps 615 and 620, the portion of the field 610 representative of width/2 is developed. In a similar series of steps shown at 625 and 630, the value of t is decoded, which can then be used to decode both size and address. The portion of the field 610 representative of size/2 is decoded as shown at steps 635 and 640, while the address is decoded in a similar way at steps 645 and 650.

### Wide Function Unit

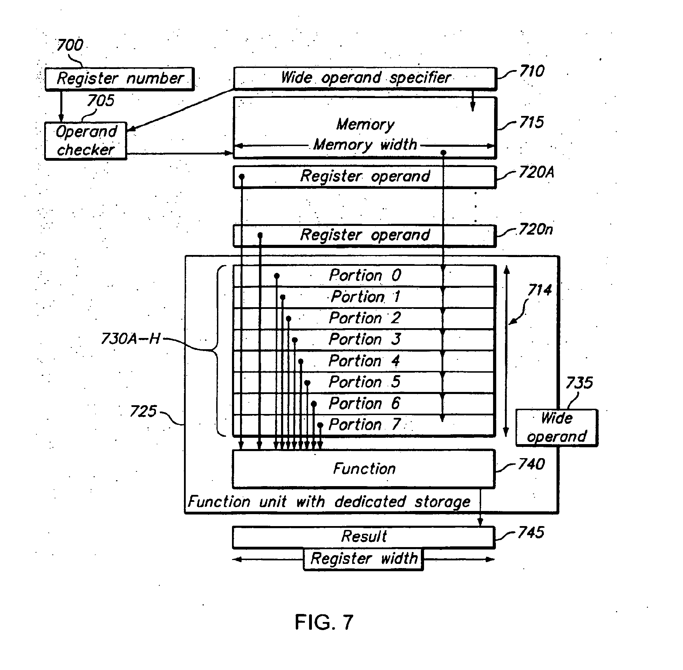

The wide function unit may be better appreciated from Figure 7, in which a register number 700 is provided to an operand checker 705. Wide operand specifier 710 communicates with the operand checker 705 and also addresses memory 715 having a defined memory width. The memory address includes a plurality of register operands 720A-n, which are accumulated in a dedicated storage portion 714 of a data functional unit 725. In the exemplary embodiment shown in Figure 7, the dedicated storage 714 can be seen to have a width equal to eight data path widths, such that eight wide operand portions 730A-H are sequentially loaded into the dedicated storage to form the wide operand. Although eight portions are shown in Figure 7, the present invention is not limited to eight or any other specific multiple of data path widths. Once the wide operand portions 730AH are sequentially loaded, they may be used as a single wide operand 735 by the functional element 740, which may be any element(s) from Figure 1 connected thereto. The result of the wide operand is then provided to a result register 745, which in a presently preferred embodiment is of the same width as the memory width..

Once the wide operand is successfully loaded into the dedicated storage 714, a second aspect of the present invention may be appreciated. Further execution of this instruction or other similar instructions that specify the same memory address can read the dedicated storage to obtain the operand value under specific conditions that determine whether the memory operand has been altered by intervening instructions. Assuming that these conditions are met, the memory operand fetch from the dedicated storage is combined with one or more register operands in the functional unit, producing a result. In some embodiments, the size of the result is limited to that of a general register, so that no similar dedicated storage is required for the result. However, in some different embodiments, the result may be a wide operand, to further enhance performance.

To permit the wide operand value to be addressed by subsequent instructions specifying the same memory address, various conditions must be checked and confirmed:
Those conditions include:
   1. Each memory store instruction checks the memory address against the memory addresses recorded for the dedicated storage. Any match causes the storage to be marked invalid, since a memory store instruction directed to any of the memory addresses stored in dedicated storage 714 means that data has been overwritten.
   2. The register number used to address the storage is recorded. If no intervening instructions have written to the register, and the same register is used on the subsequent instruction, the storage is valid (unless marked invalid by rule #1).
   3. If the register has been modified or a different register number is used, the value of the register is read and compared against the address recorded for the dedicated storage. This uses more resources than #1 because of the need to fetch the register contents and because the width of the register is greater than that of the register number itself. If the address matches, the storage is valid. The new register number is recorded for the dedicated storage.
   4. If conditions #2 or #3 are not met, the register contents are used to address the general-purpose processor's memory and load the dedicated storage. If dedicated storage is already fully loaded, a portion of the dedicated storage must be discarded (victimized) to make room for the new value. The instruction is then performed using the newly updated dedicated storage. The address and register number is recorded for the dedicated storage.
      By checking the above conditions, the need for saving and restoring the dedicated storage is eliminated. In addition, if the context of the processor is changed and the new context does not employ Wide instructions that reference the same dedicated storage, when the original context is restored, the contents of the dedicated storage are allowed to be used without refreshing the value from memory, using checking rule #3. Because the values in the dedicated storage are read from memory and not modified directly by performing wide operations, the values can be discarded at any time without saving the results into general memory. This property simplifies the implementation of rule #4 above.

An alternate embodiment of the present invention can replace rule #1 above with the following rule:
1.a. Each memory store instruction checks the memory address against the memory addresses recorded for the dedicated storage. Any match causes the dedicated storage to be updated, as well as the general memory.

By use of the above rule 1.a. memory store instructions can modify the dedicated storage, updating just the piece of the dedicated storage that has been changed, leaving the remainder intact. By continuing to update the general memory, it is still true that the contents of the dedicated memory can be discarded at any time without saving the results into general memory. Thus rule #4 is not made more complicated by this choice. The advantage of this alternate embodiment is that the dedicated storage need not be discarded (invalidated) by memory store operations.

### Wide Microcache Data Structures

Referring next to Annex 1, an exemplary arrangement of the data structures of the wide microcache or dedicated storage114 may be better appreciated. The wide microcache contents, wmc.c, can be seen to form a plurality of data path widths 900A-n, although in the example shown the number is eight. The physical address, wmc.pa, is shown as 64 bits in the example shown, although the invention is not limited to a specific width. The size of the contents, wmc.size, is also provided in a field which is shown as 10 bits in an exemplary embodiment. A "contents valid" flag, wmc.cv, of one bit is also included in the data structure, together with a two bit field for thread last used, or wmc.th. In addition, a six bit field for register last used, wmc.reg, is provided in an exemplary embodiment. Further, a one bit flag for register and thread valid, or wmc.rtv, may be provided.

### Wide Microcache Control - Software

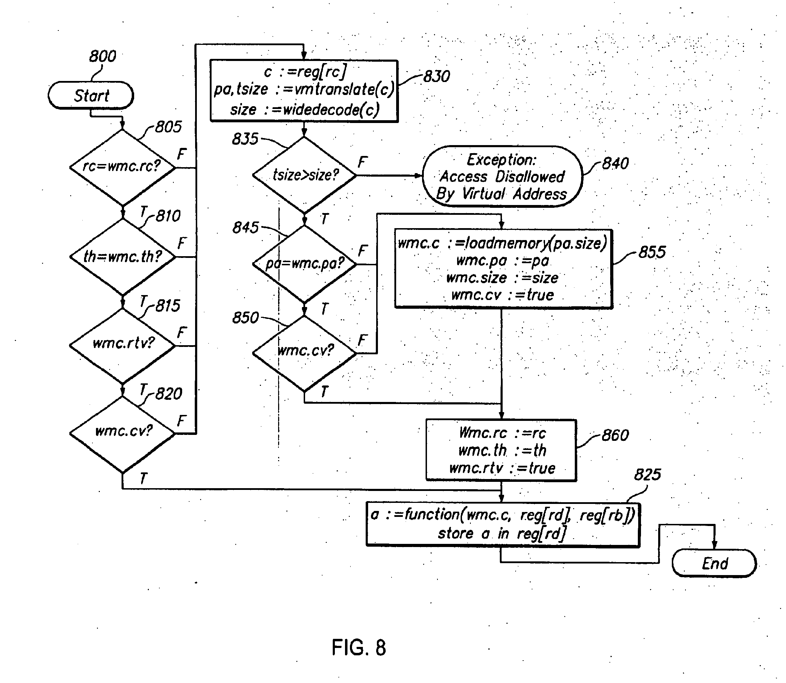

The process by which the microcache is initially written with a wide operand, and thereafter verified as valid for fast subsequent operations, may be better appreciated from Figure 8. The process begins at 800, and progresses to step 805 where a check of the register contents is made against the stored value wmc.rc. If true, a check is made at step 810 to verify the thread. If true, the process then advances to step 815 to verify whether the register and thread are valid. If step 815 reports as true, a check is made at step 820 to verify whether the contents are valid. If all of steps 805 through 820 return as true, the subsequent instruction is able to utilize the existing wide operand as shown at step 825, after which the process ends. However, if any of steps 805 through 820 return as false, the process branches to step 830, where content, physical address and size are set. Because steps 805 through 820 all lead to either step 825 or 830, steps 805 through 820 may be performed in any order or simultaneously without altering the process. The process then advances to step 835 where size is checked. This check basically ensures that the size of the translation unit is greater than or equal to the size of the wide operand, so that a physical address can directly replace the use of a virtual address. The concern is that, in some embodiments, the wide operands may be larger than the minimum region that the virtual memory system is capable of mapping. As a result, it would be possible for a single contiguous virtual address range to be mapped into multiple, disjoint physical address ranges, complicating the task of comparing physical addresses. By determining the size of the wide operand and comparing that size against the size of the virtual address mapping region which is referenced, the instruction is aborted with an exception trap if the wide operand is larger than the mapping region. This ensures secure operation of the processor. Software can then re-map the region using a larger size map to continue execution if desired. Thus, if size is reported as unacceptable at step 835, an exception is generated at step 840. If size is acceptable, the process advances to step 845 where physical address is checked. If the check reports as met, the process advances to step 850, where a check of the contents valid flag is made. If either check at step 845 or 850 reports as false, the process branches and new content is written into the dedicated storage 114, with the fields thereof being set accordingly. Whether the check at step 850 reported true or whether new content was written at step 855, the process advances to step 860 where appropriate fields are set to indicate the validity of the data, after which the requested function can be performed at step 825. The process then ends.

### Wide Microcache Control -Hardware

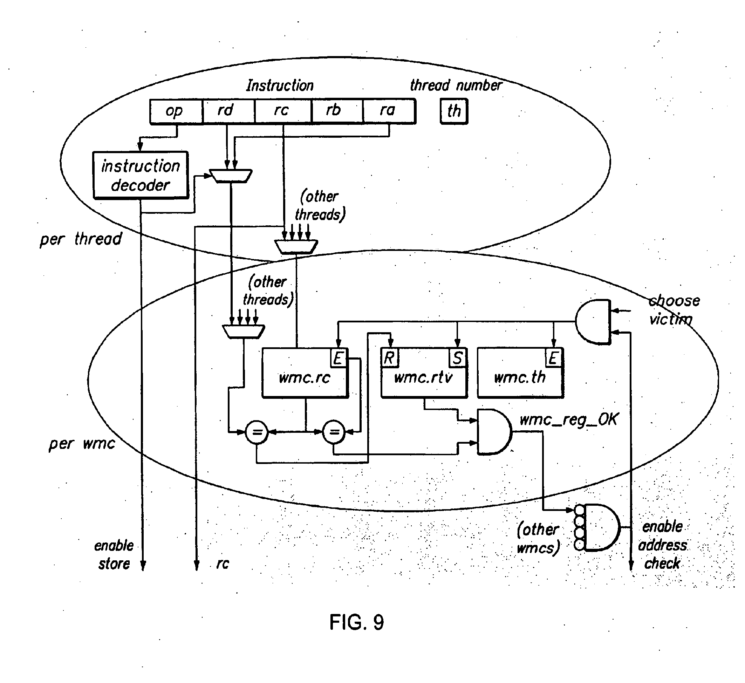

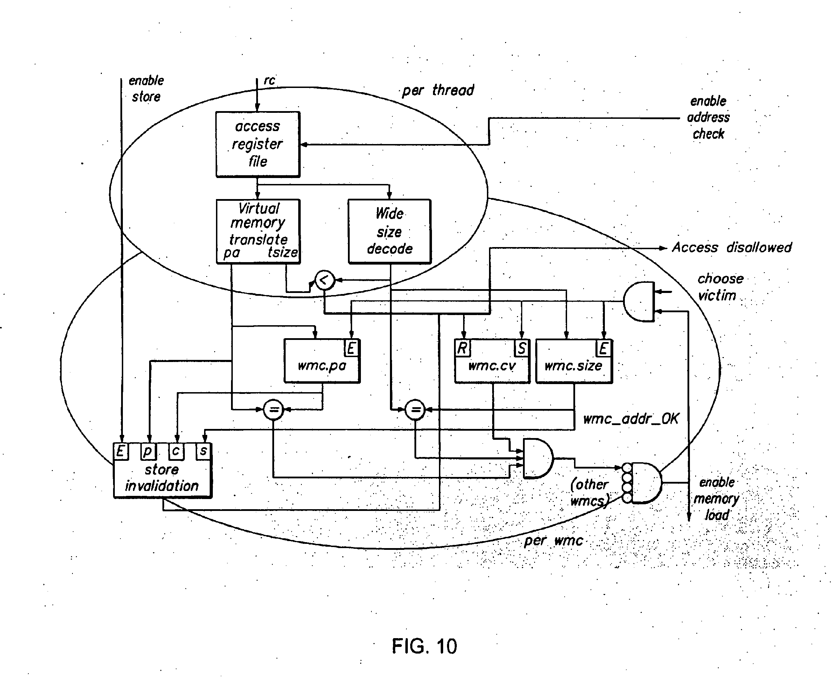

Referring next to Figures 9 and10, which together show the operation of the microcache controller from a hardware standpoint, the operation of the microcache controller may be better understood. In the hardware implementation, it is clear that conditions which are indicated as sequential steps in Figure 8 and Annex 1 above can be performed in parallel, reducing the delay for such wide operand checking. Further, a copy of the indicated hardware may be included for each wide microcache, and thereby all such microcaches as may be alternatively referenced by an instruction can be tested in parallel. It is believed that no further discussion of Figures 9 and 10 is required in view of the extensive discussion of Figure 8 and Annex 1, as above.

Various alternatives to the foregoing approach do exist for the use of wide operands, including an implementation in which a single instruction can accept two wide operands, partition the operands into symbols, multiply corresponding symbols together, and add the products to produce a single scalar value or a vector of partitioned values of width of the register file, possibly after extraction of a portion of the sums. Such an instruction can be valuable for detection of motion or estimation of motion in video compression. A further enhancement of such an instruction can incrementally update the dedicated storage if the address of one wide operand is within the range of previously specified wide operands in the dedicated storage, by loading only the portion not already within the range and shifting the in-range portion as required. Such an enhancement allows the operation to be performed over a "sliding window" of possible values. In such an instruction, one wide operand is aligned and supplies the size and shape information, while the second wide operand, updated incrementally, is not aligned.

Another alternative embodiment of the present invention can define additional instructions where the result operand is a wide operand. Such an enhancement removes the limit that a result can be no larger than the size of a general register, further enhancing performance. These wide results can be cached locally to the functional unit that created them, but must be copied to the general memory system before the storage can be reused and before the virtual memory system alters the mapping of the address of the wide result. Data paths must be added so that load operations and other wide operations can read these wide results - forwarding of a wide result from the output of a functional unit back to its input is relatively easy, but additional data paths may have to be introduced if it is desired to forward wide results back to other functional units as wide operands.

As previously discussed, a specification of the size and shape of the memory operand is included in the low-order bits of the address. In a presently preferred implementation, such memory operands are typically a power of two in size and aligned to that size. Generally, one-half the total size is added (or inclusively or'ed, or exclusively or'ed) to the memory address, and one half of the data width is added (or inclusively or'ed, or exclusively or'ed) to the memory address. These bits can be decoded and stripped from the memory address, so that the controller is made to step through all the required addresses. This decreases the number of distinct operands required for these instructions, as the size, shape and address of the memory operand are combined into a single register operand value.

The following table illustrates the arithmetic and descriptive notation used in the pseudocode in the Figures and Annexes referenced hereinafter:

| | |
|---|---|
| x + y | two's complement addition of x and y. Result is the same size as the operands, and operands must be of equal size. |
| x - y | two's complement subtraction of y from x. Result is the same size as the operands, and operands must be of equal size. |
| x * y | two's complement multiplication of x and y. Result is the same size as the operands, and operands must be of equal size. |
| x / y | two's complement division ofx by y. Result is the same size as the operands, and operands must be of equal size. |
| x & y | bitwise and of x and y. Result is same size as the operands, and operands must be of equal size. |
| x \| y | bitwise or of x and y. Result is same size as the operands, and operands must be of equal size. |
| x ^ y | bitwise exclusive-of of x and y. Result is same size as the operands, and operands must be of equal size. |
| ∼x | bitwise inversion of x. Result is same size as the operand. |
| x = y | two's complement equality comparison between x and y. Result is a single bit, and operands must be of equal size. |
| x ≠ y | two's complement inequality comparison between x and y. Result is a |
| | single bit, and operands must be of equal size. |
| x < y | two's complement less than comparison between x and y. Result is a single bit, and operands must be of equal size. |
| x ≥ y | two's complement greater than or equal comparison between x and y. Result is a single bit, and operands must be of equal size. |
| √x | floating-point square root of x |
| x ∥ y | concatenation of bit field x to left of bit field y |
| ₓy | binary digit x repeated, concatenated y times. Size of result is y. |
| x_{y} | extraction of bit y (using little-endian bit numbering) from value x. Result is a single bit. |
| x_{y..z} | extraction of bit field formed from bits y through z of value x. Size of result is y-z+1; if z>y, result is an empty string, |
| x?y:z | value of y, if x is true, otherwise value of z. Value of x is a single bit. |
| x ← y | bitwise assignment of x to value of y |
| x.y | subfield y of structured bitfield x |
| Sn | signed, two's complement, binary data format of n bytes |
| Un | unsigned binary data format ofn bytes |
| Fn | floating-point data format of n bytes |

### Wide Operations

Particular examples of wide operations which are defined by the present invention include the Wide Switch instruction that performs bit-level switching; the Wide Translate instruction which performs byte (or larger) table lockup; Wide Multiply Matrix; Wide Multiply Matrix Extract and Wide Multiply Matrix Extract Immediate (discussed below), Wide Multiply Matrix Floating-point, and Wide Multiply Matrix Galois (also discussed below). While the discussion below focuses on particular sizes for the exemplary instructions, it will be appreciated that the invention is not limited to a particular width.

### Wide Switch

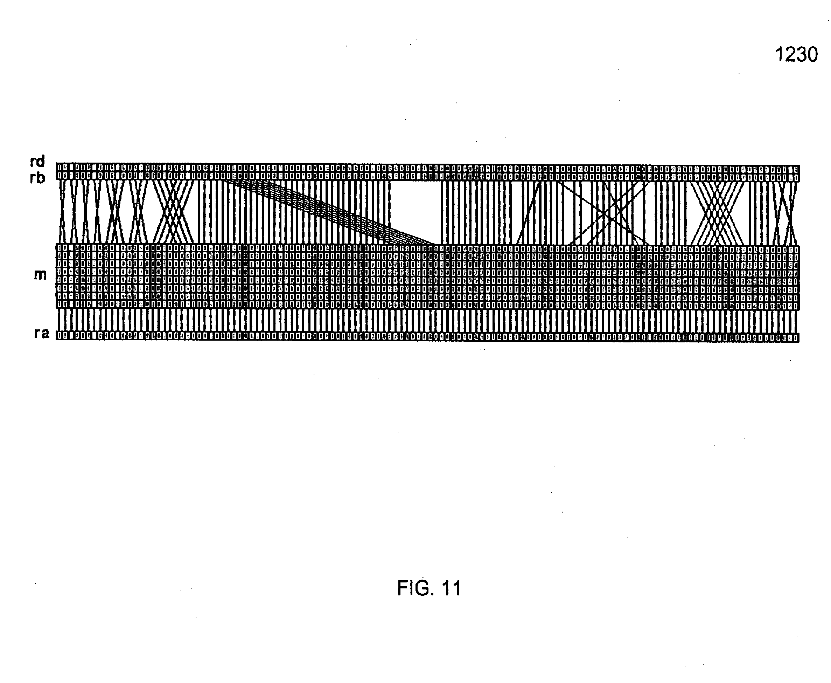

An exemplary embodiment of the Wide Switch instruction is shown in Figure 11 and Annexes 2-4. In an exemplary embodiment, the Wide Switch instruction rearranges the contents of up to two registers (256 bits) at the bit level, producing a full-width (128 bits) register result. To control the rearrangement, a wide operand specified by a single register, consisting of eight bits per bit position is used. For each result bit position, eight wide operand bits for each bit position select which of the 256 possible source register bits to place in the result. When a wide operand size smaller than 128 bytes is specified, the high order bits of the memory operand are replaced with values corresponding to the result bit position, so that the memory operand specifies a bit selection within symbols of the operand size, performing the same operation on each symbol.

In an exemplary embodiment, these instructions take an address from a general register to fetch a large operand from memory, a second operand from a general register, perform a group of operations on partitions of bits in the operands, and catenate the results together, placing the result in a general register. An exemplary embodiment of the format 1210 of the Wide Switch instruction is shown in Annex 2.

An exemplary embodiment of a schematic 1230 of the Wide Switch instruction is shown in Fig. 11 . In an exemplary embodiment, the contents of register rc specifies a virtual address and optionally an operand size, and a value of specified size is loaded from memory. A second value is the catenated contents of registers rd and rb. Eight corresponding bits from the memory value are used to select a single result bit from the second value, for each corresponding bit position. The group of results is catenated and placed in register ra.

In an exemplary embodiment, the virtual address must either be aligned to 128 bytes, or must be the sum of an aligned address and one-half of the size of the memory operand in bytes. An aligned address must be an exact multiple of the size expressed in bytes. The size of the memory operand must be 8,16,32,64, or 128 bytes. If the address is not valid an "access disallowed by virtual address" exception occurs. When a size smaller than 128 bits is specified, the high order bits of the memory operand are replaced with values corresponding to the bit position, so that the same memory operand specifies a bit selection within symbols of the operand size, and the same operation is performed on each symbol.

In an exemplary embodiment, a wide switch (W.SWITCH.L or W.SWITCH.B) instruction specifies an 8-bit location for each result bit from the memory operand, that selects one of the 256 bits represented by the catenated contents of registers rd and rb.

An exemplary embodiment of the pseudocode 1250 of the Wide Switch instruction is shown in Annex 3. An exemplary embodiment of the exceptions 1280 of the Wide Switch instruction is shown in Annex 4.

### Wide Translate

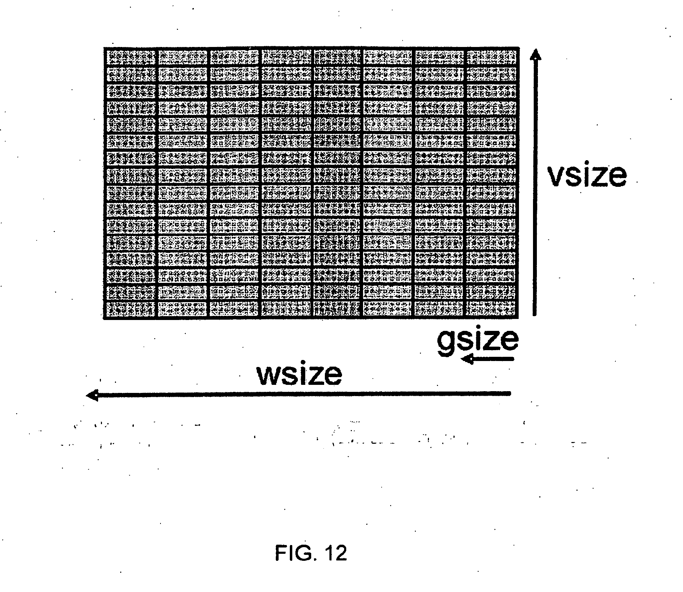

An exemplary embodiment of the Wide Translate instruction is shown in Figure 12 and Annexes 5-7. In an exemplary embodiment, the Wide Translate instructions use a wide operand to specify a table of depth up to 256 entries and width of up to 128 bits. The contents of a register is partitioned into operands of one, two, four, or eight bytes, and the partitions are used to select values from the table in parallel. The depth and width of the table can be selected by specifying the size and shape of the wide operand as described above.

In an exemplary embodiment, these instructions take an address from a general register to fetch a large operand from memory, a second operand from a general register, perform a group of operations on partitions of bits in the operands, and catenate the results together, placing the result in a general register. An exemplary embodiment of the format 1310 of the Wide Translate instruction is shown in Annex 5.

An exemplary embodiment of the schematic 1330 of the Wide Translate instruction is shown in Fig. 12 . In an exemplary embodiment, the contents ofregister rc is used as a virtual address, and a value of specified size is loaded from memory. A second value is the contents of register rb. The values are partitioned into groups of operands of a size specified. The low-order bytes of the second group of values are used as addresses to choose entries from one or more tables constructed from the first value, producing a group of values. The group of results is catenated and placed in register rd.

In an exemplary embodiment, by default, the total width of tables is 128 bits, and a total table width of 128, 64, 32, 16 or 8 bits, but not less than the group size may be specified by adding the desired total table width in bytes to the specified address: 16, 8, 4, 2, or 1. When fewer than 128 bits are specified, the tables repeat to fill the 128 bit width.

In an exemplary embodiment, the default depth of each table is 256 entries, or in bytes is 32 times the group size in bits. An operation may specify 4, 8, 16, 32, 64, 128 or 256 entry tables, by adding one-half of the memory operand size to the address. Table index values are masked to ensure that only the specified portion of the table is used. Tables with just 2 entries cannot be specified; if 2-entry tables are desired, it is recommended to load the entries into registers and use G.MUX to select the table entries.

In an exemplary embodiment, failing to initialize the entire table is a potential security hole, as an instruction in with a small-depth table could access table entries previously initialized by an instruction with a large-depth table. This security hole may be closed either by initializing the entire table, even if extra cycles are required, or by masking the index bits so that only the initialized portion of the table is used. An exemplary embodiment may initialize the entire table with no penalty in cycles by writing to as many as 128 table entries at once. Initializing the entire table with writes to only one entry at a time requires writing 256 cycles, even when the table is smaller. Masking the index bits is the preferred solution.

In an exemplary embodiment, masking the index bits suggests that this instruction, for tables larger than 256 entries, may be extended to a general-purpose memory translate function where the processor performs enough independent load operations to fill the 128 bits. Thus, the 16, 32, and 64 bit versions of this function perform equivalent of 8, 4, 2 withdraw, 8, 4, or 2 load-indexed and 7, 3, or 1 group-extract instructions. In other words, this instruction can be as powerful as 23, 11, or 5 previously existing instructions. The 8-bit version is a single-cycle operation replacing 47 existing instructions, so these extensions are not as powerful, but nonetheless, this is at least a 50% improvement on a 2-issue processor, even with one-cycle-per load timing. To make this possible, the default table size would become 65536, 2^32 and 2^64 for 16, 32 and 64-bit versions of the instruction.

In an exemplary embodiment, for the big-endian version of this instruction, in the definition below, the contents of register rb is complemented. This reflects a desire to organize the table so that the lowest addressed table entries are selected when the index is zero. In the logical implementation, complementing the index can be avoided by loading the table memory differently for big-endian and little-endian versions; specifically by loading-the table into memory so that the highest addressed table entries are selected when the index is zero for a big-endian version of the instruction. In an exemplary embodiment of the logical implementation, complementing the index can be avoided by loading the table memory differently for big-endian and little-endian versions. In order to avoid complementing the index, the table memory is loaded differently for big-endian versions of the instruction by complementing the addresses at which table entries are written into the table for a big-endian version of the instruction.

In an exemplary embodiment, the virtual address must either be aligned to 4096 bytes, or must be the sum of an aligned address and one-half of the size of the memory operand in bytes and/or the desired total table width in bytes. An aligned address must be an exact multiple of the size expressed in bytes. The size of the memory operand must be a power of two from 4 to 4096 bytes, but must be at least 4 times the group size and 4 times the total table width. If the address is not valid an "access disallowed by virtual address" exception occurs.

In an exemplary embodiment, a wide-translate (W.TRANSLATE.8.L or W.TRANSLATE.8.B) instruction specifies a translation table of 16 entries (vsize=16) in depth, a group size of 1 byte (gsize=8 bits), and a width of 8 bytes (wsize=64 bits). The address specifies a total table size (msize=1024 bits=vsize*wsize) and a table width (wsize=64 bits) by adding one-half of the size in bytes of the table (64) and adding the size in bytes of the table width (8) to the table address in the address specification. The instruction will create duplicates of this table in the upper and lower 64 bits of the data path, so that 128 bits of operand are processed at once, yielding a 128 bit result.

An exemplary embodiment of the pseudocode 1350 of the Wide Translate instruction is shown in Annex 6. An exemplary embodiment of the exceptions 1380 of the Wide Translate instruction is shown in Annex 7.

### Wide Multiply Matrix

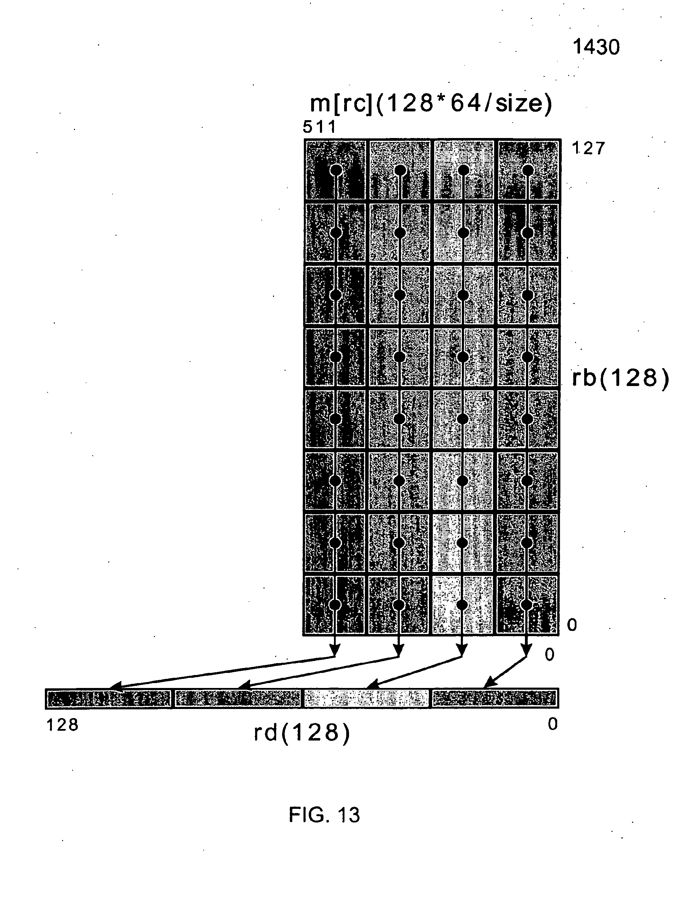

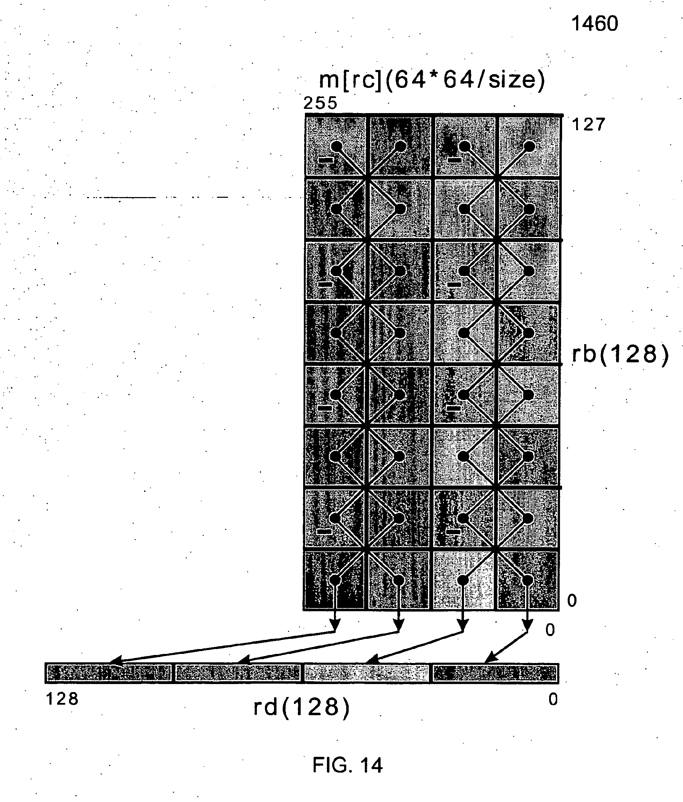

An exemplary embodiment of the Wide Multiply Matrix instruction is shown in Figures 13 and 14 and Annexes 8-10. In an exemplary embodiment, the Wide Multiply Matrix instructions use a wide operand to specify a matrix of values of width up to 64 bits (one half of register file and data path width) and depth of up to 128 bits/symbol size. The contents of a general register (128 bits) is used as a source operand, partitioned into a vector of symbols, and multiplied with the matrix, producing a vector of width up to 128 bits of symbols of twice the size of the source operand symbols. The width and depth of the matrix can be selected by specifying the size and shape of the wide operand as described above. Controls within the instruction allow specification of signed, mixed-signed, unsigned, complex, or polynomial operands.

In an exemplary embodiment, these instructions take an address from a general register to fetch a large operand from memory, a second operand from a general register, perform a group of operations on partitions of bits in the operands, and catenate the results together, placing the result in a general register. An exemplary embodiment of the format 1410 of the Wide Multiply Matrix instruction is shown in Annex 8.

An exemplary embodiment of the schematics 1430 and 1460 of the Wide Multiply Matrix instruction is shown in Figs. 13 and 14 . In an exemplary embodiment, the contents of register rc is used as a virtual address, and a value of specified size is loaded from memory. A second value is the contents of register rb. The values are partitioned into groups of operands of the size specified. The second values are multiplied with the first values, then summed, producing a group of result values. The group of result values is catenated and placed in register rd.

In an exemplary embodiment, the memory-multiply instructions (W.MUL.MAT, W.MUL.MAT.C, W.MUL.MAT.M, W.MUL.MAT.P, W.MUL.MAT.U) perform a partitioned array multiply of up to 8192 bits, that is 64x128 bits. The width of the array can be limited to 64, 32, or 16 bits, but not smaller than twice the group size, by adding one-half the desired size in bytes to the virtual address operand: 4, 2, or 1. The array can be limited vertically to 128, 64, 32, or 16 bits, but not smaller than twice the group size, by adding one-half the desired memory operand size in bytes to the virtual address operand.

In an exemplary embodiment, the virtual address must either be aligned to 1024/gsize bytes (or 512/gsize for W.MUL.MAT.C) (with gsize measured in bits), or must be the sum of an aligned address and one-half of the size of the memory operand in bytes and/or one-quarter of the size of the result in bytes. An aligned address must be an exact multiple of the size expressed in bytes. If the address is not valid an "access disallowed by virtual address" exception occurs.

In an exemplary embodiment, a wide-multiply-octlets instruction (W.MUL.MAT.type.64, type=NONE M U P) is not implemented and causes a reserved instruction exception, as an ensemble-multiply-sum-octlets instruction (E.MUL.SUM.type.64) performs the same operation except that the multiplier is sourced from a 128-bit register rather than memory. Similarly, instead of wide-multiply-complex-quadlets instruction (W.MUL.MAT.C.32), one should use an ensemble-multiply-complex-quadlets instruction (E.MUL.SUM.C.32).

As shown in Fig. 13; , an exemplary embodiment of a wide-multiply-doublets instruction (W.MUL.MAT, W.MUL.MAT.M, W.MUL.MAT.P, W.MUL.MAT.U) multiplies memory [m31 m30 ... m1 m0] with vector [hgfedcba], yielding products [hm31+gm27+...±bm7+am3 ... hm28+gm24+...+bm4+am0].

As shown in Fig.; 14, an exemplary embodiment of a wide-multiply-rmatrix-complex-doublets instruction (W.MUL.MAT.C) multiplies memory [m15 m14 ... m1 m0] with vector [h g f e d c b a], yielding products [hm14+gm15+...+bm2+am3 ... hm12+gm13+...+bm0+am1 -hm13+gm12+...-bm1+am0].

An exemplary embodiment of the pseudocode 1480 of the Wide Multiply Matrix instruction is shown in Annex 9. An exemplary embodiment of the exceptions 1490 of the Wide Multiply Matrix instruction is shown in Annex 10.

### Wide Multiply Matrix Extract .

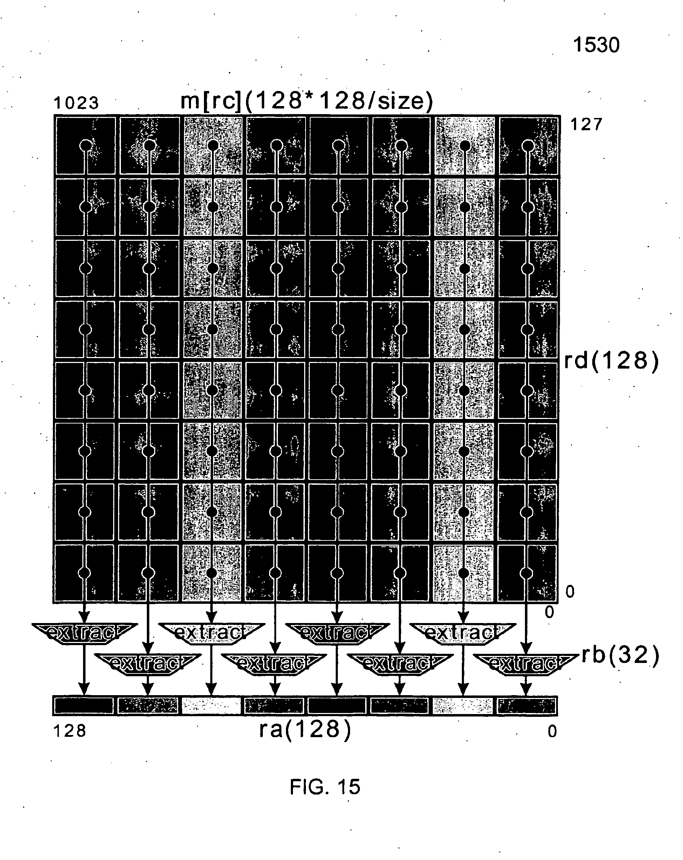

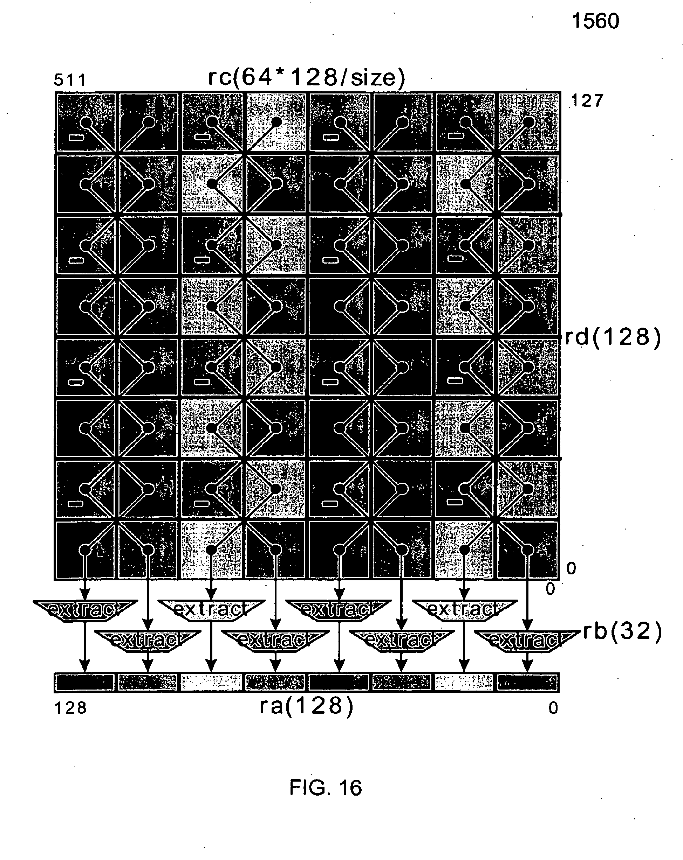

An exemplary embodiment of the Wide Multiply Matrix Extract instruction is shown in Figures 15 and 16 and Annexes 11-14. In an exemplary embodiment, the Wide Multiply Matrix Extract instructions use a wide operand to specify a matrix of value of width up to 128 bits (full width of register file and data path) and depth of up to 128 bits/symbol size. The contents of a general register (128 bits) is used as a source operand, partitioned into a vector of symbols, and multiplied with the matrix, producing a vector of width up to 256 bits of symbols of twice the size of the source operand symbols plus additional bits to represent the sums of products without overflow. The results are then extracted in a manner described below (Enhanced Multiply Bandwidth by Result Extraction), as controlled by the contents of a general register specified by the instruction. The general register also specifies the format of the operands: signed, mixed-signed, unsigned, and complex as well as the size of the operands, byte (8 bit), doublet (16 bit), quadlet (32 bit), or hexlet (64 bit).

In an exemplary embodiment, these instructions take an address from a general register to fetch a large operand from memory, a second operand from a general register, perform a group of operations on partitions of bits in the operands, and catenate the results together, placing the result in a general register. An exemplary embodiment of the format 1510 of the Wide Multiply Matrix Extract instruction is shown in Annex 11

An exemplary embodiment of the schematics 1530 and 1560 of the Wide Multiply Matrix Extract instruction is shown in Fig. 15 and Annex 9. In an exemplary embodiment, the contents of register re is used as a virtual address, and a value of specified size is loaded from memory. A second value is the contents of register rd. The group size and other parameters are specified from the contents of register rb. The values are partitioned into groups of operands of the size specified and are multiplied and summed, producing a group of values. The group of values is rounded, and limited as specified, yielding a group of results which is the size specified. The group of results is catenated and placed in register ra.

In an exemplary embodiment, the size of this operation is determined from the contents of register rb The multiplier usage is constant, but the memory operand size is inversely related to the group size. Presumably this can be checked for cache validity.

In an exemplary embodiment, low order bits of rc are used to designate a size, which must be consistent with the group size. Because the memory operand is cached, the size can also be cached, thus eliminating the time required to decode the size, whether from rb or from rc.

In an exemplary embodiment, the wide-multiply-matrix-extract instructions (W.MUL.MAT.X.B, W.MUL.MAT.X.L) perform a partitioned array multiply of up to 16384 bits, that is 128x128 bits. The width of the array can be limited to 128, 64, 32, or 16 bits, but not smaller than twice the group size, by adding one-half the desired size in bytes to the virtual address operand: 8, 4, 2, or 1. The array can be limited vertically to 128, 64, 32, or 16 bits, but not smaller than twice the group size, by adding one-half the desired memory operand size in bytes to the virtual address operand.

As shown in Annex 12, in an exemplary embodiment, bits 31..0 of the contents of register rb specifies several parameters which control the manner in which data is extracted. The position and default values of the control fields allow for the source position to be added to a fixed control value for dynamic computation, and allow for the lower 16 bits of the control field to be set for some of the simpler extract cases by a single GCOPYI instruction.

In an exemplary embodiment, the table below describes the meaning of each label:

| **label** | **bits** | **meaning** |
|---|---|---|
| fsize | 8 | field size |
| dpos | 8 | destination position |
| x | 1 | reserved |
| s | 1 | signed vs. unsigned |
| n | 1 | complex vs. real multiplication |
| m | 1 | mixed-sign vs. same-sign multiplication |
| l | 1 | saturation vs. truncation |
| rnd | 2 | rounding |
| gssp | 9 | group size and source position |

In an exemplary embodiment, the 9-bit **gssp** field encodes both the group size, **gsize**, and source position, **spos,** according to the formula **gssp** = 512-4***gsize**+**spos**. The group size, **gsize**, is a power of two in the range 1..128. The source position, **spos**, is in the range 0..(2***gsize**)-1.

In an exemplary embodiment, the values in the **s, n, m, t,** and **rnd** fields have the following meaning:

| **values** | **s** | **n** | **m** | **l** | **rnd** |
|---|---|---|---|---|---|
| 0 | unsigned | real | same-sign | truncate | F |
| 1 | signed | complex | mixed-sign | saturate | Z |
| 2 | | | | | N |
| 3 | | | | | C |

In an exemplary embodiment, the virtual address must be aligned, that is, it must be an exact multiple of the operand size expressed in bytes. If the address is not aligned an "access disallowed by virtual address" exception occurs.

In an exemplary embodiment, Z (zero) rounding is not defined for unsigned extract operations, and a ReservedInstruction exception is raised if attempted. F (floor) rounding will properly round unsigned results downward.

As shown in Fig. 15, an exemplary embodiment of a wide-multiply-matrix-extract-doublets instruction (W.MUL.MAT.X.B or W.MUL.MAT.X.L) multiplies memory [m63 m62 m61 ... m2 m1 m0] with vector [h g f e d c b a], yielding the products [am7+bmls+cm23+dm31+em39+fm47+gm55+hm63 ... am2+bm10+cm18+dm26+em34+fm42+gm50+hm58 am1+bm9+cm17+dm25+em33+fm41+gm49+hm57 am0+bm8+cm16+dm24+em32+fm40+gm48+hm56], rounded and limited as specified.

As shown in Fig. 16, an exemplary embodiment of a wide-multiply-matrix-extract-complex-doublets instruction (W.MUL.MAT.X with n set in rb) multiplies memory [m31 m30 m29 ... m2 m1 m0] with vector [h g f e d c b a], yielding the.products [am7+bm6+cm15+dm14+em23+fm22+gm31+hm30 ... am2-bm3+cm10-dm11+em18-fm19+gm26-hm27 am1+bm0+cm9+dm8+em17+fm16+gm25+hm24 am0-bm1+cm8-dm9+em16-f17+gm24-hm25], rounded and limited as specified.

An exemplary embodiment of the pseudocode 1580 of the Wide Multiply Matrix Extract instruction is shown in Annex 13.An exemplary embodiment of the exceptions 1590 of the Wide Multiply Matrix Extract instruction is shown in Annex 14.

### Wide Multiply Matrix Extract Immediate

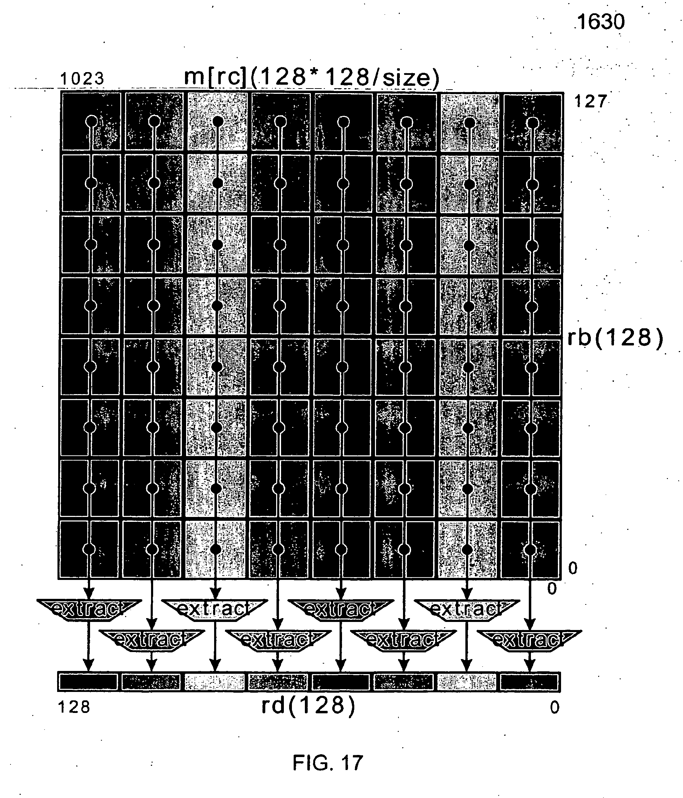

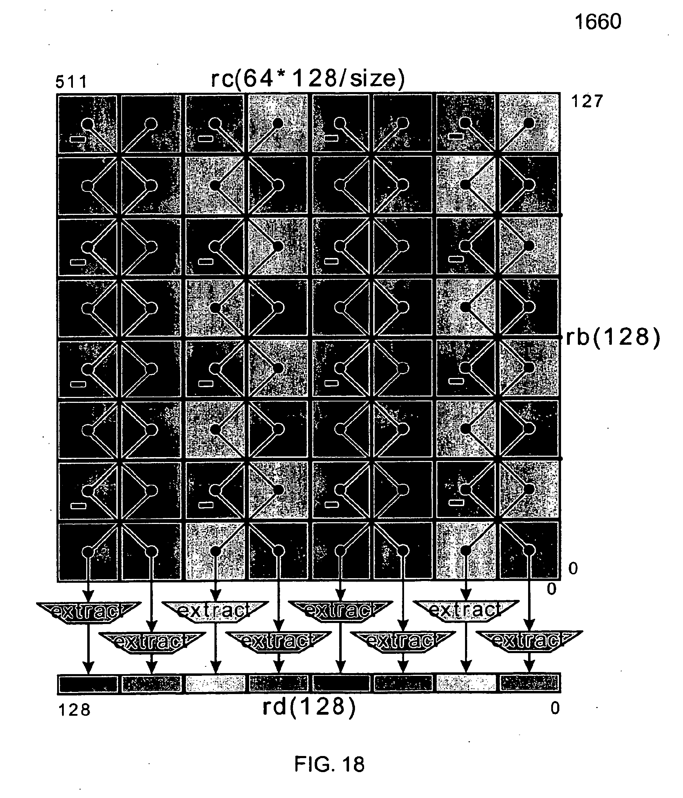

An exemplary embodiment of the Wide Multiply Matrix Extract Immediate instruction is shown in Figures 17 and 18 and Annexes 15-17. In an exemplary embodiment, the Wide Multiply Matrix Extract Immediate instructions perform the same function as above, except that the extraction, operand format and size is controlled by fields in the instruction. This form encodes common forms of the above instruction without the need to initialize a register with the required control information. Controls within the instruction allow specification of signed, mixed-signed, unsigned, and complex operands.

In an exemplary embodiment, these instructions take an address from a general register to fetch a large operand from memory, a second operand from a general register, perform a group of operations on partitions of bits in the operands, and catenate the results together, placing the result in a general register. An exemplary embodiment of the format 1610 of the Wide Multiply Matrix Extract Immediate instruction is shown in Annex 15.

An exemplary embodiment of the schematics 1630 and 1660 of the Wide Multiply Matrix Extract Immediate instruction is shown in Figs. 17 and 18 In an exemplary embodiment, the contents of register re is used as a virtual address, and a value of specified size is loaded from memory. A second value is the contents of register rb. The values are partitioned into groups of operands of the size specified and are multiplied and summed in columns, producing a group of sums. The group of sums is rounded, limited, and extracted as specified, yielding a group of results, each of which is the size specified. The group of results is catenated and placed in register rd. All results are signed, N (nearest) rounding is used, and all results are limited to maximum representable signed values.

In an exemplary embodiment, the wide-multiply-extract-immediate-matrix instructions (W.MUL.MAT.X.I, W.MUL.MAT.X.I.C) perform a partitioned array multiply of up to 16384 bits, that is 128x128 bits. The width of the array can be limited to 128, 64, 32, or 16 bits, but not smaller than twice the group size, by adding one-half the desired size in bytes to the virtual address operand: 8, 4, 2, or 1. The array can be limited vertically to 128, 64, 32, or 16 bits, but not smaller than twice the group size, by adding one-half the desired memory operand size in bytes to the virtual address operand.

In an exemplary embodiment, the virtual address must either be aligned to 2048/gsize bytes (or 1024/gsize for W.MUL.MAT.X.LC), or must be the sum of an aligned address and one-half of the size of the memory operand in bytes and/or one-half of the size of the result in bytes. An aligned address must be an exact multiple of the size expressed in bytes. If the address is not valid an "access disallowed by virtual address" exception occurs.

As shown in Fig. 17, an exemplary embodiment of a wide-multiply-extract-immediate-matrix-doublets instruction (W.MUL.MAT.X.I.16) multiplies memory [m63 m62 m61 ... m2 m1 m0] with vector [h g f e d c b a], yielding the products [am7+bm15+cm23+dm31+em39+fm47+gm55+hm63 ... am2+bm10+cm18+dm26+em34+fm42+gm50+hm58 am1+bm9+cm17+dm25+em33+fm41+gm49+hm57 am0+bm8+cm16+dm24+em32+fm40+gm48+hm56], rounded and limited as specified.

As shown in Fig. 18 an exemplary embodiment of a wide-muhiply-matrix-extract-immediate-complex-doublets instruction (W.MUL.MAT.X.I.C.16) multiplies memory [m31 m30 m29 ... m2 m1 m0] with vector [h g f e d c b a], yielding the products [am7+bm6+cm15+dm14+em23+fm22+gm31+hm30 ... am2-bm3+cm10-dm11+em18-fm19+gm26-hm27 am1+bm0+cm9+dm8+em17+fm16+gm25+hm24 am0-bm1+cm8-dm9+em16-f17+gm24-hm25], rounded and limited as specified.

An exemplary embodiment of the pseudocode 1680 of the Wide Multiply Matrix. Extract Immediate instruction is shown in Annex 16. An exemplary embodiment of the exceptions 1590 of the Wide Multiply Matrix Extract Immediate instruction is shown in Annex 17.

### Wide Multiply Matrix Floating-point

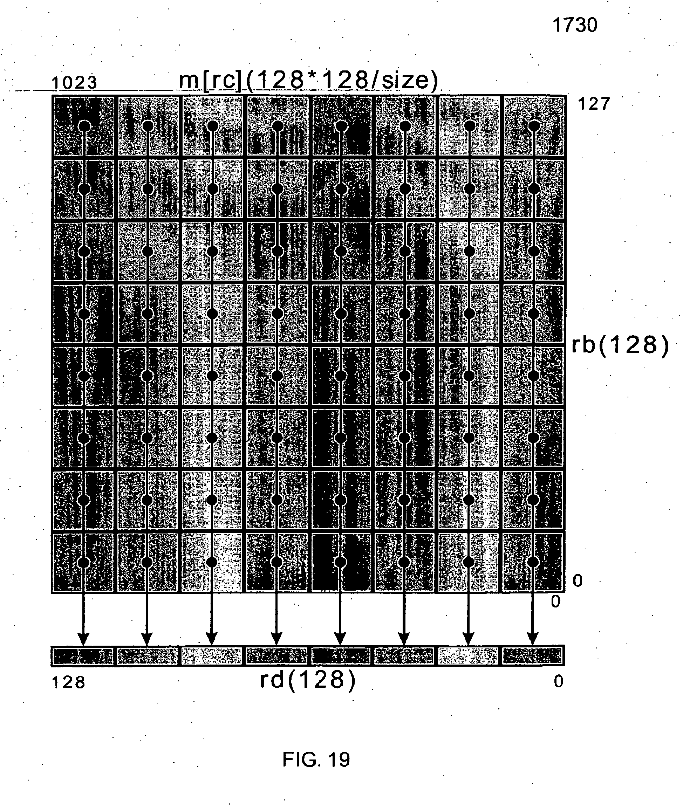

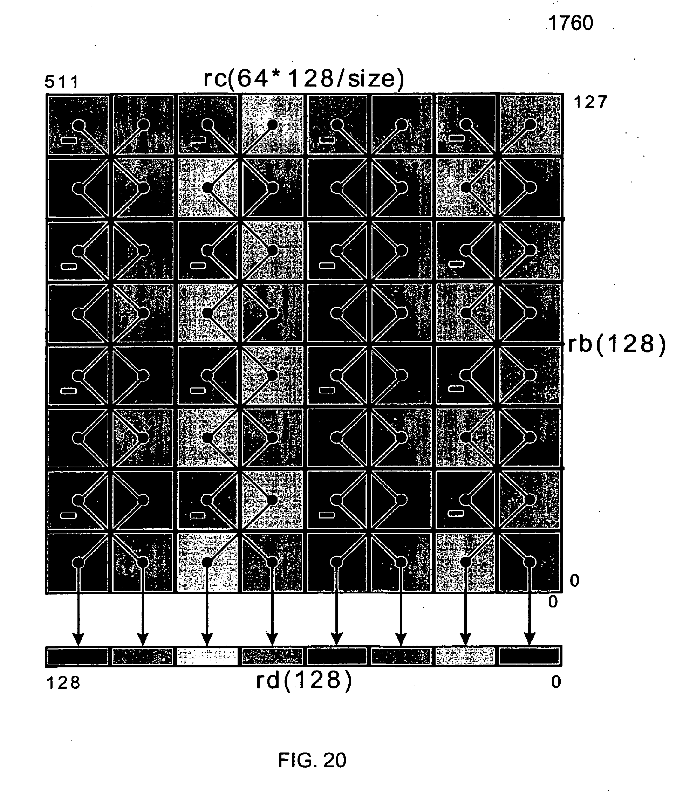

An exemplary embodiment of the Wide Multiply Matrix Floating-point instruction is shown in Figures 19 and 20 and Annexes 18-20. In an exemplary embodiment, the Wide Multiply Matrix Floating-point instructions perform a matrix multiply in the same form as above, except that the multiplies and additions are performed in floating-point arithmetic. Sizes of half (16-bit), single (32-bit), double (64-bit), and complex sizes of half, single and double can be specified within the instruction.

In an exemplary embodiment, these instructions take an address from a general register to fetch a large operand from memory, a second operand from a general register, perform a group of operations on partitions of bits in the operands, and catenate the results together, placing the result in a general register. An exemplary embodiment of the format 1710 of the Wide Multiply Matrix Floating-point instruction is shown in Annex 18.

An exemplary embodiment of the schematics 1730 and 1760 of the Wide Multiply Matrix Floating-point instruction is shown in Figs. 19 and 20 . In an exemplary embodiment, the contents of register rc is used as a virtual address, and a value of specified size is loaded from memory. A second value is the contents of register rb. The values are partitioned into groups of operands of the size specified. The second values are multiplied with the first values, then gummed, producing a goup of result values. The group of result values is catenated and placed in register rd.

In an exemplary embodiment, the wide-multiply-matrix-floating-point instructions (W.MUL.MAT.F, W.MUL.MAT.C.F) perform a partitioned array multiply of up to 16384 bits, that is 128x128 bits. The width of the array can be limited to 128, 64, 32 bits, but not smaller than twice the group size, by adding one-half the desired size in bytes to the virtual address operand: 8, 4, or 2. The array can be limited vertically to 128, 64, 32, or 16 bits, but not smaller than twice the group size, by adding one-half the desired memory operand size in bytes to the virtual address operand.

In an exemplary embodiment, the virtual address must either be aligned to 2048/gsize bytes (or 1024/gsize for W.MUL.MAT.C.F), or must be the sum of an aligned address and one-half of the size of the memory operand in bytes and/or one-half of the size of the result in bytes. An aligned address must be an exact multiple of the size expressed in bytes. If the address is not valid an "access disallowed by virtual address" exception occurs.

As shown in Fig. 19 , an exemplary embodiment of a wide-multiply-matrix-floating-point-half instruction (W.MUL.MAT.F) multiplies memory [m31 m30 ... m1 m0] with vector [h g f e d c b a], yielding products [hm31+gm27+...+bm7+am3 ... hm28+gm24+...+bm4+am0].

As shown in Fig 20 , an exemplary embodiment of a wide-multiply-matrix-complex-floating-point-half instruction (W.MUL.MAT.F) multiplies memory [m15 m14 ... m1 m0] with vector [h g f e d c b a], yielding products [hm14+gm15+...+bm2+am3 ... hm12+gm13+...+bm0+am1-hm13+gm12+...-bm1+am0].

An exemplary embodiment of the pseudocode 1780 of the Wide Multiply Matrix Floating-point instruction is shown in Annex 19. additional pseudocode functions used by this and other floating-point instructions is shown in Figure FLOAT-1. An exemplary embodiment of the exceptions 1790 of the Wide Multiply Matrix Floating-point instruction is shown in Annex 20.

### Wide Multiply Matrix Galois

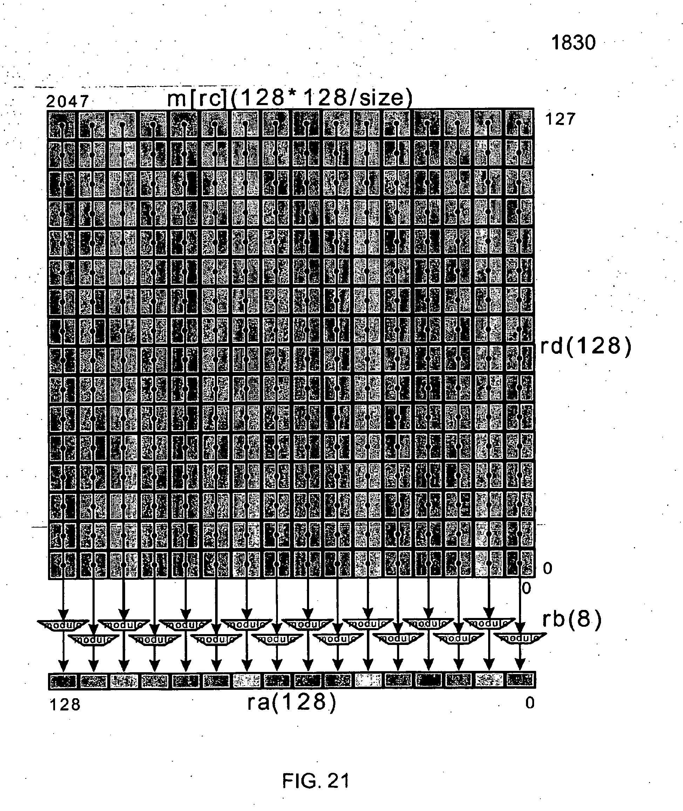

An exemplary embodiment of the Wide Multiply Matrix Galois instruction is shown in Figure 21 and Annexes 21-23. In an exemplary embodiment, the Wide Multiply Matrix Galois instructions perform a matrix multiply in the same form as above, except that the multiples and additions are performed in Galois field arithmetic. A size of 8 bits can be specified within the instruction. The contents of a general register specify the polynomial with which to perform the Galois field remainder operation. The nature of the matrix multiplication is novel and described in detail below.

In an exemplary embodiment, these instructions take an address from a general register to fetch a large operand from memory, second and third operands from general registers, perform a group of operations on partitions of bits in the operands, and catenate the results together, placing the result in a general register. An exemplary embodiment of the format 1810 of the Wide Multiply Matrix Galois instruction is shown in Annex 21.

An exemplary embodiment of the schematic 1830 of the Wide Multiply Matrix Galois instruction is shown in Fig. 21. In an exemplary embodiment, the contents of register rc is used as a virtual address, and a value of specified size is loaded from memory. Second and third values are the contents of registers rd and rb. The values are partitioned into groups of operands of the size specified. The second values are multiplied as polynomials with the first value, producing a result which is reduced to the Galois field specified by the third value, producing a group of result values. The group of result values is catenated and placed in register ra.

In an exemplary embodiment, the wide-multiply-matrix-Galois-bytes instruction (W.MUL.MAT.G.8) performs a partitioned array multiply of up to 16384 bits, that is 128x128 bits. The width of the array can be limited to 128, 64, 32, or 16 bits, but not smaller than twice the group size of 8 bits, by adding one-half the desired size in bytes to the virtual address operand: 8, 4, 2, or 1. The array can be limited vertically to 128, 64, 32, or 16 bits, but not smaller than twice the group size of 8 bits, by adding one-half the desired memory operand size in bytes to the virtual address operand.

In an exemplary embodiment, the virtual address must either be aligned to 256 bytes, or must be the sum of an aligned address and one-half of the size of the memory operand in bytes and/or one-half of the size of the result in bytes. An aligned address must be an exact multiple of the size expressed in bytes. If the address is not valid an "access disallowed by virtual address" exception occurs.

As shown in Fig. 21, an exemplary embodiment of a wide-multiply-matrix-Galois-byte instruction (W.MUL.MAT.G.8) multiplies memory [m255 m254 ... m1 m0] with vector [ponrnlkjihgfedcba], reducing the result modulo polynomial [q], yielding products [(pm255+om247+...+bm31+an15 mod q) (pm254+om246+...+bm30+am14 mod q) ... (pm248+om240+...+bm16+am0 mod q)].

An exemplary embodiment of the pseudocode 1860 of the Wide Multiply Matrix Galois instruction is shown in Annex 22. An exemplary embodiment of the exceptions 1890 of the Wide Multiply Matrix Galois instruction is shown in Annex 23.

### Memory Operands of Either Little-Endian or Big-Endian Conventional Byte Ordering

In another aspect of the invention, memory operands of either little-endian or big-endian conventional byte ordering are facilitated. Consequently, all Wide operand instructions are specified in two forms, one for little-endian byte ordering and one for big-endian byte ordering, as specified by a portion of the instruction. The byte order specifies to the memory system the order in which to deliver the bytes within units of the data path width (128 bits), as well as the order to place multiple memory words (128 bits) within a larger Wide operand.

### Extraction of a High Order Portion of a Multiplier Product or Sum of Products

Another aspect of the present invention addresses extraction of a high order portion of a multiplier product or sum of products, as a way of efficiently utilizing large multiplier array. Related U.S. Patent 5,742,840 and U.S. Patent 5,953,241 describe a system and method for enhancing the utilization of a multiplier array by adding specific classes of instructions to a general-purpose processor. This addresses the problem of making the most use of a large multiplier array that is fully used for high-precision arithmetic - for example a 64x64 bit multiplier is fully used by a 64-bit by 64-bit multiply, but only one quarter used for a 32-bit by 32-bit multiply) for (relative to the multiplier data width and registers) low-precision arithmetic operations. In particular, operations that perform a great many low-precision multiplies which are combined (added) together in various ways are specified. One of the overriding considerations in selecting the set of operations is a limitation on the size of the result operand. In an exemplary embodiment, for example, this size might be limited to on the order of 128 bits, or a single register, although no specific size limitation need exist.

The size of a multiply result, a product, is generally the sum of the sizes of the operands, multiplicands and multiplier. Consequently, multiply instructions specify operations in which the size of the result is twice the size of identically-sized input operands, For our prior art design, for example, a multiply instruction accepted two 64-bit register sources and produces a single 128-bit register-pair result, using an entire 64x64 multiplier array for 64-bit symbols, or half the multiplier array for pairs of 32-bit symbols, or one-quarter the multiplier array for quads of 16-bit symbols. For all of these cases, note that two register sources of 64 bits are combined, yielding a 128-bit result.

In several of the operations, including complex multiplies, convolve, and matrix multiplication, low-precision multiplier products are added together. The additions further increase the required precision. The sum of two products requires one additional bit of precision; adding four products requires two, adding eight products requires three, adding sixteen products requires four. In some prior designs, some of this precision is lost, requiring scaling of the multiplier operands to avoid overflow, further reducing accuracy of the result.

The use of register pairs creates an undesirable complexity, in that both the register pair and individual register values must be bypassed to subsequent instructions. As a result, with prior art techniques only half of the source operand 128-bit register values could be employed toward producing a single-register 128-bit result.

In the present invention, a high-order portion of the multiplier product or sum of products is extracted, adjusted by a dynamic shift amount from a general register or an adjustment specified as part of the instruction, and rounded by a control value from a register or instruction portion as round-to-nearest/even, toward zero, floor, or ceiling. Overflows are handled by limiting the result to the largest and smallest values that can be accurately represented in the output result

### Extract Controlled by a Register

In the present invention, when the extract is controlled by a register, the size of the result can be specified, allowing rounding and limiting to a smaller number of bits than can fit in the result. This permits the result to be scaled to be used in subsequent operations without concern of overflow or rounding, enhancing performance.

Also in the present invention, when the extract is controlled by a register, a single register value defines the size of the operands, the shift amount and size of the result, and the rounding control. By placing all this control information in a single register, the size of the instruction is reduced over the number of bits that such a instruction would otherwise require, improving performance and enhancing flexibility of the processor.

The particular instructions included in this aspect of the present invention are Ensemble Convolve Extract, Ensemble Multiply Extract, Ensemble Multiply Add Extract and Ensemble Scale Add Extract.

### Ensemble Extract Inplace

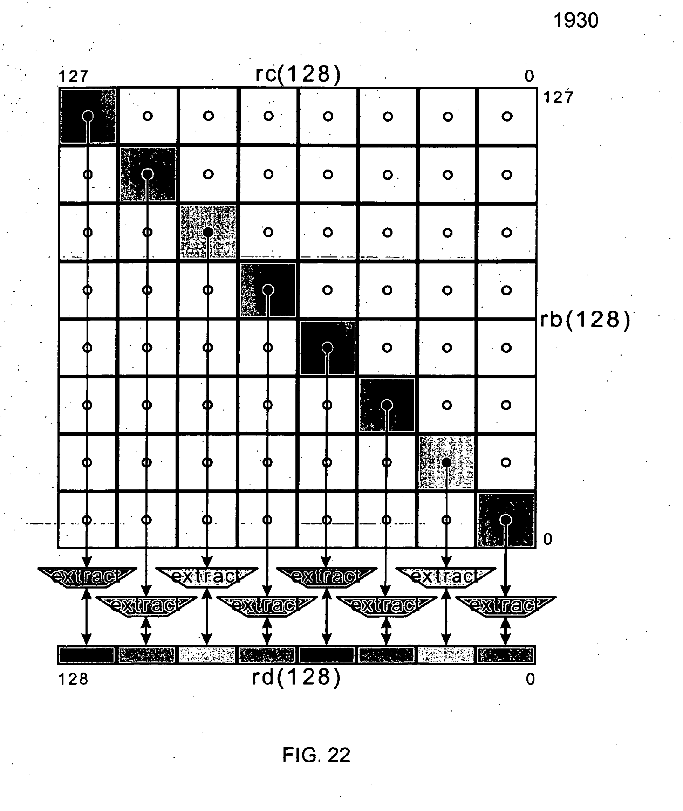

An exemplary embodiment of the Ensemble Extract Inplace instruction is shown i in Figures 22-24 and Annexes 24-28. In an exemplary embodiment, several of these instructions (Ensemble Convolve Extract, Ensemble Multiply Add Extract) are typically available only in forms where the extract is specified as part of the instruction. An alternative embodiment can incorporate forms of the operations in which the size of the operand, the shift amount and the rounding can be controlled by the contents of a general register (as they are in the Ensemble Multiply Extract instruction). The definition of this kind of instruction for Ensemble Convolve Extract, and Ensemble Multiply Add Extract would require four source registers, which increases complexity by requiring additional general-register read ports.

In an exemplary embodiment, these operations take operands from four registers, perform operations on partitions of bits in the operands, and place the concatenated results in a fourth register. An exemplary embodiment of the format and operation codes 1910 of the Ensemble Extract Inplace instruction is shown in Annex 24.

An exemplary embodiment of the schematics 1930,1945,1960, and 1975 of the Ensemble Extract Inplace instruction is shown in Figs. 22-24 and Annex 26. In an exemplary embodiment, the contents of registers rd, rc, rb, and ra are fetched. The specified operation is performed on these operands. The result is placed into register rd.

In an exemplary embodiment, for the E.CON.X instruction, the contents of registers rd and rc are catenated, as c∥d, and used as a first value. A second value is the contents of register rb. The values are partitioned into groups of operands of the size specified and are convolved, producing a group of values. The group of values is rounded, limited and extracted as specified, yielding a group of results that is the size specified. The group of results is catenated and placed in register rd.

In an exemplary embodiment, for the E.MUL.ADD.X instruction, the contents of registers rc and rb are partitioned into groups of operands of the size specified and are multiplied, producing a group of values to which are added the partitioned and extended contents of register rd. The group of values is rounded, limited and extracted as specified, yielding a group of results that is the size specified. The group of results is catenated and placed in register rd.

As shown in Annex 25, in an exemplary embodiment, bits 31..0 of the contents of register ra specifies several parameters that control the manner in which data is extracted, and for certain operations, the manner in which the operation is performed. The position of the control fields allows for the source position to be added to a fixed control value for dynamic computation, and allows for the lower 16 bits of the control field to be set for some of the simpler extract cases by a single GCOPYI.128 instruction. The control fields are further arranged so that if only the low order 8 bits are non-zero, a 128-bit extraction with truncation and no rounding is performed.

In an exemplary embodiment, the table below describes the meaning of each label:

| label | bits | meaning |
|---|---|---|
| fsize | 8 | field size |
| dpos | 8 | destination position |
| x | 1 | extended vs. group size result |
| s | 1 | signed vs. unsigned |
| n | 1 | complex vs. real multiplication |
| m | 1 | mixed-sign vs. same-sign multiplication |
| l | 1 | limit: saturation vs. truncation |
| rnd | 2 | rounding |
| gssp | 9 | group size and source position |

In an exemplary embodiment, the 9-bit **gssp** field encodes both the group size, **gsize**, and source position, spos, according to the formula **gssp** = 512-4***gsize**+**spos**. The group size, **gsize,** is a power of two in the range 1..128. The source position, **spos**, is in the range 0..(2***gsize**)-1 ....

In an exemplary embodiment, the values in the **x, s, n, m, l,** and **rnd** fields have the following meaning:

| values | x | s | n | m | l | rnd |
|---|---|---|---|---|---|---|
| 0 | group | unsigned | real | same-sign | truncate | F |
| 1 | extended | signed | complex | mixed-sign | saturate | Z |
| 2 | | | | | | N |
| 3 | | | | | | C |

### Ensemble Multiply Add Extract

As shown in Fig.22, an exemplary embodiment of an ensemble-multiply-add-extract-doublets instruction (E.MULADDX) multiplies vector rc [h g f e d c b a] with vector rb [p o n m l k j i], and adding vector rd [x w v u t s r q], yielding the result vector rd [hp+x go+w fn+v em+u dl+t ck+s bj+r ai+q], rounded and limited as specified by ra31..0.

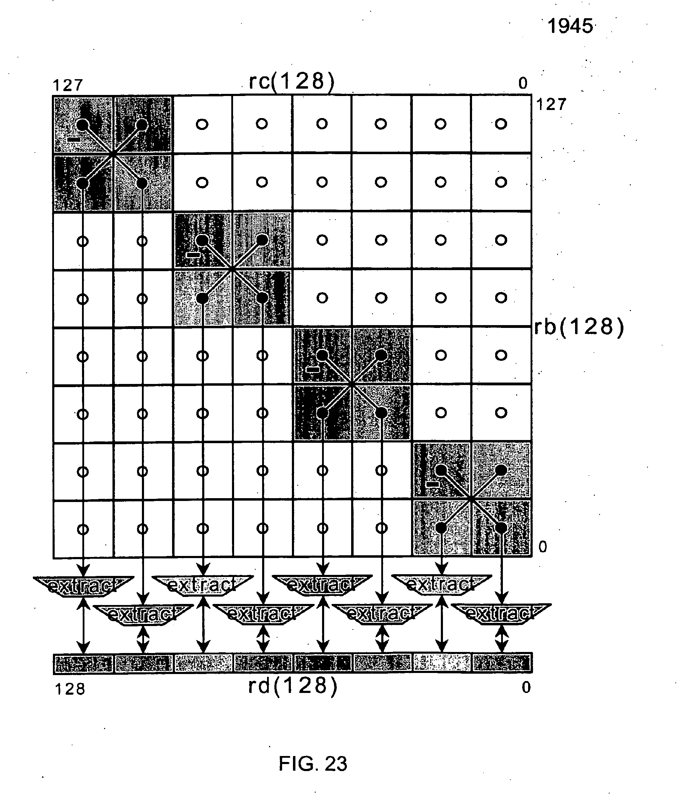

As shown in Fig. 23, an exemplary embodiment of an ensemble-multiply-add-extract-doublets-complex instruction (E.MUL.X with n set) multiplies operand vector rc [h g f e d c b a ] by operand vector rb [p o n m l k j i], yielding the result vector rd [gp+ho go-hp en+fm em-fn cl+dk ck+dl aj+bi ai+bj], rounded and-limited as-specified by ra31..0. Note that this instruction prefers an organization of complex numbers in which the real part is located to the right (lower precision) of the imaginary part.

### Ensemble Convolve Extract

As shown in Annex 26, an exemplary embodiment of an ensemble-convolve-extract doublets instruction (ECON.X with n=0) convolves vector rc∥rd [x w v u t s r q p o n m l k j i] with vector rb [h g f e d c b a], yielding the products vector rd [ax+bw+cv+du+et+fs+gr+hq ... as+br+cq+dp+eo+fn+gm+h1 ar+bq+cp+do+en+fm+gl+hk aq+bp+co+dn+em+fl+gk+hj], rounded and limited as specified by ra_{31..0.}

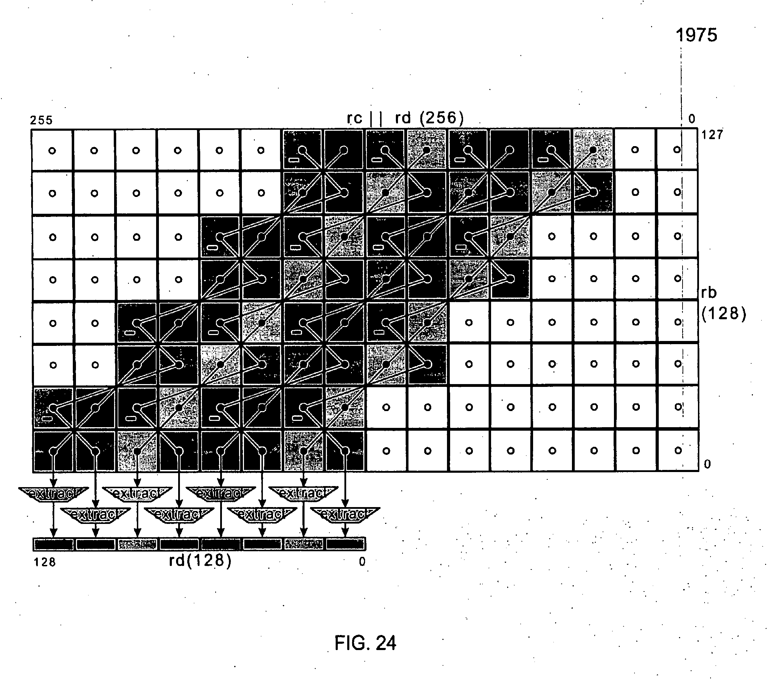

As shown in Fig. 24, an exemplary embodiment of an ensemble-convolve-extract-complex-doublets instruction (ECON.X with n=1) convolves vector rd∥rc [x w v u t s r q p o n m 1 k j i] with vector rb [h g f e d c b a], yielding the products vector rd [ax+bw+cv+du+et+fs+gr+hq ... as-bt+cq-dr+eo-fp+gm-hn ar+bq+cp+do+en+fm+gl+hk aq-br+co-dp+em-fn+gk+hl], rounded and limited as specified by ra31..0.

An exemplary embodiment of the pseudocode 1990 of Ensemble Extract Inplace instruction is shown in Annex 27. In an exemplary embodiment, there are no exceptions for the Ensemble Extract Inplace instruction ,as illustrated in Annex 28.

### Ensemble Extract

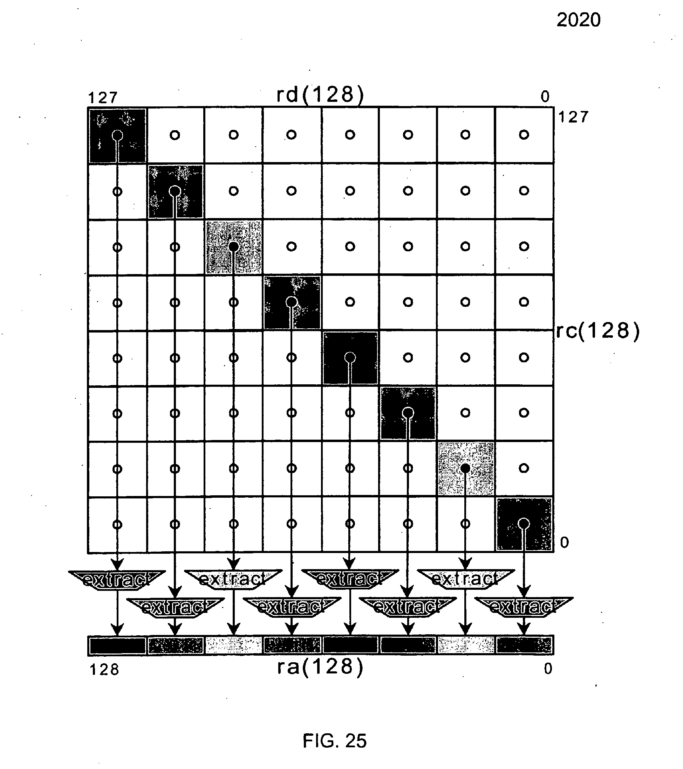

An exemplary embodiment of the Ensemble Extract instruction is shown in Figures 25-31 and Annexes 29-32. In an exemplary embodiment, these operations take operands from three registers, perform operations on partitions of bits in the operands, and place the catenated results in a fourth register. An exemplary embodiment of the format and operation codes 2010 of the Ensemble Extract instruction is shown in Annex 29.

An exemplary embodiment of the schematics 2020, 2030, 2040, 2050, 2060, 2070, and 2080 of the Ensemble Extract Inplace instruction is shown in Figs. 25, 26, 27, 28, 29, 30 and 31. In an exemplary embodiment, the contents of registers rd, rc, and rb are fetched. The specified operation is performed on these operands. The result is placed into register ra.

As shown in Annex 30, in an exemplary embodiment, bits 31..0 of the contents of register rb specifies several parameters that control the manner in which data is extracted, and for certain operations, the manner in which the operation is performed. The position of the control fields allows for the source position to be added to a fixed control value for dynamic computation, and allows for the lower 16 bits of the control field to be set for some of the simpler extract cases by a single GCOPYI.128 instruction. The control fields are further arranged so that if only the low order 8 bits are non-zero, a 128-bit extraction with truncation and no rounding is performed.

In an exemplary embodiment, the table below describes the meaning of each label:

| label | bits | meaning |
|---|---|---|
| fsize | 8 | field size |
| dpos | 8 | destination position |
| x | 1 | extended vs. group size result |
| s | 1 | signed vs. unsigned |
| n | I | complex vs. real multiplication |
| m | 1 | merge vs. extract or mixed-sign vs. same-sign multiplication |
| l | 1 | limit: saturation vs. truncation |
| rnd | 2 | rounding |
| gssp | 9 | group size and source position |

In an exemplary embodiment, the 9-bit gssp field encodes both the group size, **gsize**, and source position, **spos**, according to the formula **gssp** = 512-4***gsize**+**spos**. The group size, **gsize,** is a power of two in the range 1..128. The source position, **spos**, is in the range 0.(2***gsize**)-1.

In an exemplary embodiment, the values in the **x, s, n, m, l,** and **rnd** fields have the following meaning:

| values | x | s | n | m | l | rnd |
|---|---|---|---|---|---|---|
| 0 | group | unsigned | real | extract/same-sign | truncate | F |
| 1 | extended | signed | complex | merge/mixed-sign | saturate | Z |
| 2 | | | | | | N |
| 3 | | | | | | C |

In an exemplary embodiment, for the E.SCAL.ADD.X instruction, bits 127..64 of the contents of register rb specifies the multipliers for the multiplicands in registers rd and rc. Specifically, bits 64+2*gsize-1..64+gsize is the multiplier for the contents of register rd, and bits 64+gsize-1..64 is the multiplier for the contents of register rc.

### Ensemble Multiply Extract

As shown in Fig. 25, an exemplary embodiment of an ensemble-multiply-extract-doublets instruction (E.MULX) multiplies vector rd [h g f e d c b a] with vector rc [p o n m k j i], yielding the result vector ra [hp go fn em dl ck bj ai], rounded and limited as specified by rb_{31..0}.

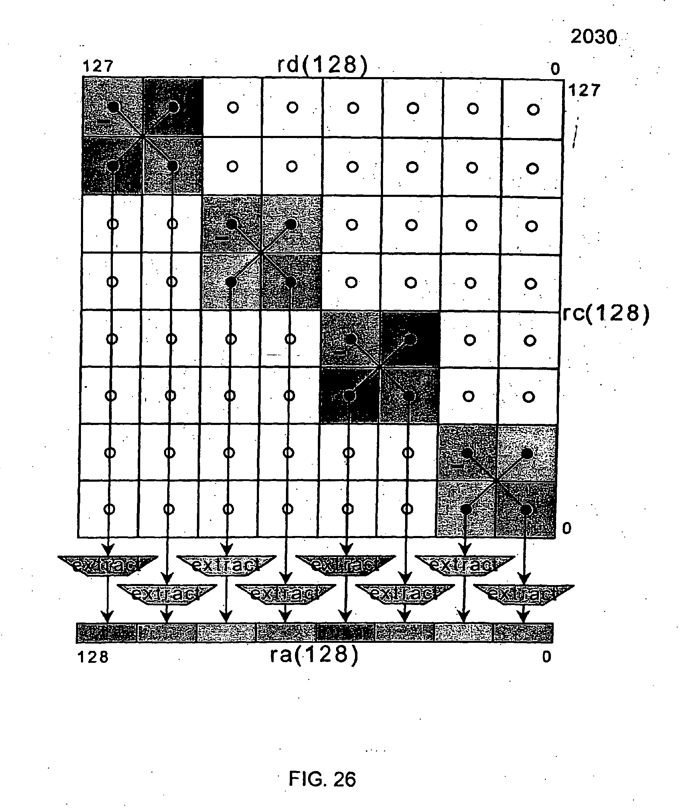

As shown in Fig. 26, an exemplary embodiment of an ensemble-multiply-extract-doublets-complex instruction (E.MUL.X with n set) multiplies vector rd [h g f e d c b a] by vector rc [p o n m l k j i], yielding the result vector ra [gp+ho go-hp en+fm em-fn cl+dk ck-dl aj+bi ai-bj], rounded and limited as specified by rb_{31..0}. Note that this instruction prefers an organization of complex numbers in which the real part is located to the right (lower precision) of the imaginary part.

### Ensemble Scale Add Extract

An aspect of the present invention defines the Ensemble Scale Add Extract instruction, that combines the extract control information in a register along with two values that are used as scalar multipliers to the contents of two vector multiplicands.

This combination reduces the number of registers that would otherwise be required, or the number of bits that the instruction would otherwise require, improving performance. Another advantage of the present invention is that the combined operation may be performed by an exemplary embodiment with sufficient internal precision on the summation node that on intermediate rounding or overflow occurs, improving the accuracy over prior art operation in which more than one instruction is required to perform this computation.

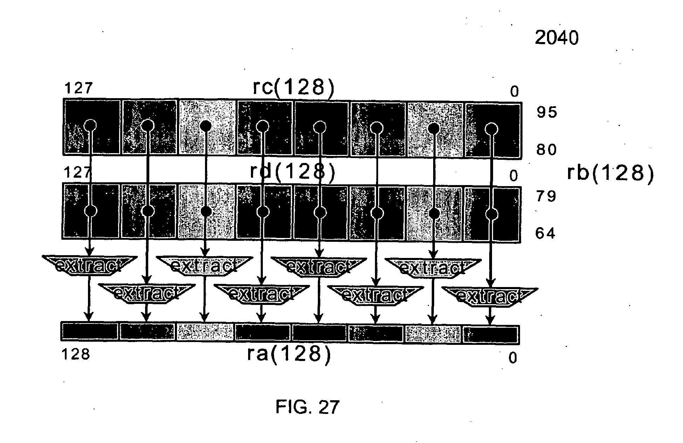

As shown in Fig. 27, an exemplary embodiment of an ensemble-scale-add-extract-doublets instruction (E.SCAL.ADD.X) multiplies vector rd [h g f e d c b a] with rb_{95..80} [r] and adds the product to the product of vector rc [p o n m l k j i] with rb_{79..64} [q], yielding the result [hr+pq gr+oq fr+nq er+mq dr+lq cr+kq br+jq ar+iq], rounded and limited as specified by rb_{31..0.}

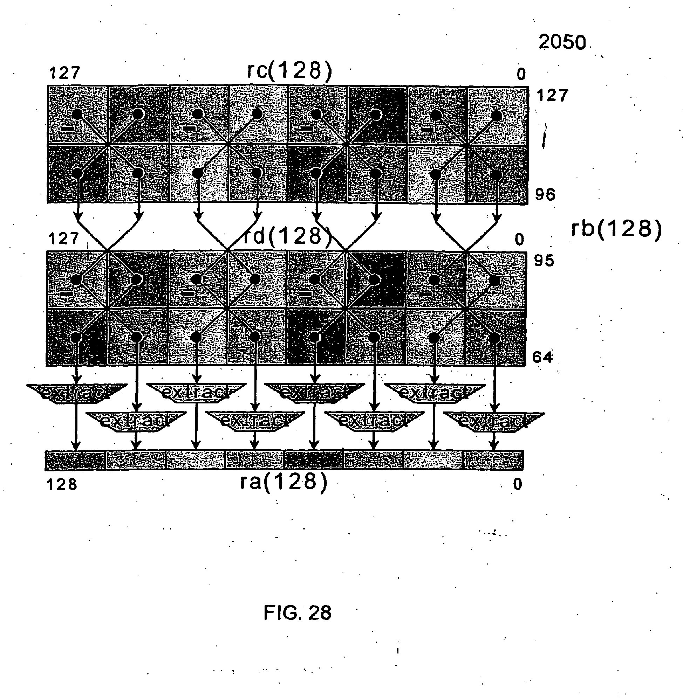

As shown in Fig.28, an exemplary embodiment of an ensemble-scale-add-extract-doublets-complex instruction (E.SCLADD.X with n set) multiplies vector rd [h g f e d c b a] with rb_{127..96} [t s] and adds the product to the product of vector rc [p o n m l k j i] with rb_{95..64} [r q], yielding the result [hs+gt+pq+or gs-ht+oq-pr fs+et+nq+mr es-ft+mq-nr ds+ct+lq+kr cs-dt+kq-Ir bs+at+jq+ir as-bt+iq-jr], rounded and limited as specified by rb_{31..0}.

### Ensemble Extract

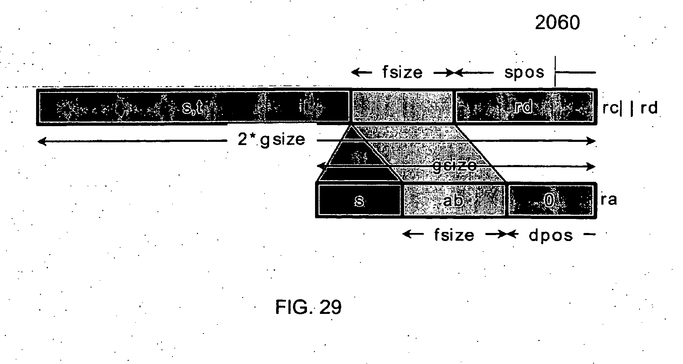

As shown in Fig. 29, in an exemplary embodiment, for the E.EXTRACT instruction, when m=0 and x=0, the parameters specified by the contents of register rb are interpreted to select fields from double-size symbols of the catenated contents of registers rd and rc, extracting values which are catenated and placed in register ra.

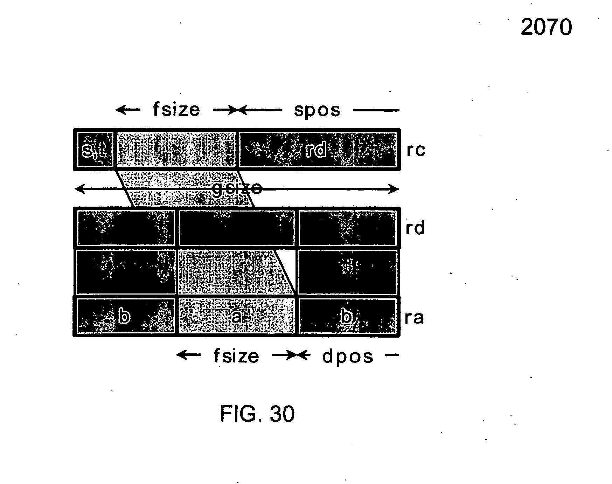

As shown in Fig. 30, in an exemplary embodiment, for an ensemble-merge-extract (E.EXTRACT when m=1), the parameters specified by the contents of register rb are interpreted to merge fields from symbols of the contents of register rd with the contents of register rc. The results are catenated and placed in register ra. The x field has no effect when m=1.

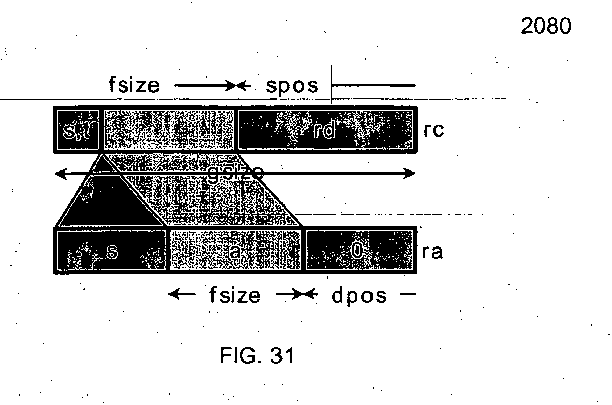

As shown in Fig.31,, in an exemplary embodiment, for an ensemble-expand-extract (E.EXTRACT when m=C and x=1), the parameters specified by the contents of register rb are interpreted to extract fields from symbols of the contents of register rd. The results are catenated and placed in register ra. Note that the value of rc is not fused.

An exemplary embodiment of the pseudocode 2090 of Ensemble Extract instruction is shown in Annex 31. In an exemplary embodiment, there are no exceptions for the Ensemble Extract instruction, as illustrated in Annex 32.

### Reduction of Register Read Ports

Another alternative embodiment can reduce the number of register read ports required for implementation of instructions in which the size, shift and rounding of operands is controlled by a register. The value of the extract control register can be fetched using an additional cycle on an initial execution and retained within or near the functional unit for subsequent executions, thus reducing the amount of hardware required for implementation with a small additional performance penalty. The value retained would be marked invalid, causing a re-fetch of the extract control register, by instructions that modify the register, or alternatively, the retained value can be updated by such an operation. A re-fetch of the extract control register would also be required if a different register number were specified on a subsequent execution. It should be clear that the properties of the above two alternative embodiments can be combined.

### Galois Field Arithmetic

Another aspect of the invention includes Galois field arithmetic, where multiplies are performed by an initial binary polynomial multiplication (unsigned binary multiplication with carries suppressed), followed by a polynomial modulo/remainder operation (unsigned binary division with carries suppressed). The remainder operation is relatively expensive in area and delay. In Galois field arithmetic, additions are performed by binary addition with carries suppressed, or equivalently, a bitwise exclusive-or operation. In this aspect of the present invention, a matrix multiplication is performed using Galois field arithmetic, where the multiplies and additions are Galois field multiples and additions.

Using prior art methods, a 16 byte vector multiplied by a 16x16 byte matrix can be performed as 256 8-bit Galois field multiplies and 16* 15=240 8-bit Galois field additions. Included in the 256 Galois field multiplies are 256 polynomial multiplies and 256 polynomial remainder operations.

By use of the present invention, the total computation is reduced significantly by performing 256 polynomial multiplies, 240 16-bit polynomial additions, and 16 polynomial remainder operations. Note that the cost of the polynomial additions has been doubled compared with the Galois field additions, as these are now 16-bit operations rather than 8-bit operations, but the cost of the polynomial remainder functions has been reduced by a factor of 16. Overall, this is a favorable tradeoff, as the cost of addition is much lower than the cost of remainder.

### Decoupled Access from Execution Pipelines and Simultaneous Multithreading

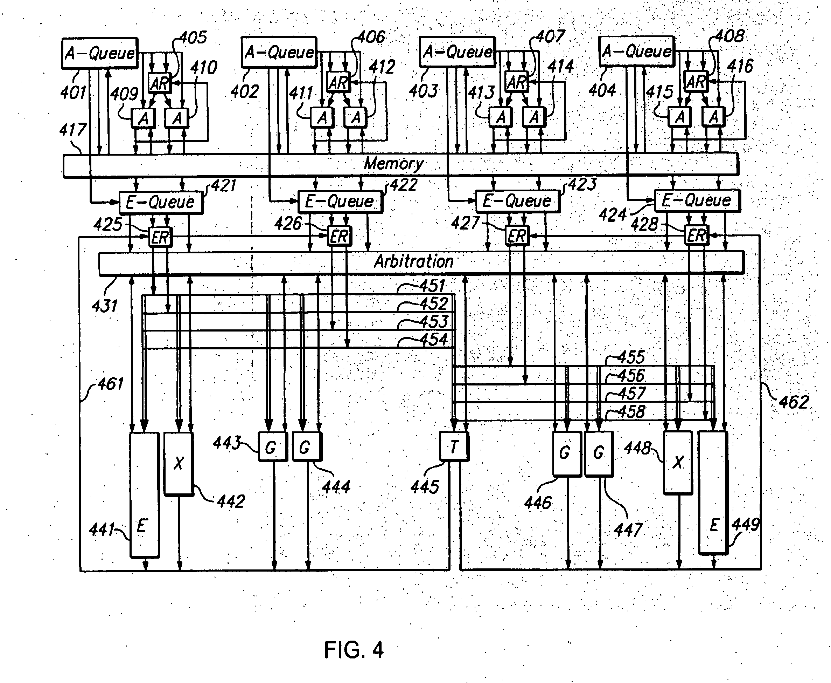

In yet another aspect of the present invention, best shown in Figure 4, the present invention employs both decoupled access from execution pipelines and simultaneous multithreading in a unique way. Simultaneous Multithreaded pipelines have been employed in prior art to enhance the utilization of data path units by allowing instructions to be issued from one of several execution threads to each functional unit (e.g. Dean M. Tullsen, Susan J. Eggers, and Henry M. Levy, "Simultaneous Multithreading: Maximizing On-Chip Parallelism," Proceedings of the 22nd Annual International Symposium on Computer Architecture, Santa Margherita Ligure, Italy, June, 1995).

Decoupled access from execution pipelines have been employed in prior art to enhance the utilization of execution data path units by buffering results from an access unit, which computes addresses to a memory unit that in turn fetches the requested items from memory, and then presenting them to an execution unit (e.g. J. E. Smith, "Decoupled Access/Execute Computer Architectures", Proceedings of the Ninth Annual International Symposium on Computer Architecture, Austin, Texas (April 26-29, 1982), pp. 112-119).

Compared to conventional pipelines, the Eggers prior art used an additional pipeline cycle before instructions could be issued to functional units, the additional cycle needed to determine which threads should be permitted to issue instructions. Consequently, relative to conventional pipelines, the prior art design had additional delay, including dependent branch delay.

The present invention contains individual access data path units, with associated register files, for each execution thread. These access units produce addresses, which are aggregated together to a common memory unit, which fetches all the addresses and places the memory contents in one or more buffers. Instructions for execution units, which are shared to varying degrees among the threads are also buffered for later execution. The execution units then perform operations from all active threads using functional data path units that are shared.

For instructions performed by the execution units, the extra cycle required for prior art simultaneous multithreading designs is overlapped with the memory data access time from prior art decoupled access from execution cycles, so that no additional delay is incurred by the execution functional units for scheduling resources. For instructions performed by the access units, by employing individual access units for each thread the additional cycle for scheduling shared resources is also eliminated.

This is a favorable tradeoff because, while threads do not share the access functional units, these units are relatively small compared to the execution functional units, which are shared by threads.

With regard to the sharing of execution units, the present invention employs several different classes of functional units for the execution unit, with varying cost, utilization, and performance. In particular, the G units, which perform simple addition and bitwise operations is relatively inexpensive (in area and power) compared to the other units, and its utilization is relatively high. Consequently, the design employs four such units, where each unit can be shared between two threads. The X unit, which performs a broad class of data switching functions is more expensive and less used, so two units are provided that are each shared among two threads. The T unit, which performs the Wide Translate instruction, is expensive and utilization is low, so the single unit is shared among all four threads. The E unit, which performs the class of Ensemble instructions, is very expensive in area and power compared to the other functional units, but utilization is relatively high, so we provide two such units, each unit shared by two threads.

In Figure 4, four copies of an access unit are shown, each with an access instruction fetch queue A-Queue 401-404, coupled to an access register file AR 405-408, each of which is, in turn, coupled to two access functional units A 409-416. The access units function independently for four simultaneous threads of execution. These eight access functional units A 409-416 produce results for access register files AR 405-408 and addresses to a shared memory system 417. The memory contents fetched from memory system 417 are combined with execute instructions not performed by the access unit and entered into the four execute instruction queues E-Queue 421-424. Instructions and memory data from E-queue 421-424 are presented to execution register files 425-428, which fetches execution register file source operands. The instructions are coupled to the execution unit arbitration unit Arbitration 431, that selects which instructions from the four threads are to be routed to the available execution units E 441 and 449, X 442 and 448, G 443-444 and 446-447, and T 445. The execution register file source operands ER 425-428 are coupled to the execution units 441-445 using source operand buses 451-454 and to the execution units 445-449 using source operand buses 455-458. The function unit result operands from execution units 441-445 are coupled to the execution register file using result bus 461 and the function units result operands from execution units 445-449 are coupled to the execution register file using result bus 462.

### Improved Interprivilege Gateway

In a still further aspect of the present invention, an improved interprivilege gateway is described which involves increased parallelism and leads to enhanced performance. In related U.S. Patent 6101590 , a system and method is described for implementing an instruction that, in a controlled fashion, allows the transfer of control (branch) from a lower-privilege level to a higher-privilege level. The present invention is an improved system and method for a modified instruction that accomplishes the same purpose but with specific advantages.

Many processor resources, such as control of the virtual memory system itself, input and output operations, and system control functions are protected from accidental or malicious misuse by enclosing them in a protective, privileged region. Entry to this region must be established only though particular entry points, called gateways, to maintain the integrity of these protected regions.

Prior art versions of this operation generally load an address from a region of memory using a protected virtual memory attribute that is only set for data regions that contain valid gateway entry points, then perform a branch to an address contained in the contents of memory. Basically, three steps were involved: load, then branch and check. Compared to other instructions, such as register-to-register computation instructions and memory loads and stores, and register-based branches, this is a substantially longer operation, which introduces delays and complexity to a pipelined implementation.

In the present invention, the branch-gateway instruction performs two operations in parallel: 1) a branch is performed to the contents of register 0 and 2) a load is performed using the contents of register 1, using a specified byte order (little-endian) and a specified size (64 bits). If the value loaded from memory does not equal the contents of register 0, the instruction is aborted due to an exception. In addition, 3) a return address (the next sequential instruction address following the branch-gateway instruction) is written into register 0, provided the instruction is not aborted. This approach essentially uses a first instruction to establish the requisite permission to allow user code to access privileged code, and then a second instruction is permitted to branch directly to the privileged code because of the permissions issued for the first instruction.

In the present invention, the new privilege level is also contained in register 0, and the second parallel operation does not need to be performed if the new privilege level is not greater than the old privilege level. When this second operation is suppressed, the remainder of the instruction performs an identical function to a branch-link instruction, which is used for invoking procedures that do not require an increase in privilege. The advantage that this feature brings is that the branch-gateway instruction can be used to call a procedure that may or may not require an increase in privilege.

The memory load operation verifies with the virtual memory system that the region that is loaded has been tagged as containing valid gateway data. A further advantage of the present invention is that the called procedure may rely on the fact that register 1 contains the address that the gateway data was loaded from, and can use the contents of register 1 to locate additional data or addresses that the procedure may require. Prior art versions of this instruction required that an additional address be loaded from the gateway region of memory in order to initialize that address in a protected manner - the present invention allows the address itself to be loaded with a "normal" load operation that does not require special protection.

The present invention allows a "normal" load operation to also load the contents of register 0 prior to issuing the branch-gateway instruction. The value may be loaded from the same memory address that is loaded by the branch-gateway instruction, because the present invention contains a virtual memory system in which the region may be enabled for normal load operations as well as the special "gateway" load operation performed by the branch-gateway instruction.

### Improved Interprivilege Gateway - System and Privileged Library Calls

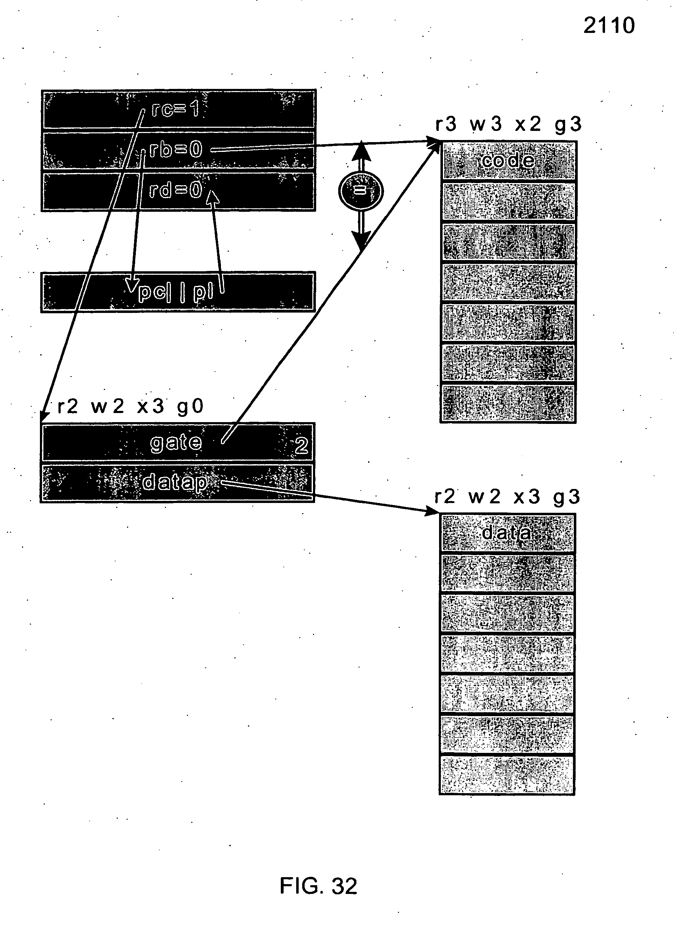

An exemplary embodiment of the System and Privileged Library Calls is shown in Figure 32 and Annex 33. An exemplary embodiment of the schematic 2110 of System and Privileged Library Calls is shown in Fig. 32. In an exemplary embodiment, it is an objective to make calls to system facilities and privileged libraries as similar as possible to normal procedure calls as described above. Rather than invoke system calls as an exception, which involves significant latency and complication, a modified procedure call in which the process privilege level is quietly raised to the required level is used. To provide this mechanism safely, interaction with the virtual memory system is required.

In an exemplary embodiment, such a procedure must not be entered from anywhere other than its legitimate entry point, to prohibit entering a procedure after the point at which security checks are performed or with invalid register contents, otherwise the access to a higher privilege level can lead to a security violation. In addition, the procedure generally must have access to memory data, for which addresses must be produced by the privileged code. To facilitate generating these addresses, the branch-gateway instruction allows the privileged code procedure to rely on the fact that a single register has been verified to contain a pointer to valid memory region.

In an exemplary embodiment, the branch-gateway instruction ensures both that the procedure is invoked at a proper entry point, and that other registers such as the data pointer and stack pointer can be properly set. To ensure this, the branch-gateway instruction retrieves a "gateway" directly from the protected virtual memory space. The gateway contains the virtual address of the entry point of the procedure and the target privilege level. A gateway can only exist in regions of the virtual address space designated to contain them, and can only be used to access privilege levels at or below the privilege level at which the memory region can be written to ensure that a gateway cannot be forged.

In an exemplary embodiment, the branch-gateway instruction ensures that register 1 (dp) contains a valid pointer to the gateway for this target code address by comparing the contents of register 0 (1p) against the gateway retrieved from memory and causing an exception trap if they do not match. By ensuring that register I points to the gateway, auxiliary information, such as the data pointer and stack pointer can be set by loading values located by the contents of register 1. For example, the eight bytes following the gateway may be used as a pointer to a data region for the procedure.

In an exemplary embodiment, before executing the branch-gateway instruction, register 1 must be set to point at the gateway, and register 0 must be set to the address of the target code address plus the desired privilege level. A "L.L64.L.A r0=r1,0" instruction is one way to set register 0, if register 1 has already been set, but any means of getting the correct value into register 0 is permissible.

In an exemplary embodiment, similarly, a return from a system or privileged routine involves a reduction of privilege. This need not be carefully controlled by architectural facilities, so a procedure may freely branch to a less-privileged code address. Normally, such a procedure restores the stack frame, then uses the branch-drown instruction to return.

An exemplary embodiment of the typical dynamic-linked, inter-gateway calling sequence 2130 is shown in Annex 33. In an exemplary embodiment, the calling sequence is identical to that of the inter-module calling sequence shown above, except for the use of the B.GATE instruction instead of a B.LINK instruction. Indeed, if a B.GATE instruction is used when the privilege level in the lp register is not higher than the current privilege level, the B.GATE instruction performs an identical function to a B.LINK.

In an exemplary embodiment, the callee, if it uses a stack for local variable allocation, cannot necessarily trust the value of the sp passed to it, as it can be forged. Similarly, any pointers which the callee provides should not be used directly unless it they are verified to point to regions which the callee should be permitted to address. This can be avoided by defining application programming interfaces (APIs) in which all values are passed and returned in registers, or by using a trusted, intermediate privilege wrapper routine to pass and return parameters. The method described below can also be used.

In an exemplary embodiment, it can be useful to have highly privileged code call less-privileged routines. For example, a user may request that errors in a privileged routine be reported by invoking a user-supplied error-logging routine. To invoke the procedure, the privilege can be reduced via the branch-down instruction. The return from the procedure actually requires an increase in privilege, which must be carefully controlled. This is dealt with by placing the procedure call within a lower-privilege procedure wrapper, which uses the branch-gateway instruction to return to the higher privilege region after the call through a secure re-entry point. Special care must be taken to ensure that the less-privileged routine is not permitted to gain unauthorized access by corruption of the stack or saved registers, such as by saving all registers and setting up a new stack frame (or restoring the original lower-privilege stack) that may be manipulated by the less-privileged routine. Finally, such a technique is vulnerable to an unprivileged routine attempting to use the re-entry point directly, so it may be appropriate to keep a privileged state variable which controls permission to enter at the re-entry point.

### Improved Interprivilege Gateway - Branch Gateway

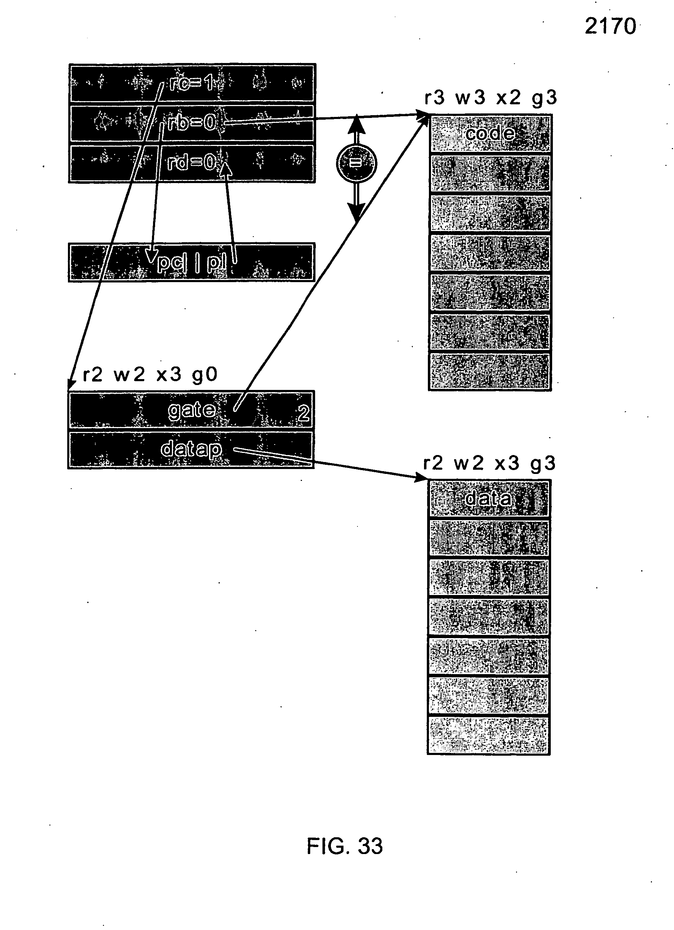

An exemplary embodiment of the Branch Gateway instruction is shown in Figure 33 and Annexes 34-36. In an exemplary embodiment, this operation provides a secure means to call a procedure, including those at a higher privilege level. An exemplary embodiment of the format and operation codes 2160 of the Branch Gateway instruction is shown in Annex 34.

An exemplary embodiment of the schematic 2170 of the Branch Gateway instruction is shown in Fig. 33. In an exemplary embodiment, the contents of register rb is a branch address in the high-order 62 bits and a new privilege level in the low-order 2 bits. A branch and link occurs to the branch address, and the privilege level is raised to the new privilege level. The high-order 62 bits of the successor to the current program counter is catenated with the 2-bit current execution privilege and placed in register 0.

In an exemplary embodiment, if the new privilege level is greater than the current privilege level, an octlet of memory data is fetched from the address specified by register 1, using the little-endian byte order and a gateway access type. A GatewayDisallowed exception occurs if the original contents of register 0 do not equal the memory data.

In an exemplary embodiment, if the new privilege level is the same as the current privilege level, no checking of register 1 is performed.

In an exemplary embodiment, an AccessDisallowed exception occurs if the new privilege level is greater than the privilege level required to write the memory data, or if the old privilege level is lower than the privilege required to access the memory data as a gateway, or if the access is not aligned on an 8-byte boundary.

In an exemplary embodiment, a ReservedInstruction exception occurs if the rc field is not one or the rd field is not zero.

In an exemplary embodiment, in the example in Fig. 33, a gateway from level 0 to level 2 is illustrated. The gateway pointer, located by the contents of register rc (1), is fetched from memory and compared against the contents of register rb (0). The instruction may only complete if these values are equal. Concurrently, the contents of register rb (0) is placed in the program counter and privilege level, and the address of the next sequential address and privilege level is placed into register rd (0). Code at the target of the gateway locates the data pointer at an offset from the gateway pointer (register 1), and fetches it into register 1, making a data region available. A stack pointer may be saved and fetched using the data region, another region located from the data region, or a data region located as an offset from the original gateway pointer.

In an exemplary embodiment, this instruction gives the target procedure the assurance that register 0 contains a valid return address and privilege level, that register 1 points to the gateway location, and that the gateway location is octlet aligned. Register I can then be used to securely reach values in memory. If no sharing of literal pools is desired, register 1 may be used as a literal pool pointer directly. If sharing of literal pools is desired, register 1 may be used with an appropriate offset to load a new literal pool pointer; for example, with a one cache line offset from the register 1. Note that because the virtual memory system operates with cache line granularity, that several gateway locations must be created together.

In an exemplary embodiment, software must ensure that an attempt to use any octlet within the region designated by virtual memory as gateway either functions properly or causes a legitimate exception. For example, if the adjacent octlets contain pointers to literal pool locations, software should ensure that these literal pools are not executable, or that by virtue of being aligned addresses, cannot raise the execution privilege level. If register I is used directly as a literal pool location, software must ensure that the literal pool locations that are accessible as a gateway do not lead to a security violation.

In an exemplary embodiment, register 0 contains a valid return address and privilege level, the value is suitable for use directly in the Branch-down (B.DOWN) instruction to return to the gateway caller.

An exemplary embodiment of the pseudocode 2190 of the Branch Gateway instruction is shown in Annex 35 An exemplary embodiment of the exceptions 2199 of the Branch Gateway instruction is shown in Annex 36.

### Ensemble Scale-Add Floating-point

A novel instruction, Ensemble-Scale-Add improves processor performance by performing two sets of parallel multiplications and pairwise summing the products. This improves performance for operations in which two vectors must be scaled by two independent values and then summed, providing two advantages over nearest prior art operations of a fused-multiply-add. To perform this operation using prior art instructions, two instructions would be needed, an ensemble-multiply for one vector and one scaling value, and an ensemble-multiply-add for the second vector and second scaling value, and these operations are clearly dependent. In contrast, the present invention fuses both the two multiplies and the addition for each corresponding elements of the vectors into a single operation. The first advantage achieved is improved performance, as in an exemplary embodiment the combined operation performs a greater number of multiplies in a single operation, thus improving utilization of the partitioned multiplier unit. The second advantage achieved is improved accuracy, as an exemplary embodiment may compute the fused operation with sufficient intermediate precision so that no intermediate rounding the products is required.

An exemplary embodiment of the Ensemble Scale-Add Floating-point instruction is shown in Annexes 37-39. In an exemplary embodiment, these operations take three values from registers, perform a group of floating-point arithmetic operations on partitions of bits in the operands, and place the concatenated results in a register. An exemplary embodiment of the format 2210 of the Ensemble Scale-Add Floating-point instruction is shown in Annex 37.

In an exemplary embodiment, the contents of registers rd and rc are taken to represent a group of floating-point operands. Operands from register rd are multiplied with a floating-point operand taken from the least-significant bits of the contents of register rb and added to operands from register rc multiplied with a floating-point operand taken from the next least-significant bits of the contents of register rb. The results are rounded to the nearest representable floating-point value in a single floating-point operation. Floating-point exceptions are not raised, and are handled according to the default rules of IEEE 754. The results are catenated and placed in register ra.

An exemplary embodiment of the pseudocode 2230 of the Ensemble Scale-Add Floating-point instruction is shown in Annex 38. In an exemplary embodiment, there are no exceptions for the Ensemble Scale-Add Floating-point instruction, as illustrated in Annex 39,

### Performing a Three-Input Bitwise Boolean Operation in a Single Instruction (Group Boolean)

In a further aspect of the present invention, a system and method is provided for performing a three-input bitwise-Boolean operation in a single instruction. A novel method is used to encode the eight possible output states of such an operation into only seven bits, and decoding these seven bits back into the eight states.

An exemplary embodiment of the Group Boolean instruction is shown in Annexes 40-43. In an exemplary embodiment, these operations take operands from three registers, perform boolean operations on corresponding bits in the operands, and place the concatenated results in the third register. An exemplary embodiment of the format 2310 of the Group Boolean instruction is shown in Annex 40.

An exemplary embodiment of a procedure 2320 of Group Boolean instruction is shown in Annex 41. In an exemplary embodiment, three values are taken from the contents of registers rd, rc and rb. The ih and il fields specify a function of three bits, producing a single bit result. The specified function is evaluated for each bit position, and the results are catenated and placed in register rd. In an exemplary embodiment, register rd is both a source and destination of this instruction.

In an exemplary embodiment, the function is specified by eight bits, which give the result for each possible value of the three source bits in each bit position:

| | |
|---|---|
| d | 11110000 |
| c | 11001100 |
| b | 10101010 |
| *f(d,c,b)* | f₇ f₆ f₅ f₄ f₃ f₂ f₁ f₀ |

In an exemplary embodiment, a function can be modified by rearranging the bits of the immediate value. The table below shows how rearrangement of immediate value f_{7..0} can reorder the operands d,c,b for the same function.

| operation | immediate |
|---|---|
| *f(d,c,b)* | f₇ f₆ f₅ f₄ f₃ f₂ f₁ f₀ |
| *f(c,d,b)* | f₇ f₆ *f₃ f₂ f₅ f₄* f₁ f₀ |
| *f(d,b,c)* | f₇ *f₅ f₆* f₄ f₃ *f₁ f₂* f₀ |
| *f(b,c,d)* | f₇ *f₃ f*₅ *f₁ f₆* f₂ *f₄* f₀ |
| *f(c,b,d)* | f₇ *f₅ f₃ f₁ f₆ f₄ f₂* f₀ |
| *f(b,d,c)* | f₇*f₃f₆f₂f₅f₁f4* f₀ |

In an exemplary embodiment, by using such a rearrangement, an operation of the form: *b*=*f(d,c,b)* can be recoded into a legal form: *b*=*f(b,d,c).* For example, the function: *b=f(d,c,b)=d?c:b* cannot be coded, but the equivalent function: *d=c?b:d* can be determined by rearranging the code for *d=f(d,c,b)=d?c:b,* which is 11001010, according to the rule for *f(d,c,b)⇒f(c,b,d),* to the code 11011000.

### Encoding

In an exemplary embodiment, some special characteristics of this rearrangement is the basis of the manner in which the eight function specification bits are compressed to seven immediate bits in this instruction. As seen in the table above, in the general case, a rearrangement of operands from *f(d,c,b)* to *f(d,b,c)*.(interchanging rc and rb) requires interchanging the values of f₆ and f₅ and the values of f₂ and f₁.

In an exemplary embodiment, among the 256 possible functions which this instruction can perform, one quarter of them (64 functions) are unchanged by this rearrangement. These functions have the property that f₆=f₅ and f₂=f₁. The values of rc and rb (Note that rc and rb are the register specifiers, not the register contents) can be freely interchanged, and so are sorted into rising or falling order to indicate the value of f₂. (A special case arises when rc=rb, so the sorting of rc and rb cannot convey information. However, as only the values f₇, f₄, f₃, and f₀ can ever result in this case, f₆, f₅, f₂, and f₁ need not be coded for this case, so no special handling is required.) These functions are encoded by the values of f₇, f₆, f₄, f₃, and f₀ in the immediate field and f₂ by whether rc>rb, thus using 32 immediate values for 64 functions.

In an exemplary embodiment, another quarter of the functions have f₆=1 and f₅=0. These functions are recoded by interchanging rc and rb, f₆ and f₅, f₂ and f₁. They then share the same encoding as the quarter of the functions where f₆=0 and f₅=1, and are encoded by the values of f₇, f₄, f₃, f₂, f₁, and f₀ in the immediate field, thus using 64 immediate values for 128 functions.

In an exemplary embodiment, the remaining quarter of the functions have f₆=f₅ and f₂≠f₁. The half of these in which f₂=1 and f₁=0 are recoded by interchanging rc and rb, f₆ and f₅, f₂ and f₁. They then share the same encoding as the eighth of the functions where f₂=0 and f₁=1, and are encoded by the values of f₇, f₆, f₄, f₃, and f₀ in the immediate field, thus using 32 immediate values for 64 functions.

In an exemplary embodiment, the function encoding is summarized by the table:

| f₇ | f₆ | f₅ | f₄ | f₃ | f₂ | f₁ | f₀ | trc>trb | ih | il₅ | il₄ | il₃ | il₂ | il₁ | il₀ | rc | rb |
|---|---|---|---|---|---|---|---|---|---|---|---|---|---|---|---|---|---|
| | | f₆ | | | | f₂ | | f₂ | 0 | 0 | f₆ | f₇ | f₄ | f₃ | f₀ | trc | trb |
| | | f₆ | | | | f₂ | | ∼f₂ | 0 | 0 | f₆ | f₇ | f₄ | f₃ | f₀ | trb | trc |
| | | f₆ | | | 0 | 1 | | | 0 | 1 | f₆ | f₇ | f₄ | f₃ | f₀ | trc | trb |
| | | f₆ | | | 1 | 0 | | | 0 | 1 | f₆ | f₇ | f₄ | f₃ | f₀ | trb | trc |
| | 0 | 1 | | | | | | | 1 | f₂ | f₁ | f₇ | f₄ | f₃ | f₀ | trc | trb |
| | 1 | 0 | | | | | | | 1 | f₁ | f₂ | f₇ | f₄ | f₃ | f₀ | trb | trc |

In an exemplary embodiment, the function decoding is summarized by the table:

| ih | il₅ | il₄ | il₃ | il₂ | il₁ | il₀ | rc>rb | f₇ | f₆ | f₅ | f₄ | f₃ | f₂ | f₁ | f₀ |
|---|---|---|---|---|---|---|---|---|---|---|---|---|---|---|---|
| 0 | 0 | | | | | | 0 | il₃ | il₄ | il₄ | il₂ | il₁ | 0 | 0 | il₀ |
| 0 | 0 | | | | | | 1 | il₃ | il₄ | il₄ | il₂ | il₁ | 1 | 1 | il₀ |
| 0 | 1 | | | | | | | il₃ | il₄ | il₄ | il₂ | il₁ | 0 | 1 | il₀ |
| 1 | | | | | | | | il₃ | 0 | 1 | il₂ | il₁ | il₅ | il₄ | il₀ |

From the foregoing discussion, it can be appreciated that an exemplary embodiment of a compiler or assembler producing the encoded instruction performs the steps above to encode the instruction, comparing the f6 and f5 values and the f2 and f1 values of the immediate field to determine which one of several means of encoding the immediate field is to be employed, and that the placement of the trb and trc register specifiers into the encoded instruction depends on the values of f2 (or fl) and f6 (or f5).

An exemplary embodiment of the pseudocode 2330 of the Group Boolean instruction is shown in Annex 42. It can be appreciated from the code that an exemplary embodiment of a circuit that decodes this instruction produces the f₂ and f₁ values, when the immediate bits ih and il5 are zero, by an arithmetic comparison of the register specifiers rc and rb, producing a one (1) value for f₂ and f₁ when rc>rb In an exemplary embodiment, there are no exceptions for the Group Boolean instruction, as illustrated in Annex 43.

### Improving the Branch Prediction of Simple Repetitive Loops of Code

In yet a further aspect to the present invention, a system and method is described for improving the branch prediction of simple repetitive loops of code. In such a simple loop, the end of the loop is indicated by a conditional branch backward to the beginning of the loop. The condition branch of such a loop is taken for each iteration of the loop except the final iteration, when it is not taken. Prior art branch prediction systems have employed finite-state machine operations to attempt to properly predict a majority of such conditional branches, but without specific information as to the number of times the loop iterates, will make an error in prediction when the loop terminates.

The system and method of the present invention includes providing a count field for indicating how many times a branch is likely to be taken before it is not taken, which enhances the ability to properly predict both the initial and final branches of simple loops when a compiler can determine the number of iterations that the loop will be performed.
This improves performance by avoiding misprediction of the branch at the end of a loop when the loop terminates and instruction execution is to continue beyond the loop, as occurs in prior art branch prediction hardware.

### Branch Hint

An exemplary embodiment of the Branch Hint instruction is shown in Annexes 44-46. In an exemplary embodiment, this operation indicates a future branch location specified by a register.

In an exemplary embodiment, this instruction directs the instruction fetch unit of the processor that a branch is likely to occur count times at **simm** instructions following the current successor instruction to the address specified by the contents of register rd. An exemplary embodiment of the format 2410 of the Branch Hint instruction is shown in Annex 44.

In an exemplary embodiment, after branching count times, the instruction fetch unit presumes that the branch at **simm** instructions following the current successor instruction is not likely to occur. If count is zero, this hint directs the instruction fetch unit that the branch is likely to occur more than 63 times.

In an exemplary embodiment, an Access disallowed exception occurs if the conten ts of register rd is not aligned on a quadlet boundary.

An exemplary embodiment of the pseudocode 2430 of the Branch Hint instruction is shown in Annex 45. An exemplary embodiment of the exceptions 2460 of the Branch Hint instruction is shown in Annex 46.

### Incorporating Floating Point Information into Processor Instructions

In a still further aspect of the present invention, a technique is provided for incorporating floating point information into processor instructions. In related U.S. patent 581,2439, a system and method are described for incorporating control of rounding and exceptions for floating-point instructions into the instruction itself. The present invention extends this invention to include separate instructions in which rounding is specified, but default handling of exceptions is also specified, for a particular class of floating-point instructions.

### Ensemble Sink Floating-point

In an exemplary embodiment, a Ensemble Sink Floating-point instruction, which converts floating-point values to integral values, is available with control in the instruction that include all previously specified combinations (default-near rounding and default exceptions, Z - round-toward-zero and trap on exceptions, N - round to nearest and trap on exceptions, F - floor rounding (toward minus infinity) and trap on exceptions, C - ceiling rounding (toward plus infinity) and trap on exceptions, and X - trap on inexact and other exceptions), as well as three new combinations (Z.D - round toward zero and default exception handling, F.D - floor rounding and default exception handling, and C.D - ceiling rounding and default exception handling). (The other combinations: N.D is equivalent to the default, and X.D - trap on inexact but default handling for other exceptions is possible but not particularly valuable).

An exemplary embodiment of the Ensemble Sink Floating-point instruction is shown in Annexes 47-50. In an exemplary embodiment, these operations take one value from a register, perform a group of floating-point arithmetic conversions to integer on partitions of bits in the operands, and place the concatenated results in a register. An exemplary embodiment of the operation codes, selection, and format 2510 of Ensemble Sink Floating-point instruction is shown in Annex 47.

In an exemplary embodiment, the contents of register rc is partitioned into floating-point operands of the precision specified and converted to integer values. The results are catenated and placed in register rd.

In an exemplary embodiment, the operation is rounded using the specified rounding option or using round-to- nearest if not specified. If a rounding option is specified, unless default exception handling is specified, the operation raises a floating-point exception if a floating-point invalid operation, divide by zero, overflow, or underflow occurs, or when specified, if the result is inexact. If a rounding option is not specified or if default exception handling is specified, floating-point exceptions are not raised, and are handled according to the default rules of IEEE 754.

An exemplary embodiment of the pseudocode 2530 of the Ensemble Sink Floating-point instruction is shown in Annex 48.An exemplary embodiment of the exceptions 2560 of the Ensemble Sink Floating-point instruction is shown in Annex 49.

An exemplary embodiment of the pseudocode 2570 of the Floating-point instructions is shown in Annex 50.

### Conclusion

Having fully described a preferred embodiment of the invention and various alternatives, those skilled in the art will recognize, given the teachings herein, that numerous alternatives and equivalents exist which do not depart from the invention. It is therefore intended that the invention not be limited by the foregoing description, but only by the appended claims.

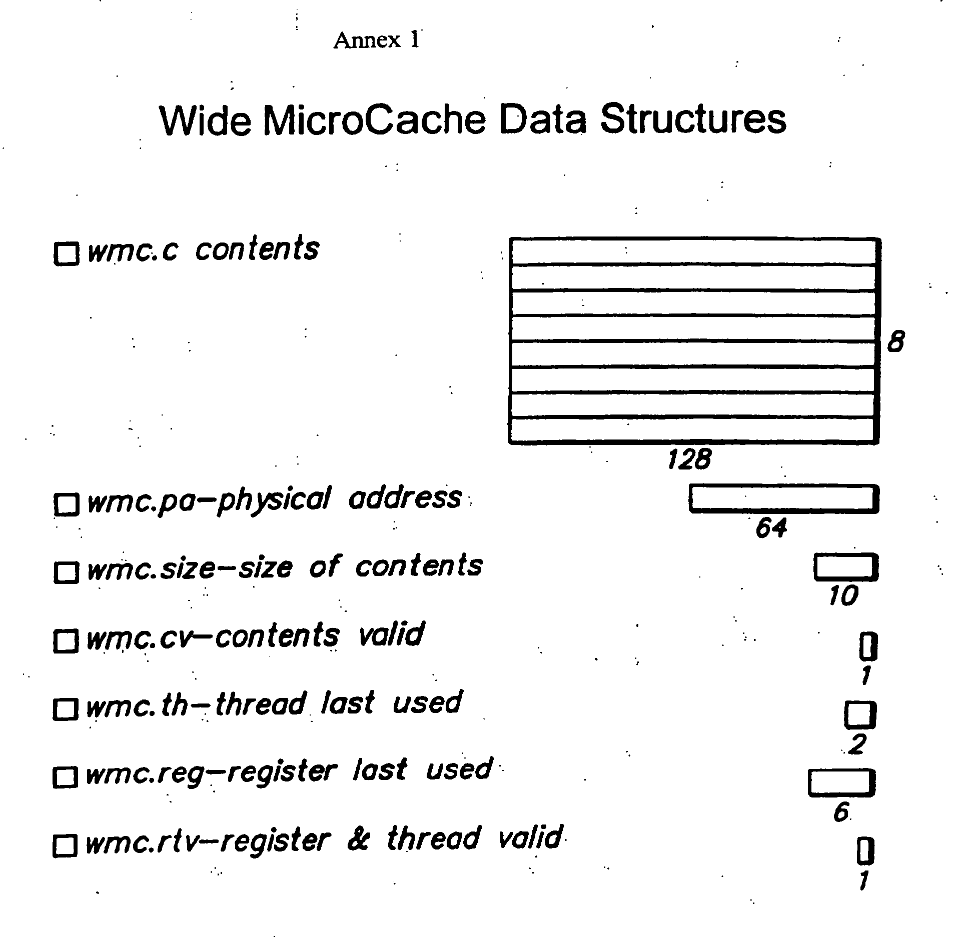

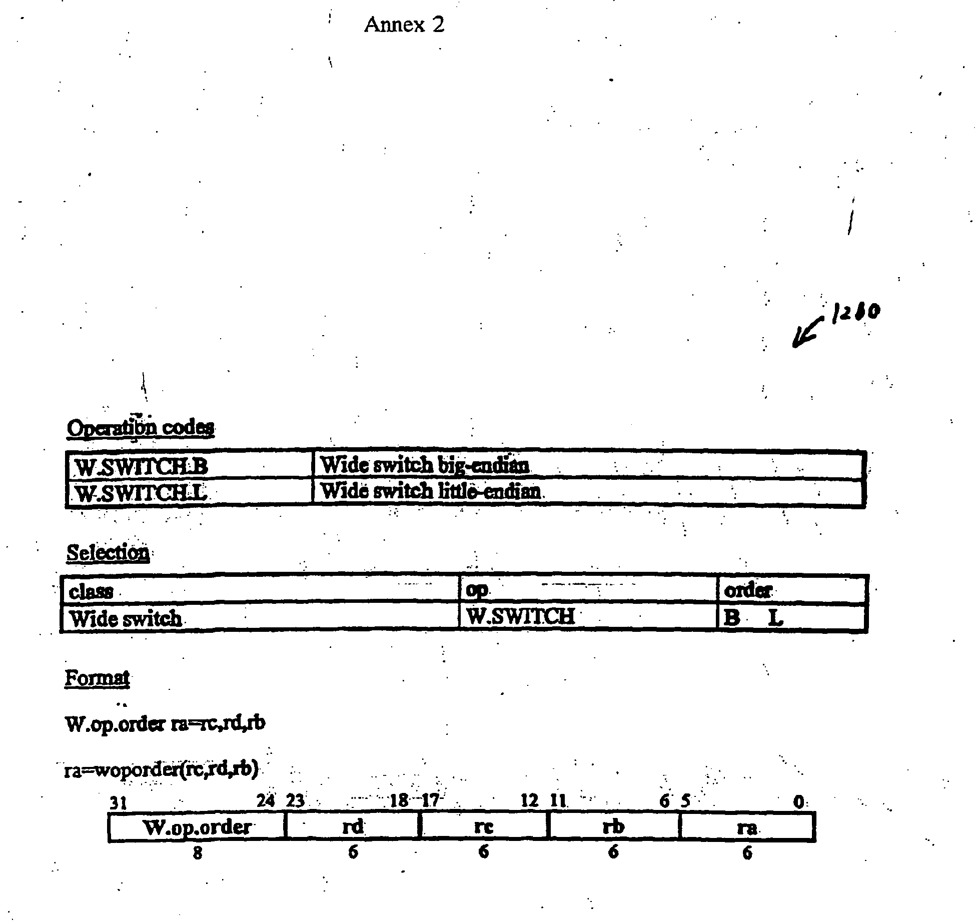

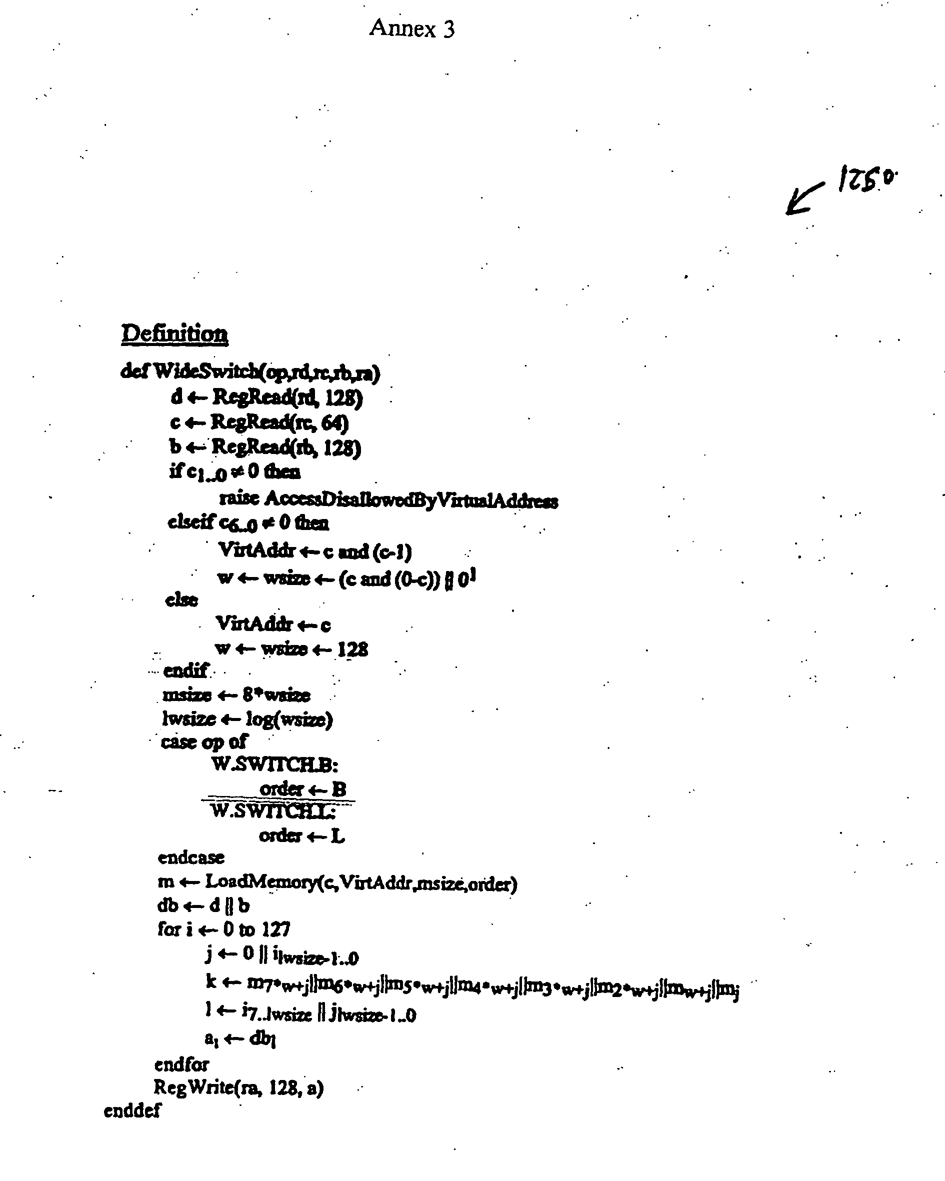

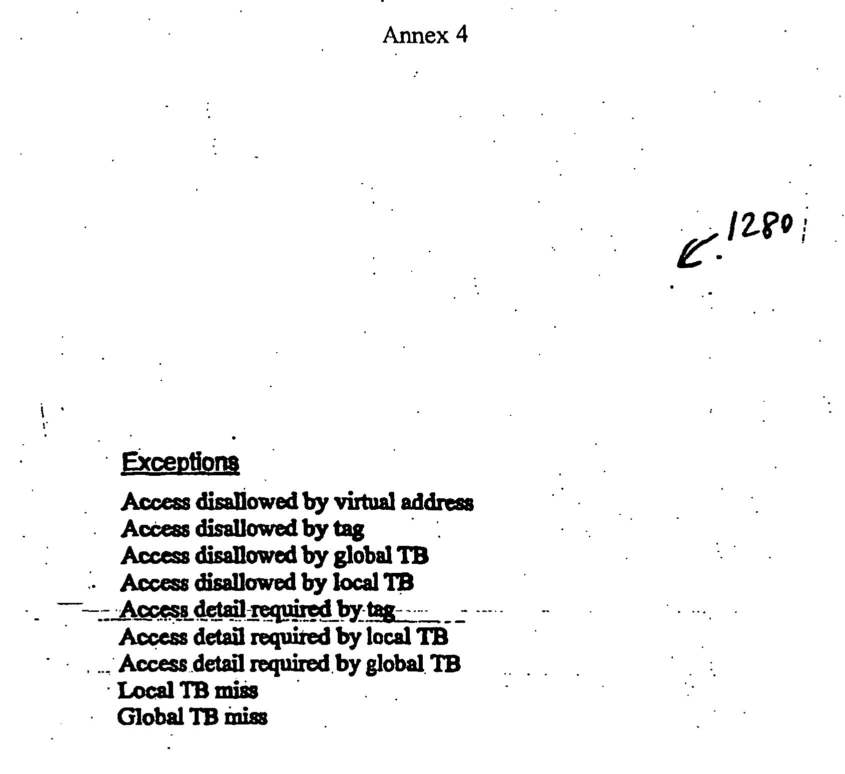

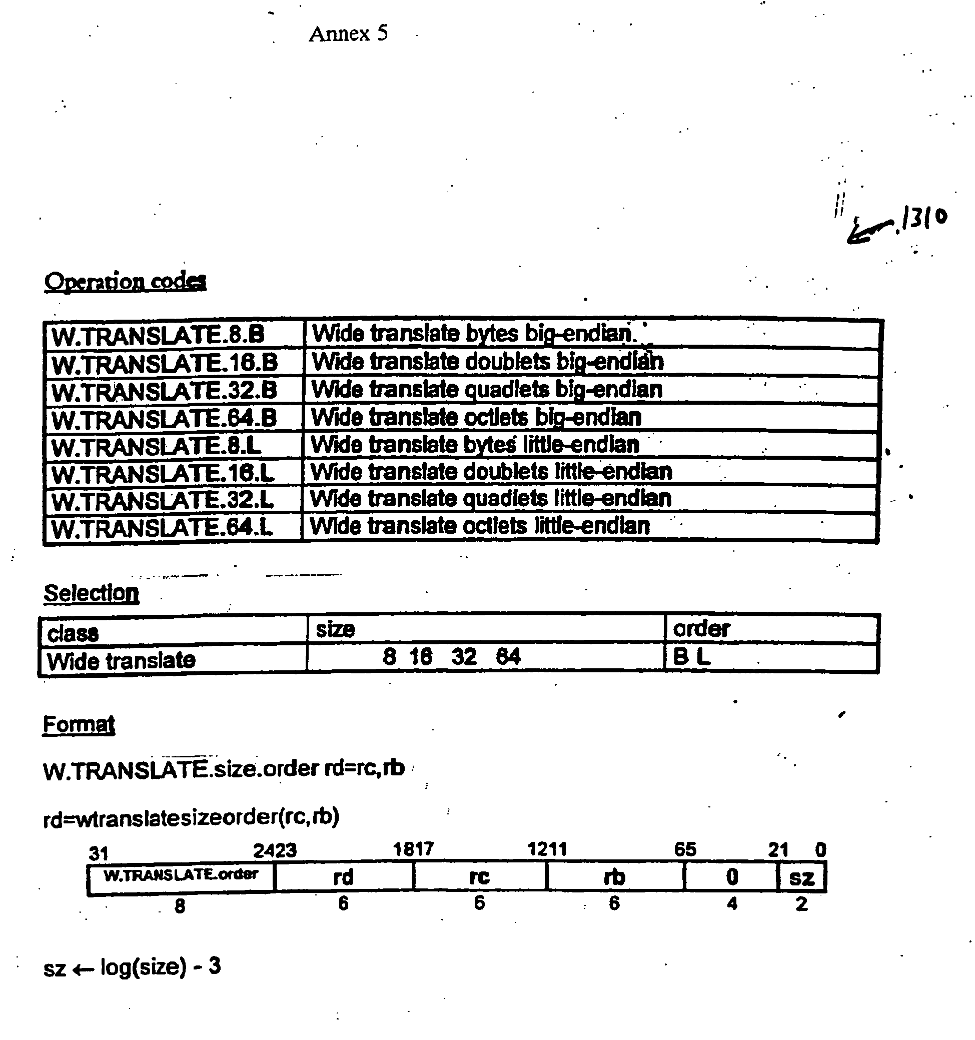

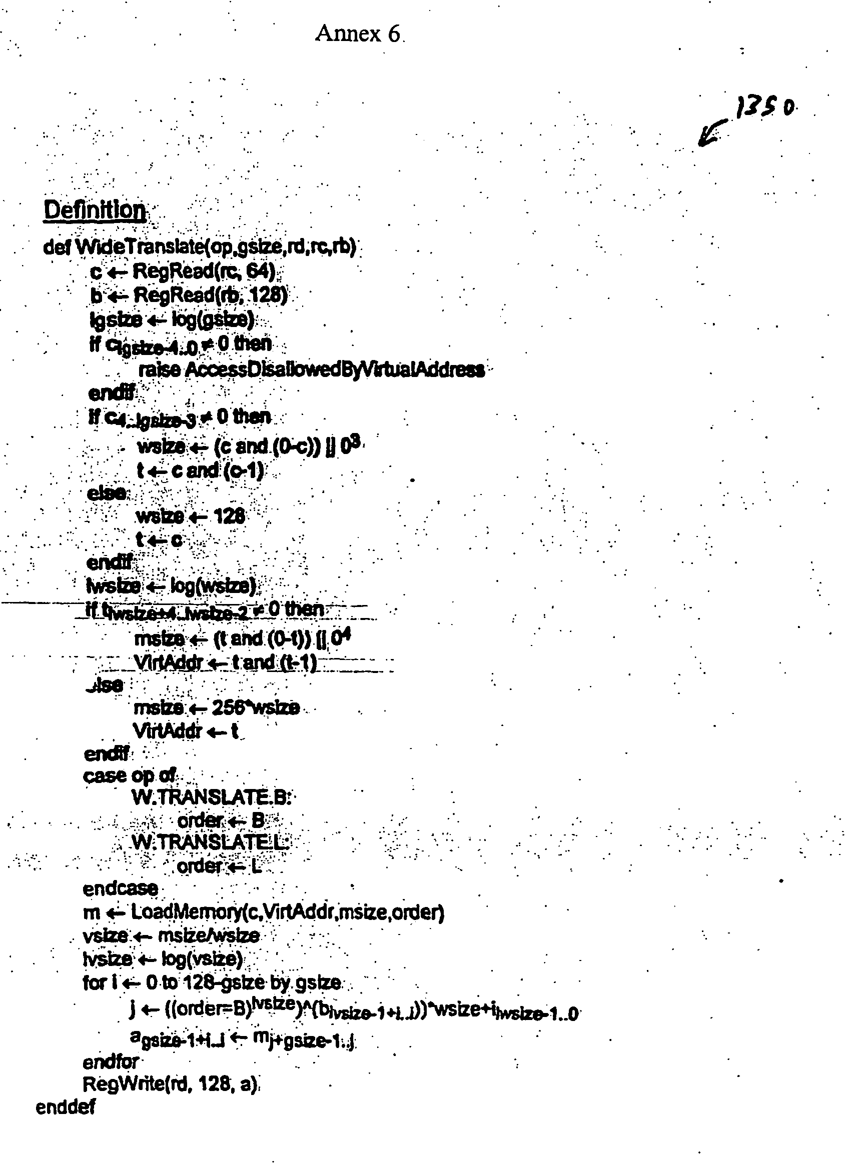

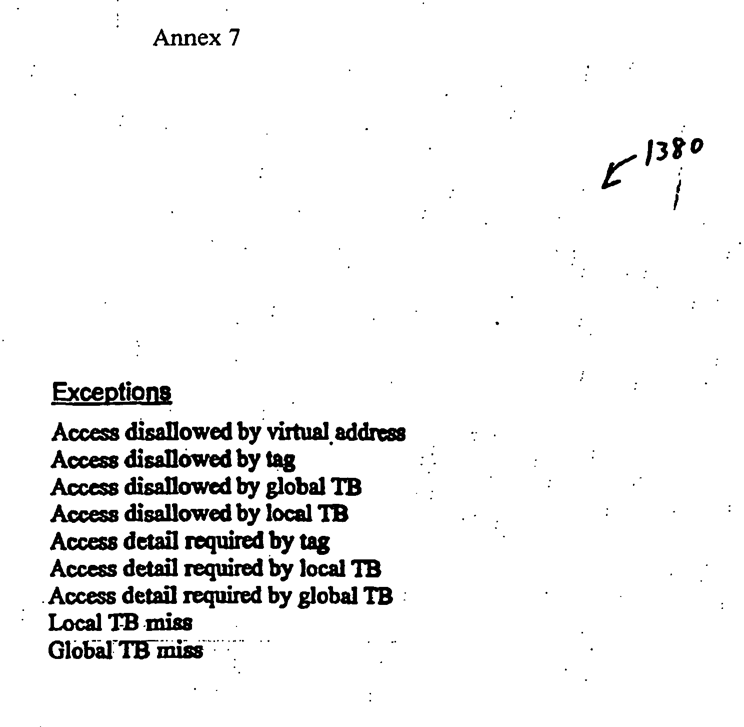

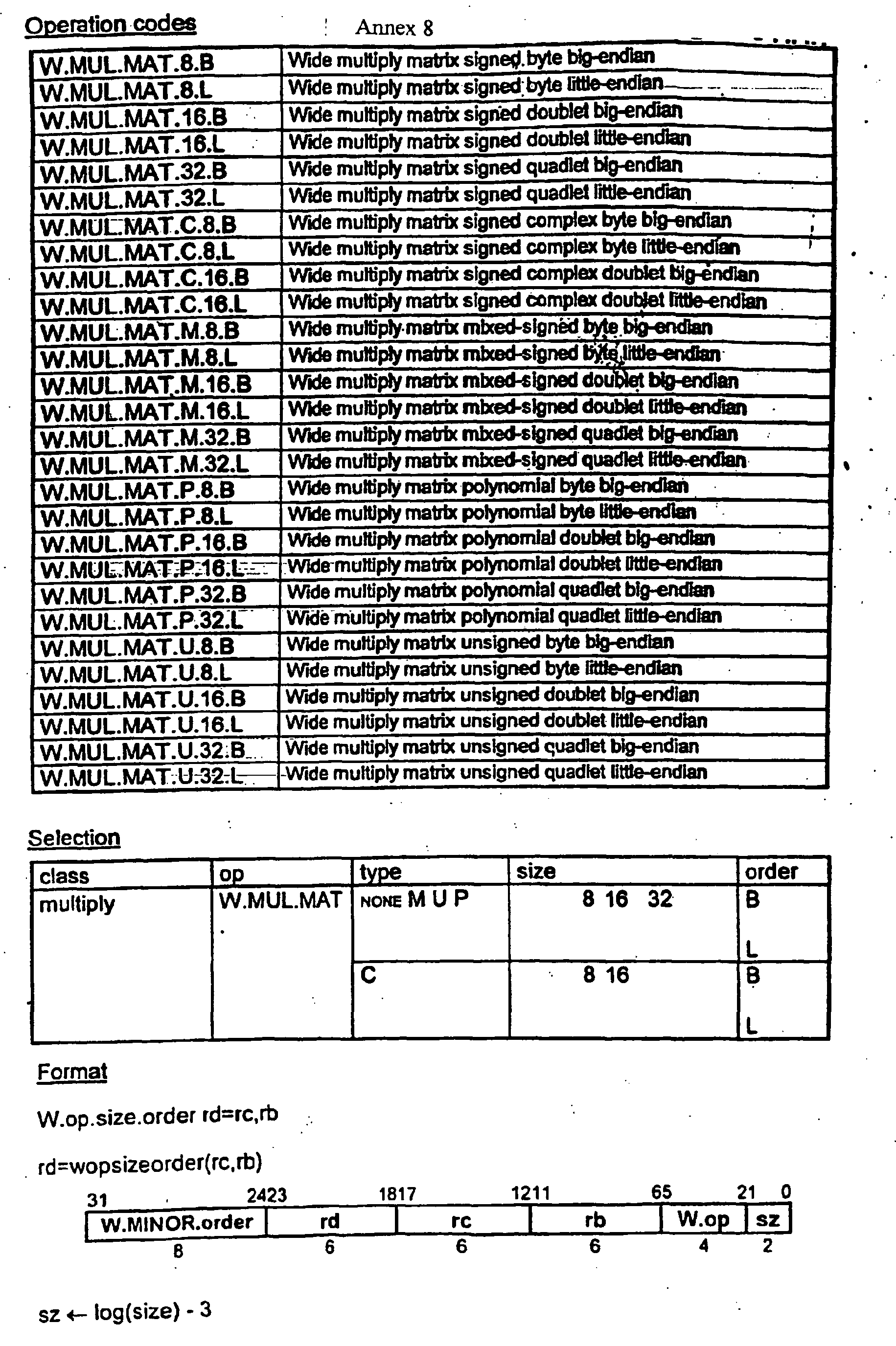

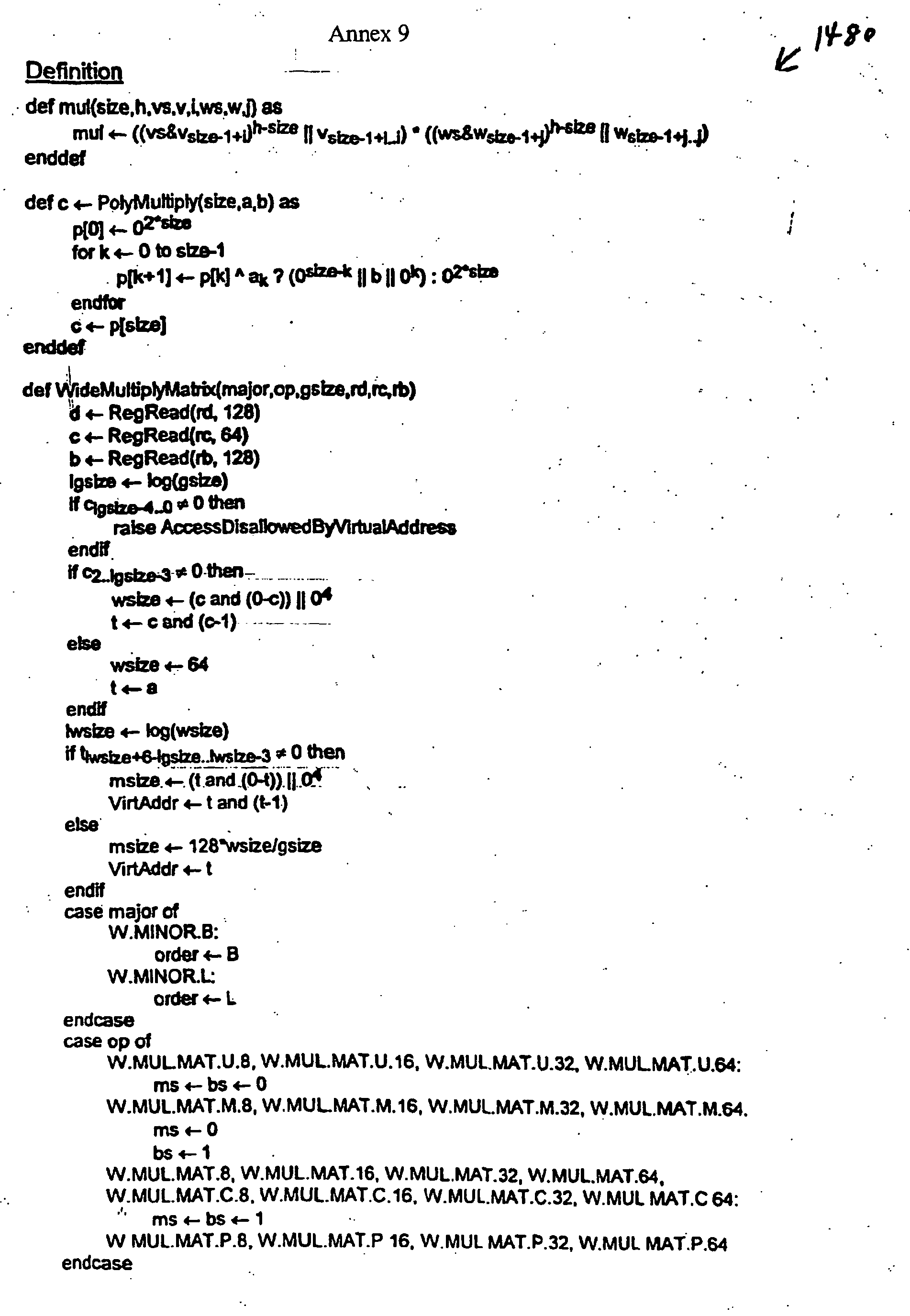

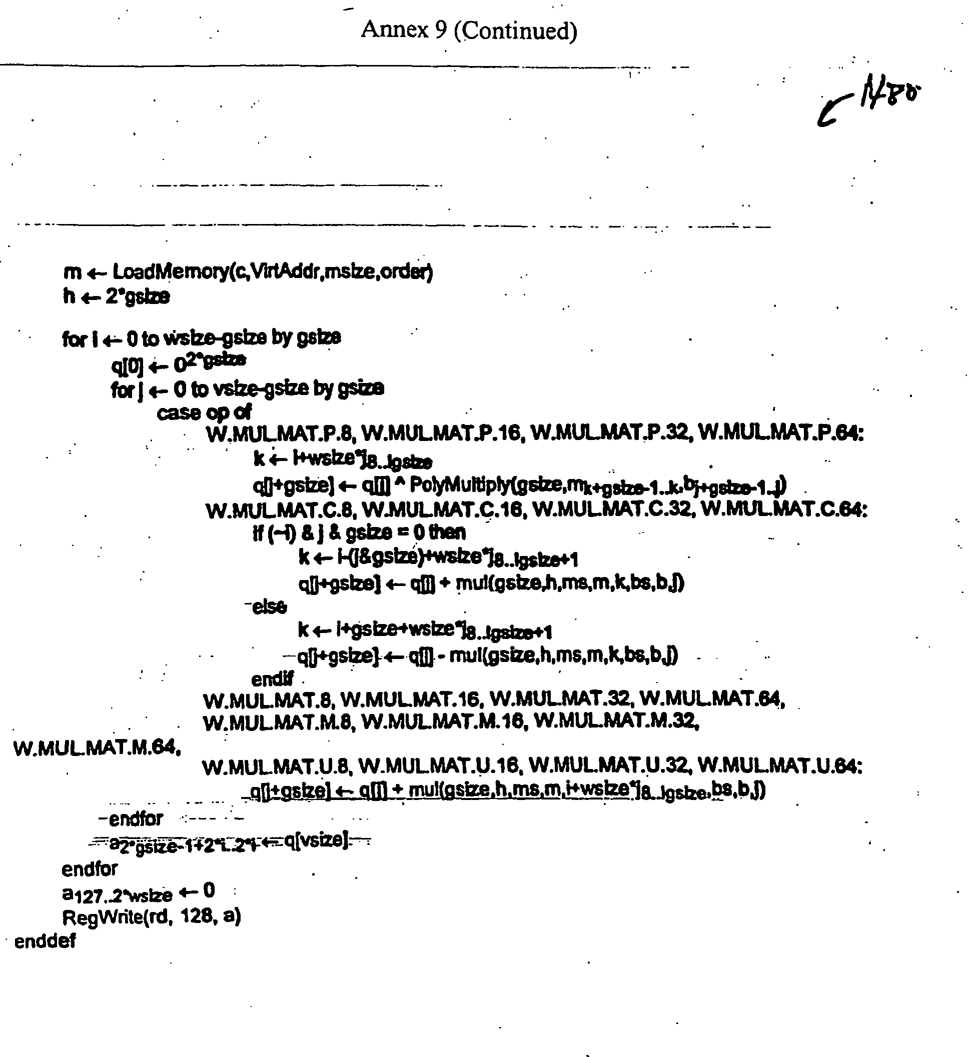

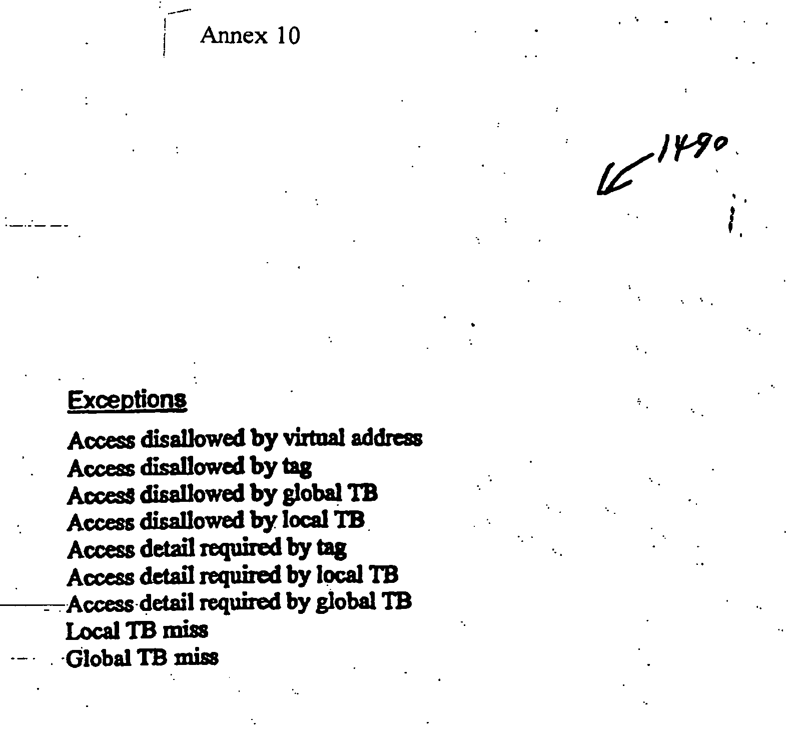

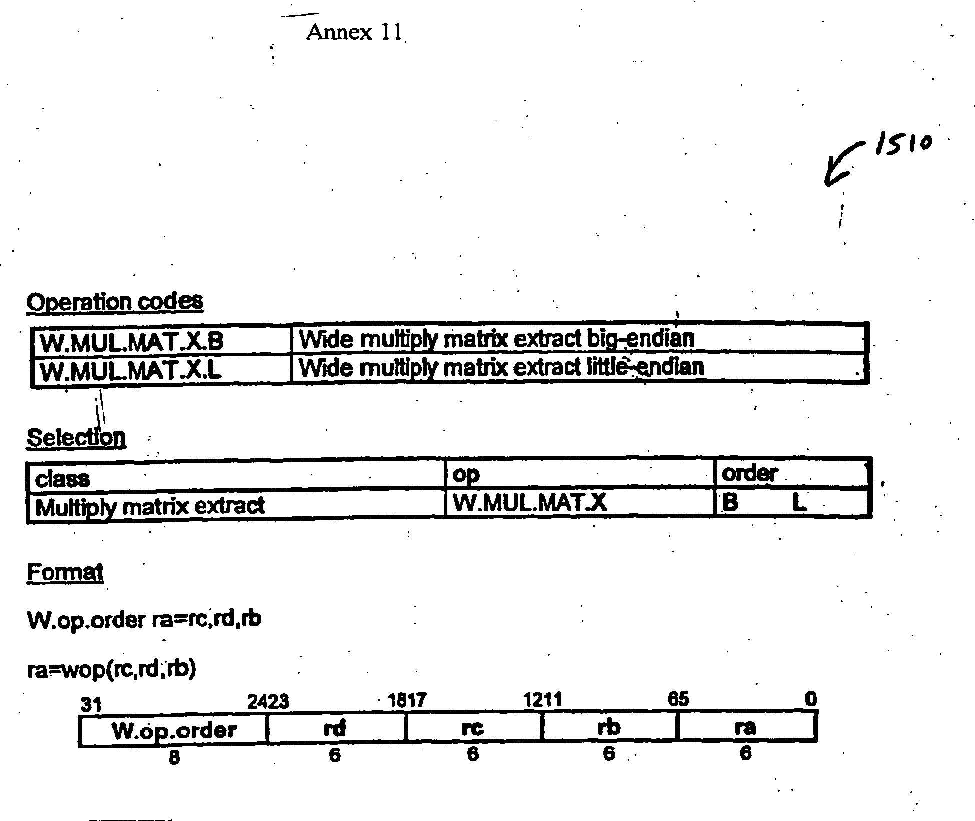

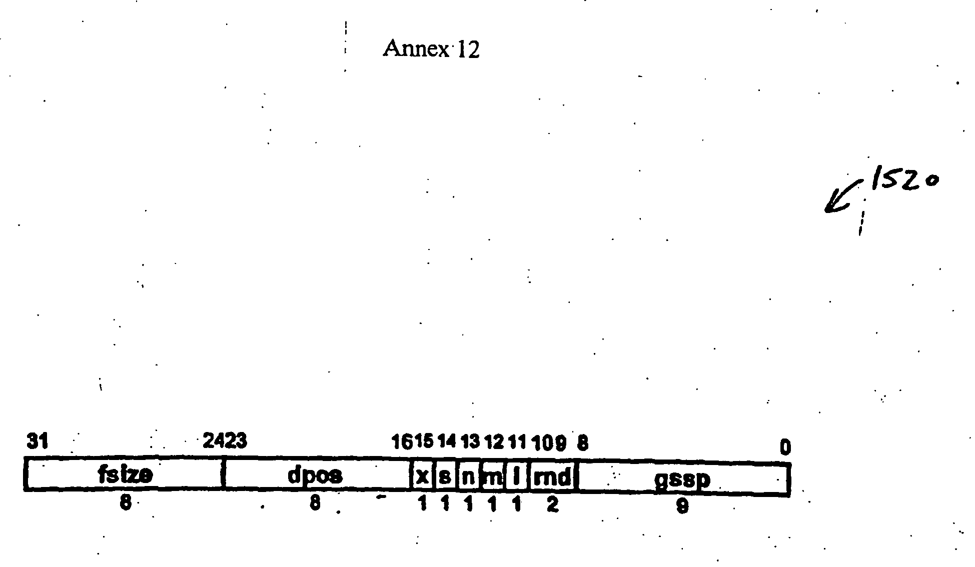

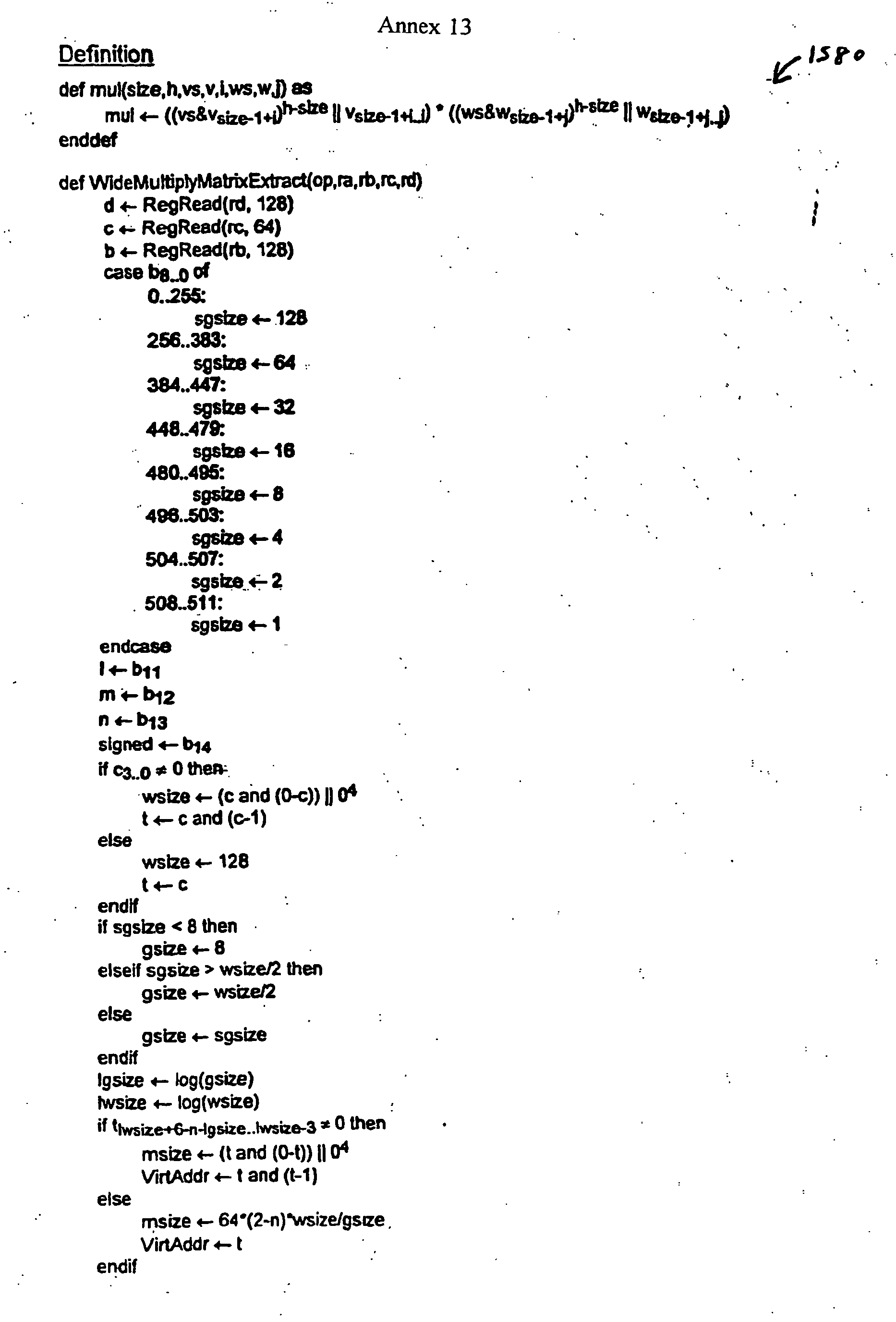

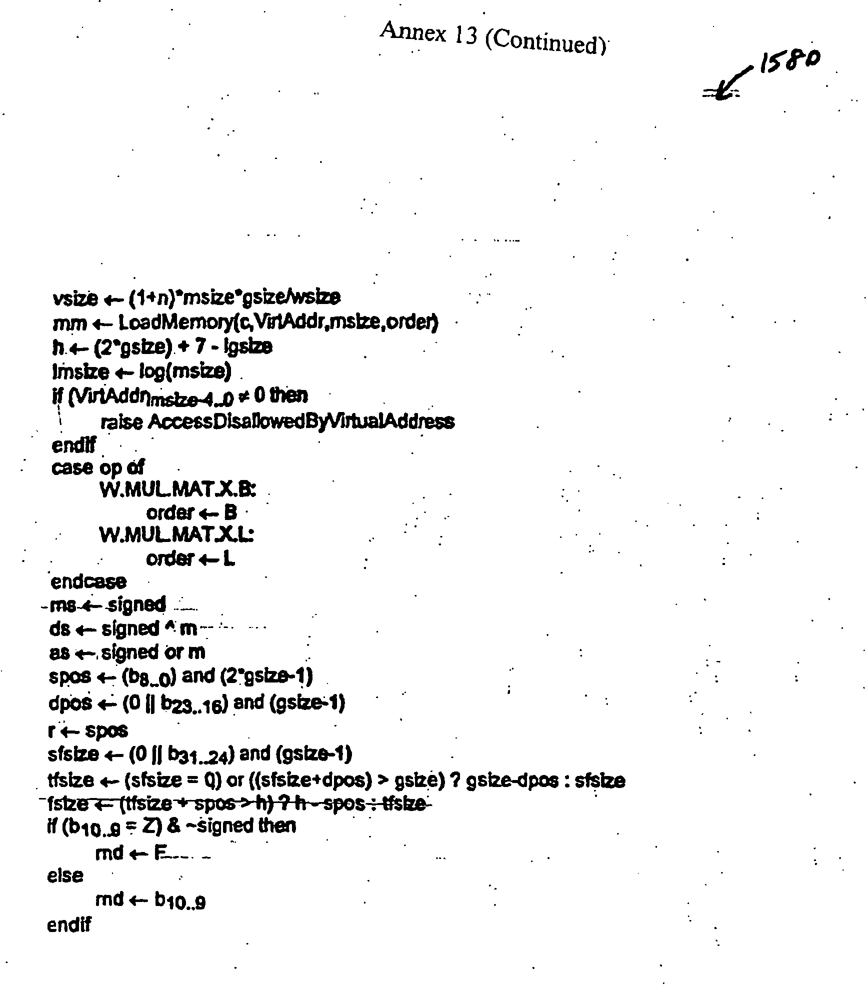

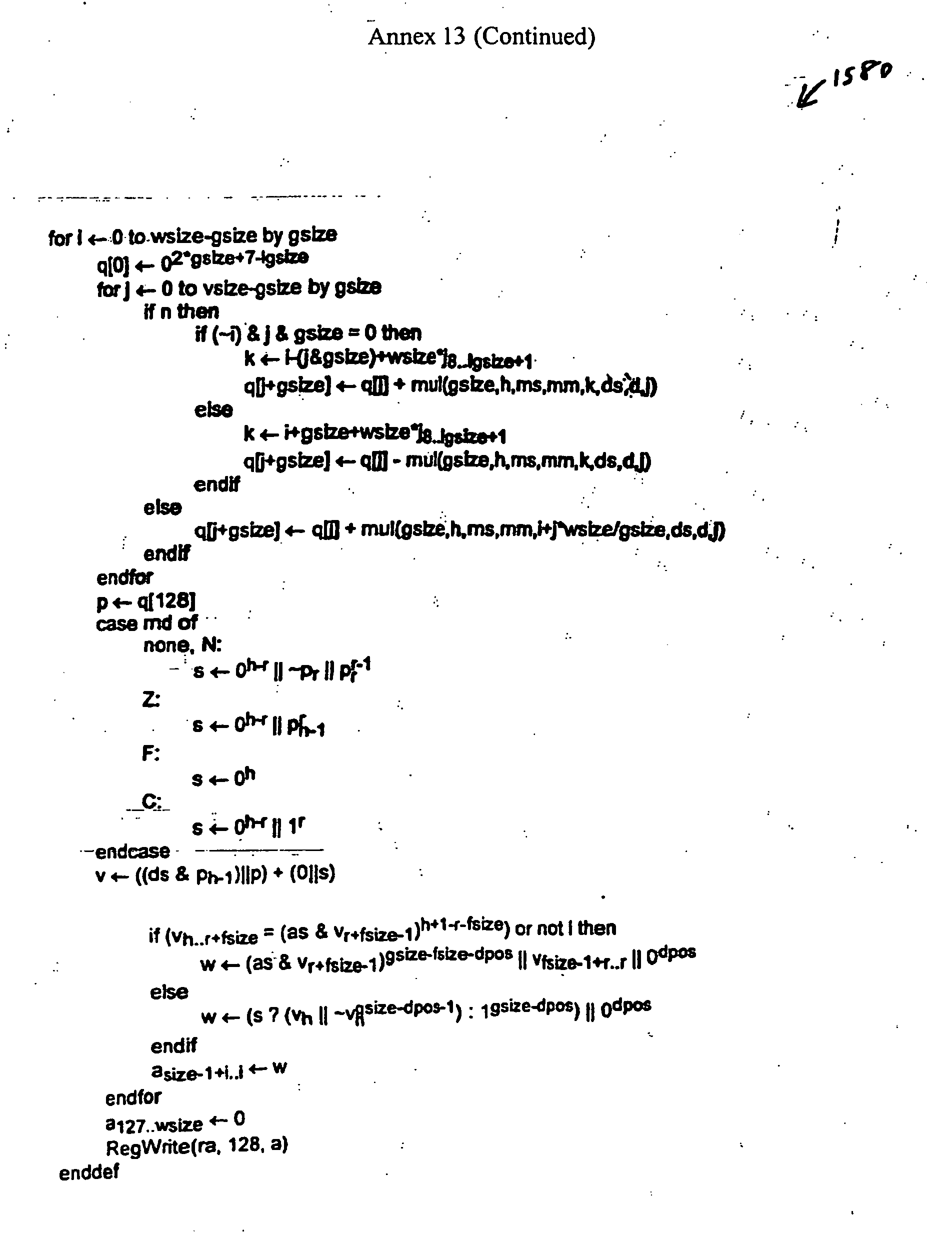

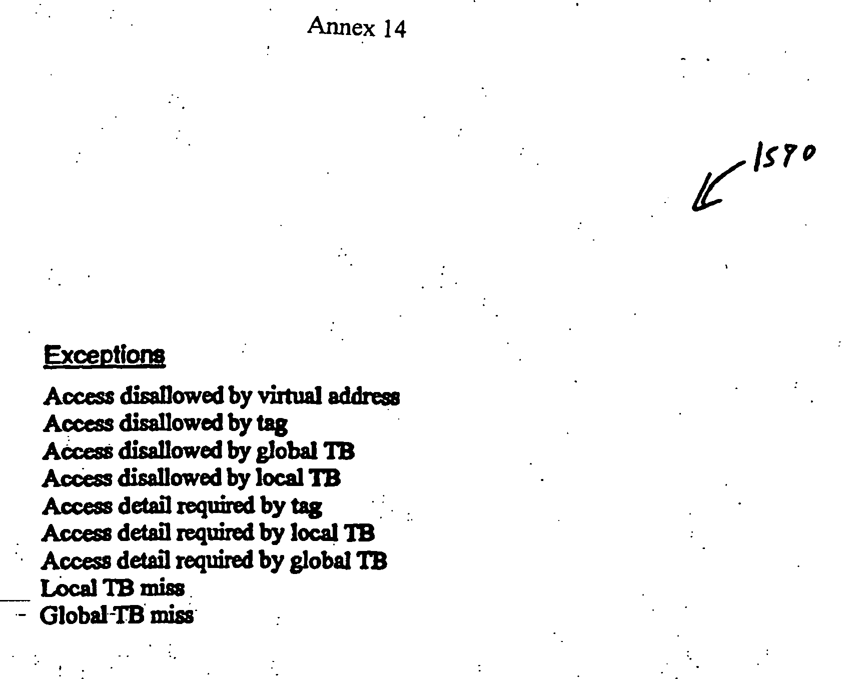

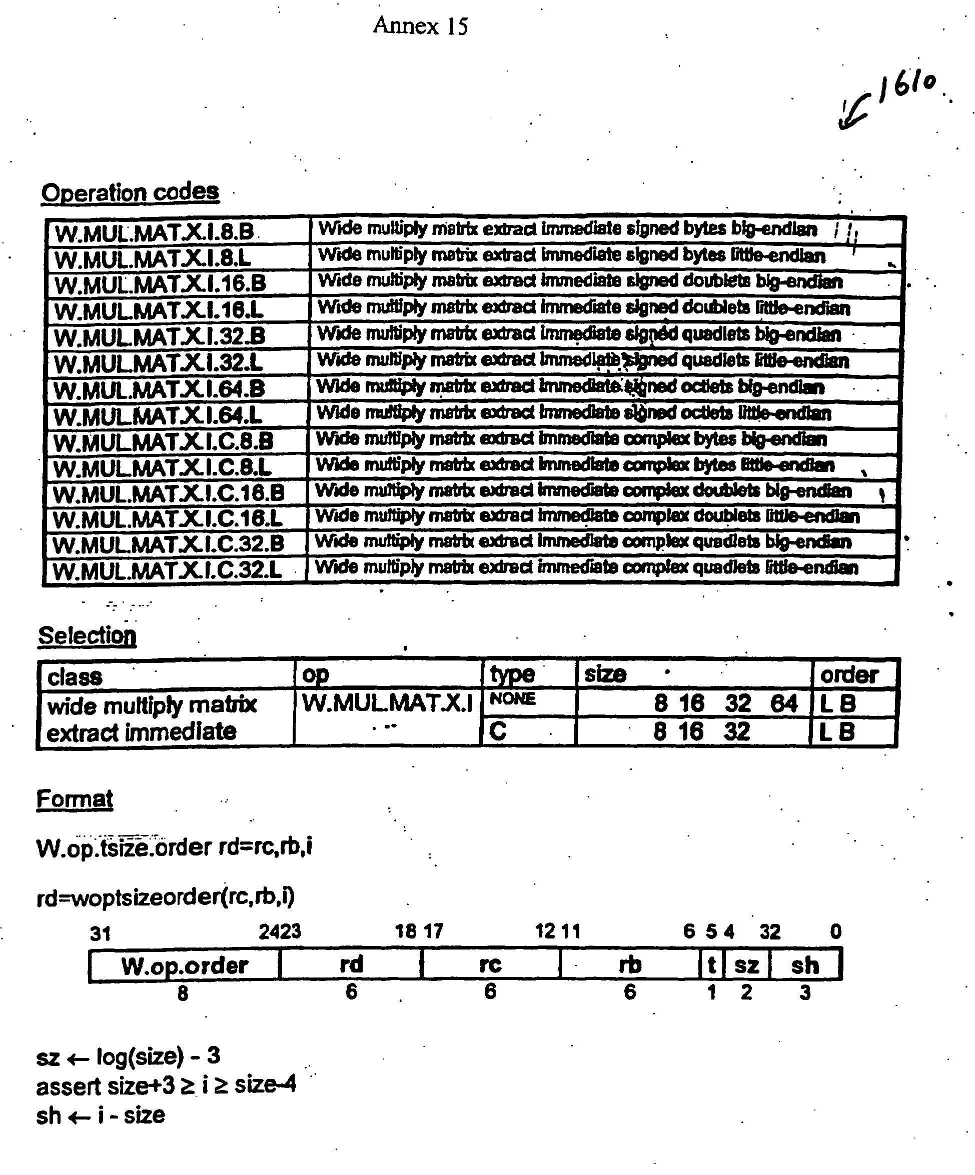

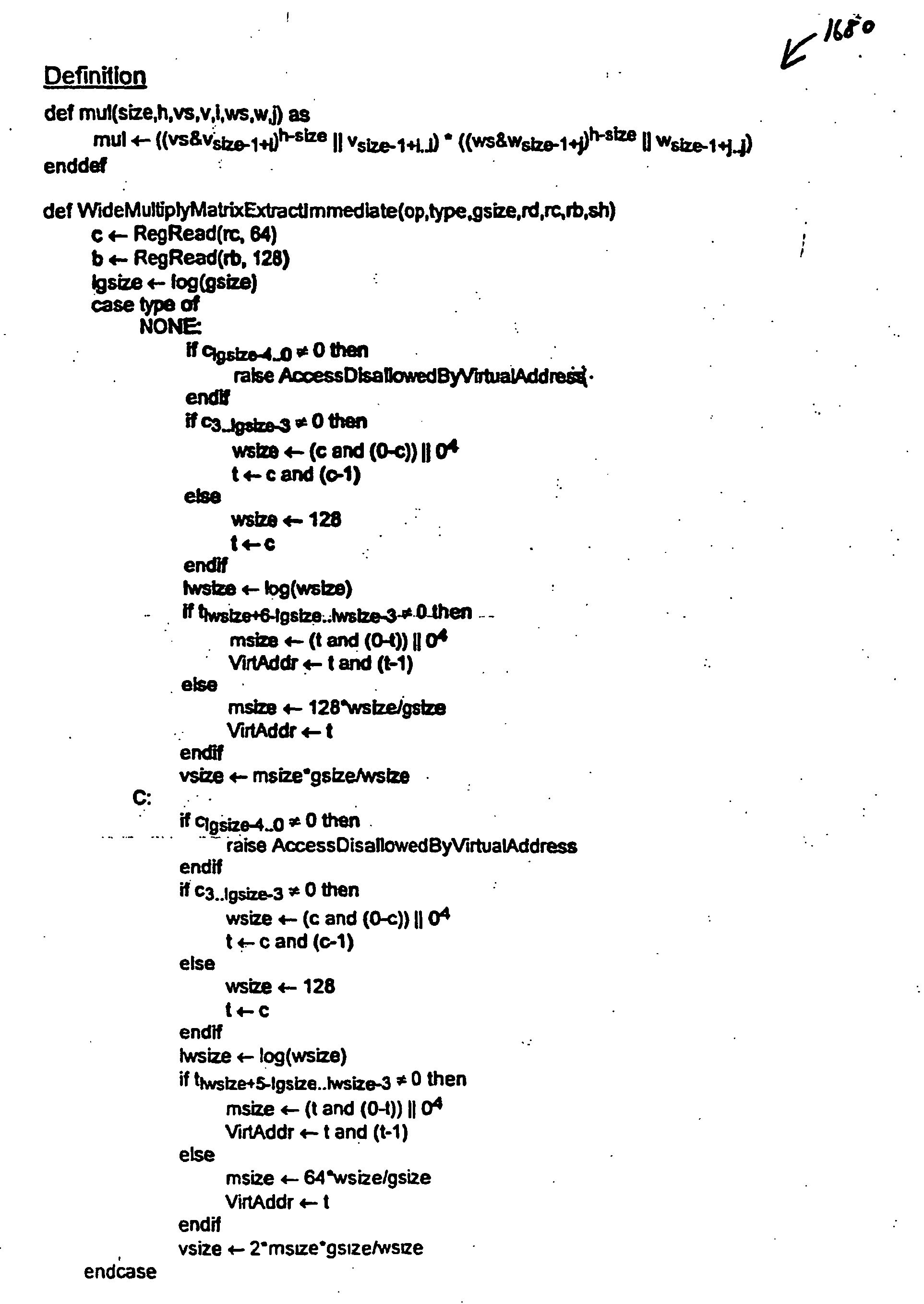

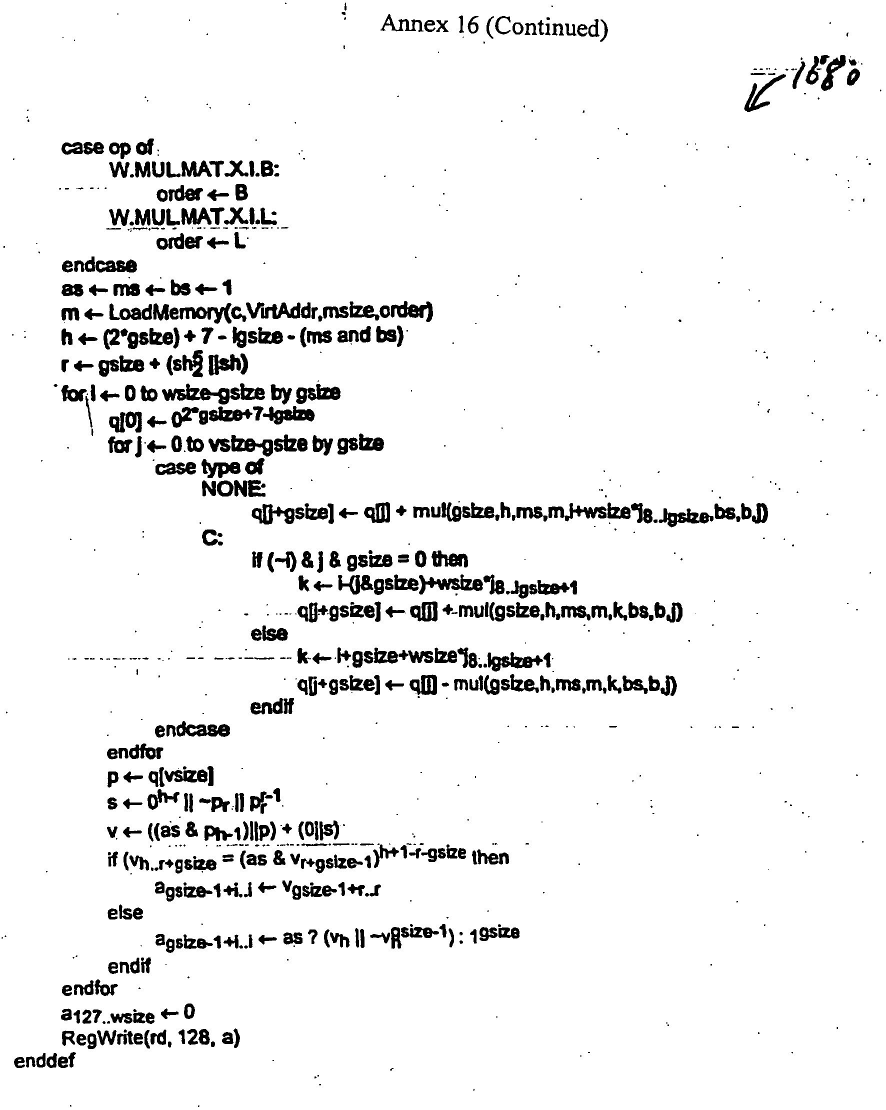

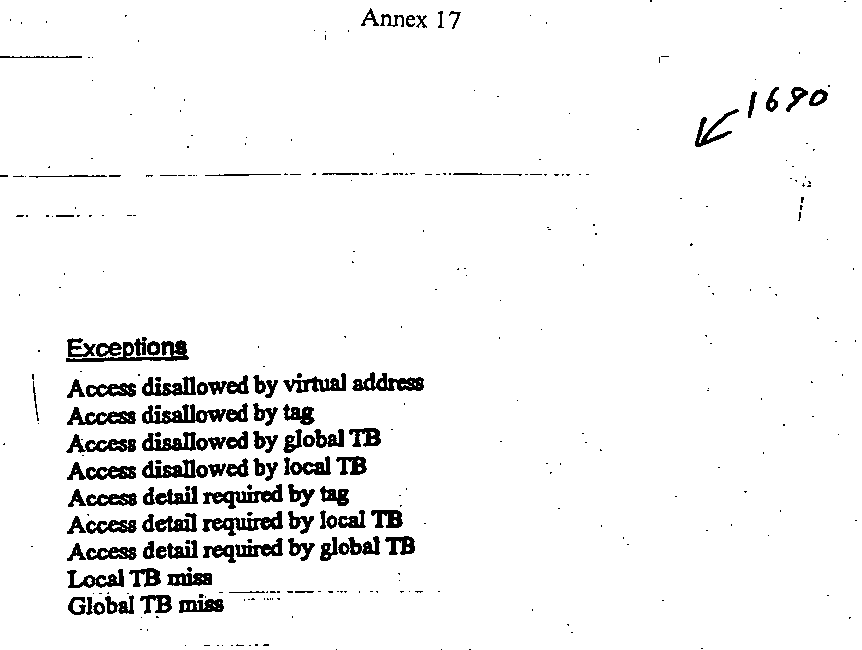

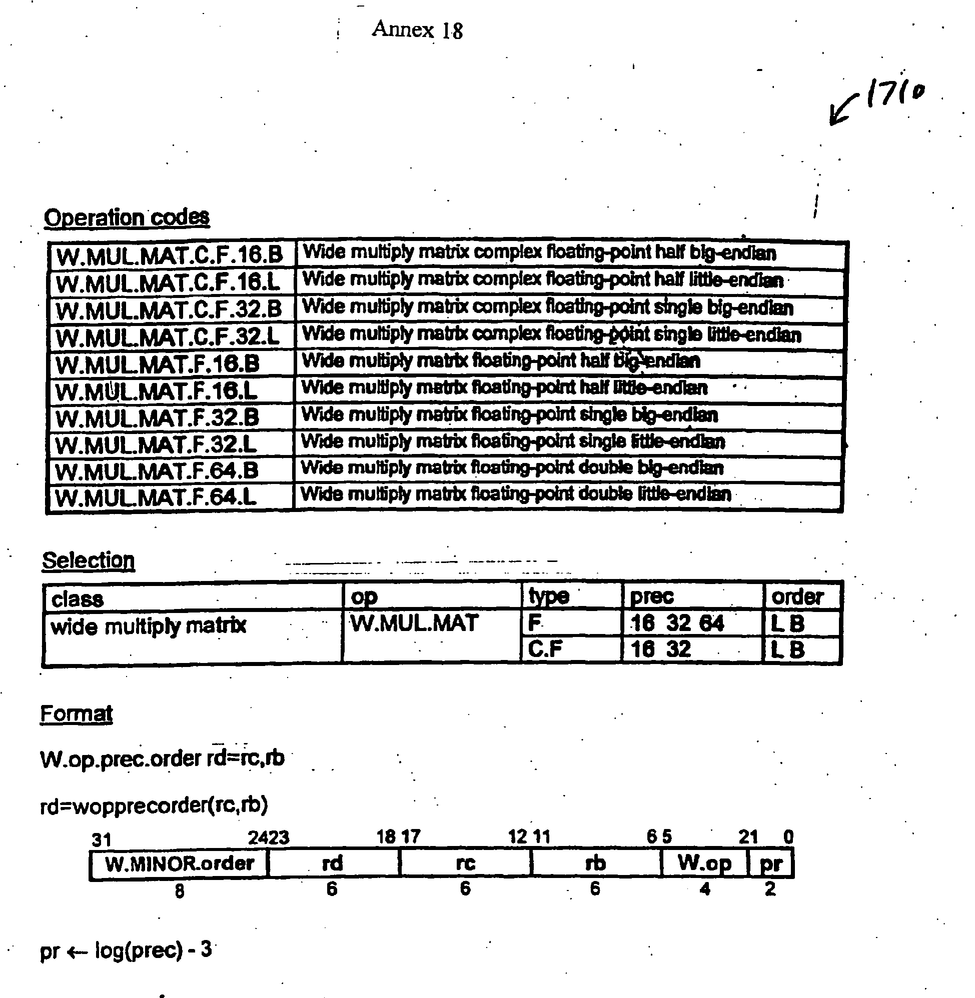

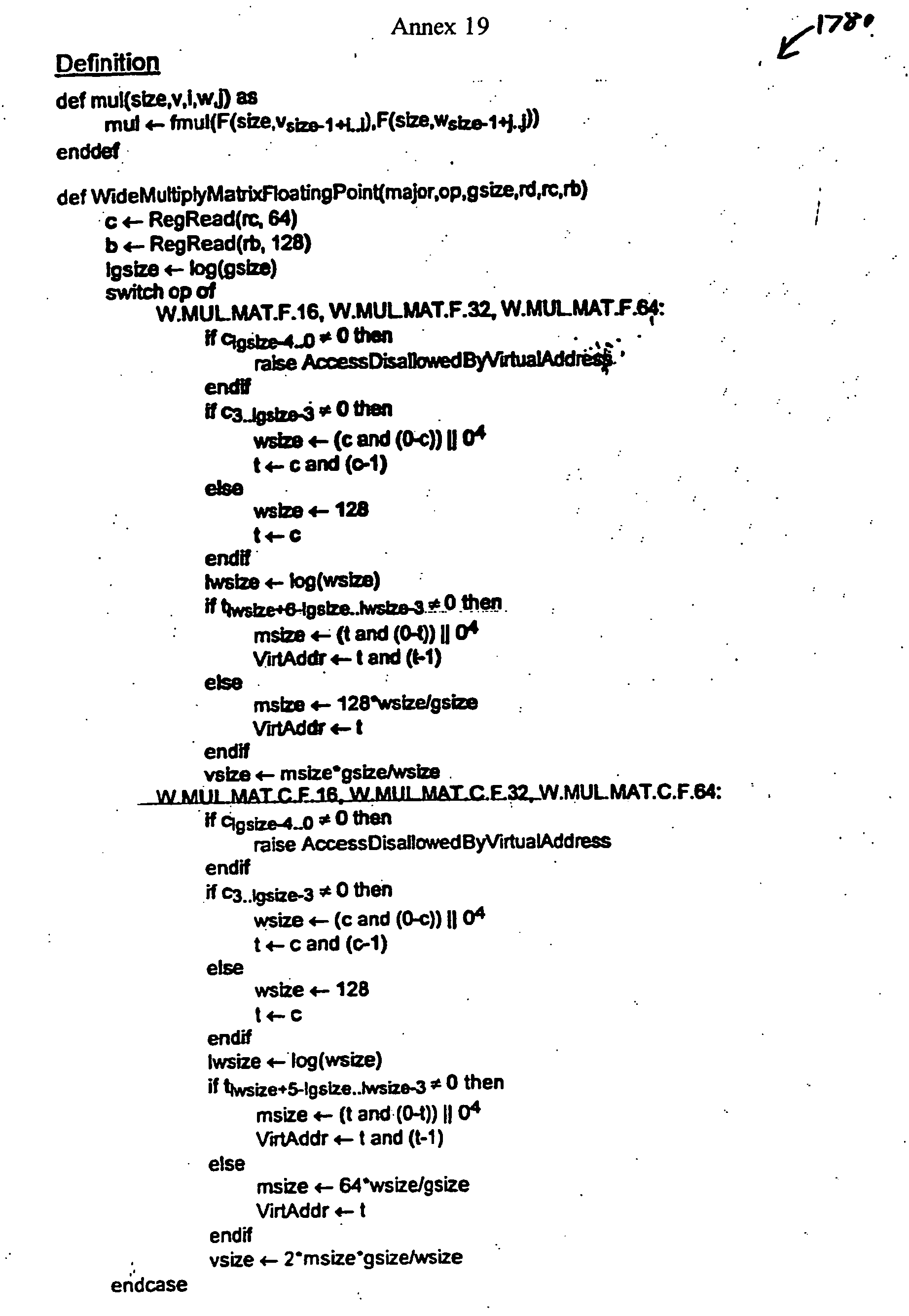

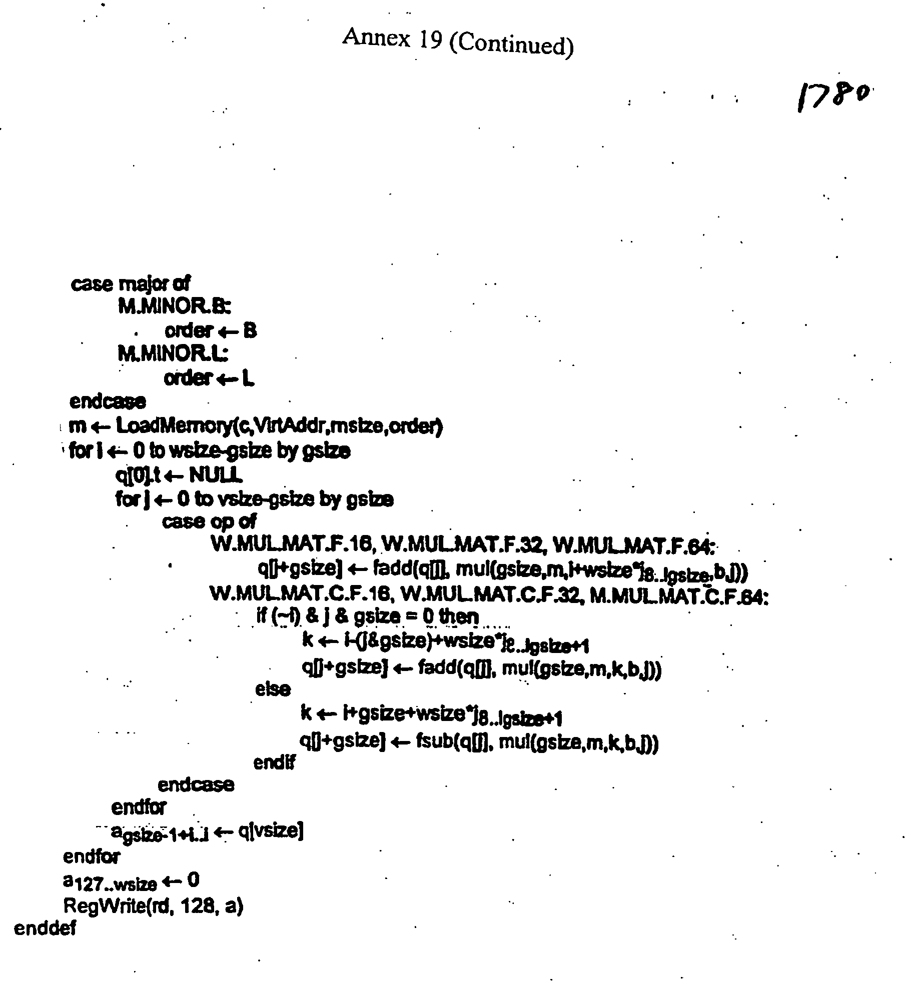

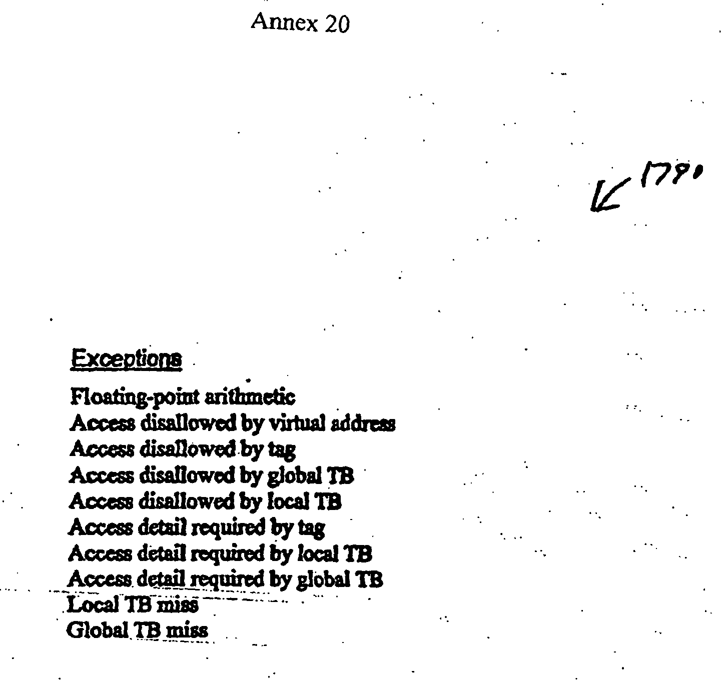

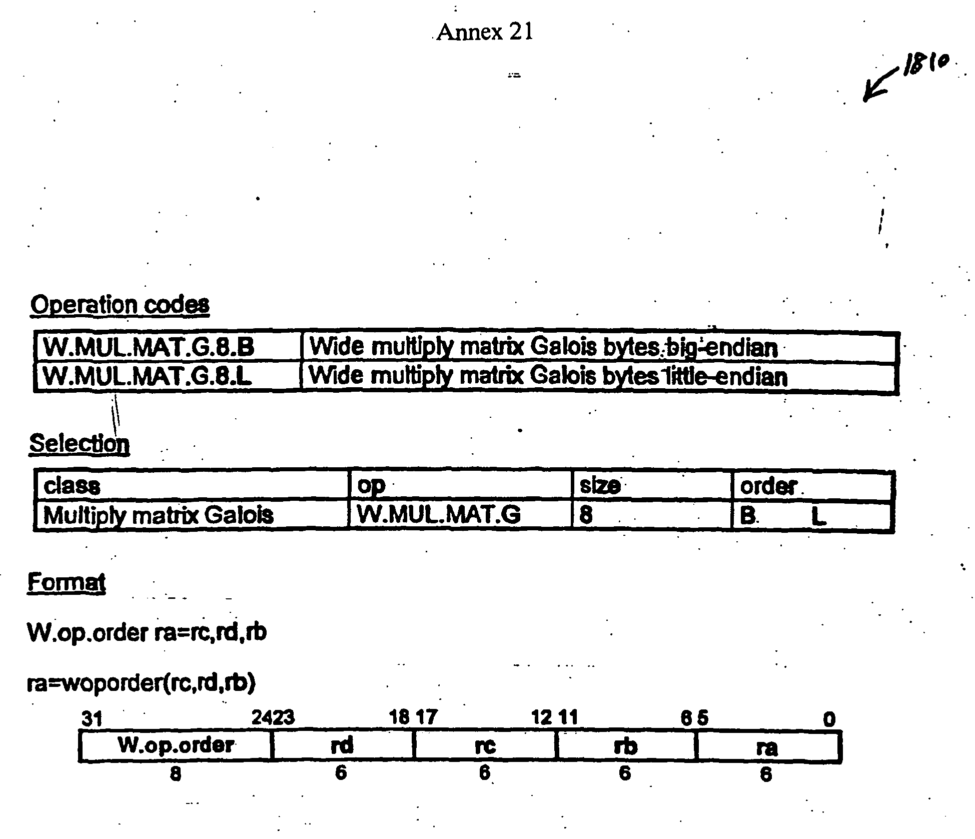

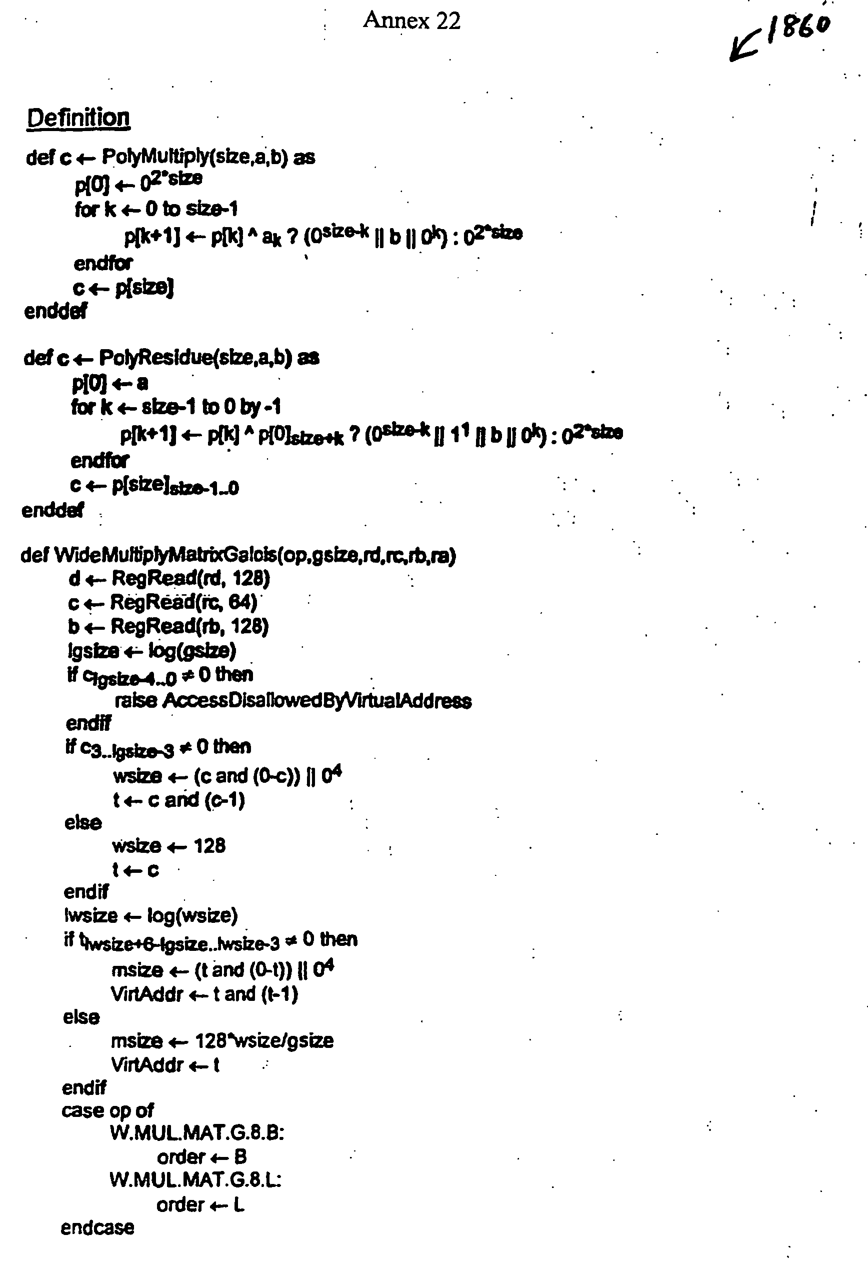

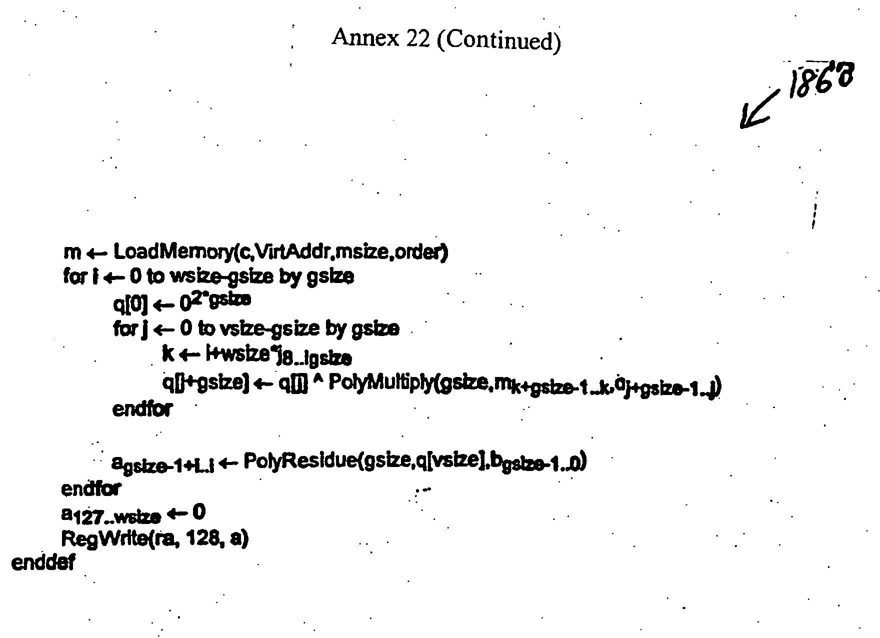

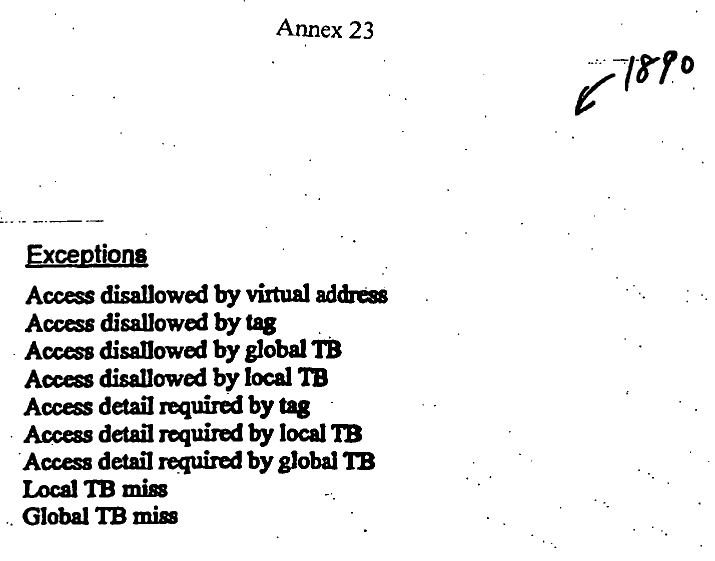

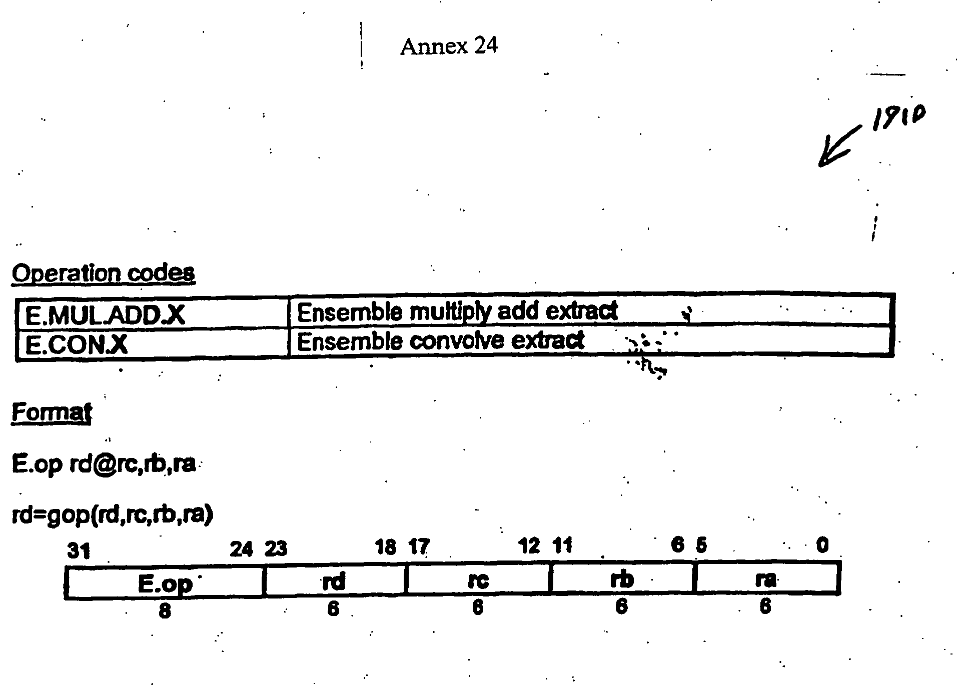

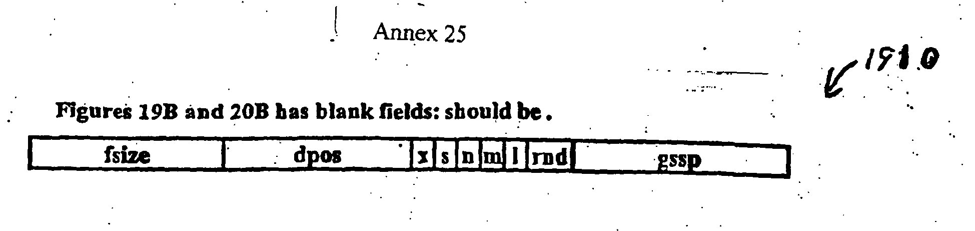

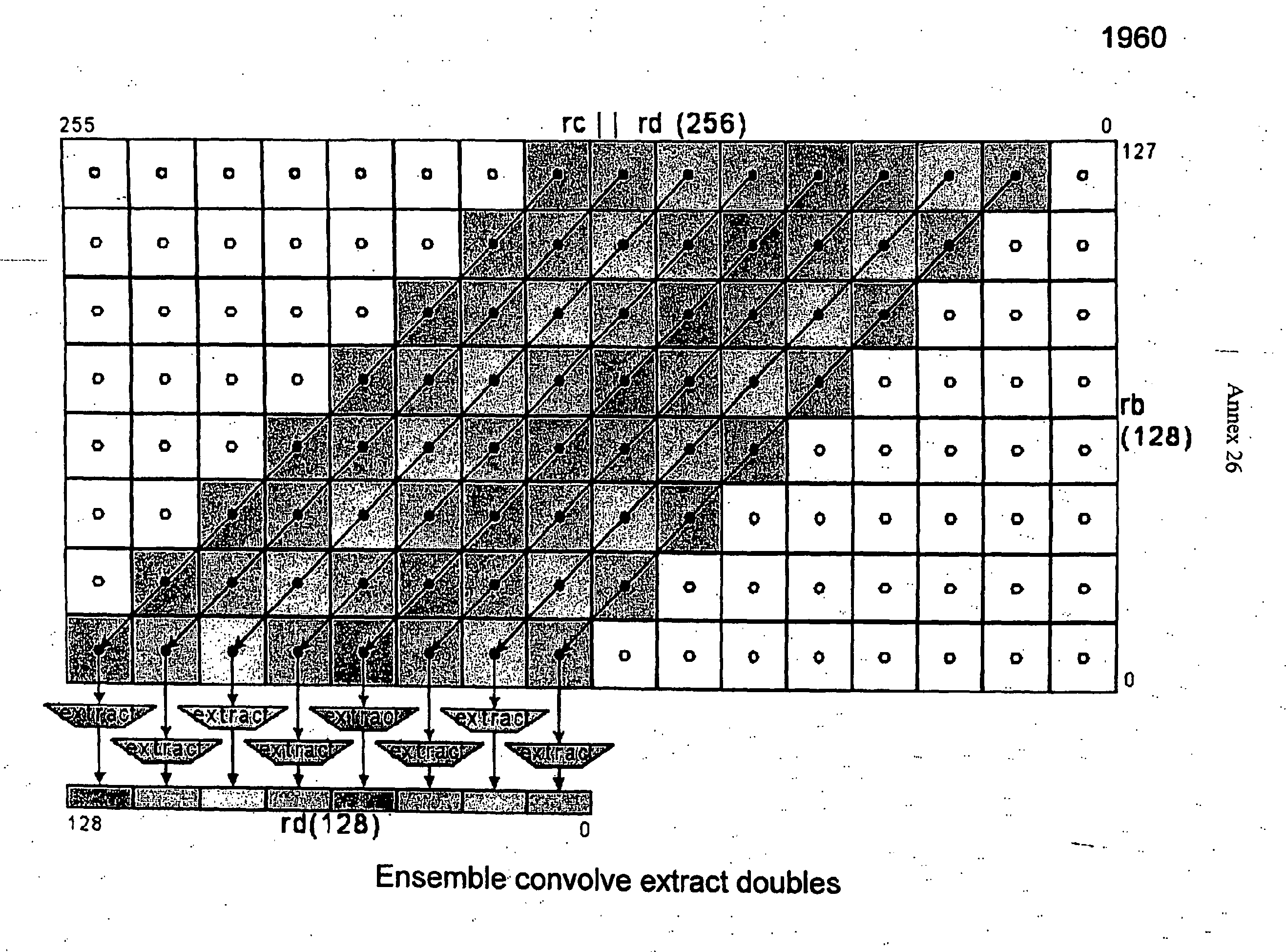

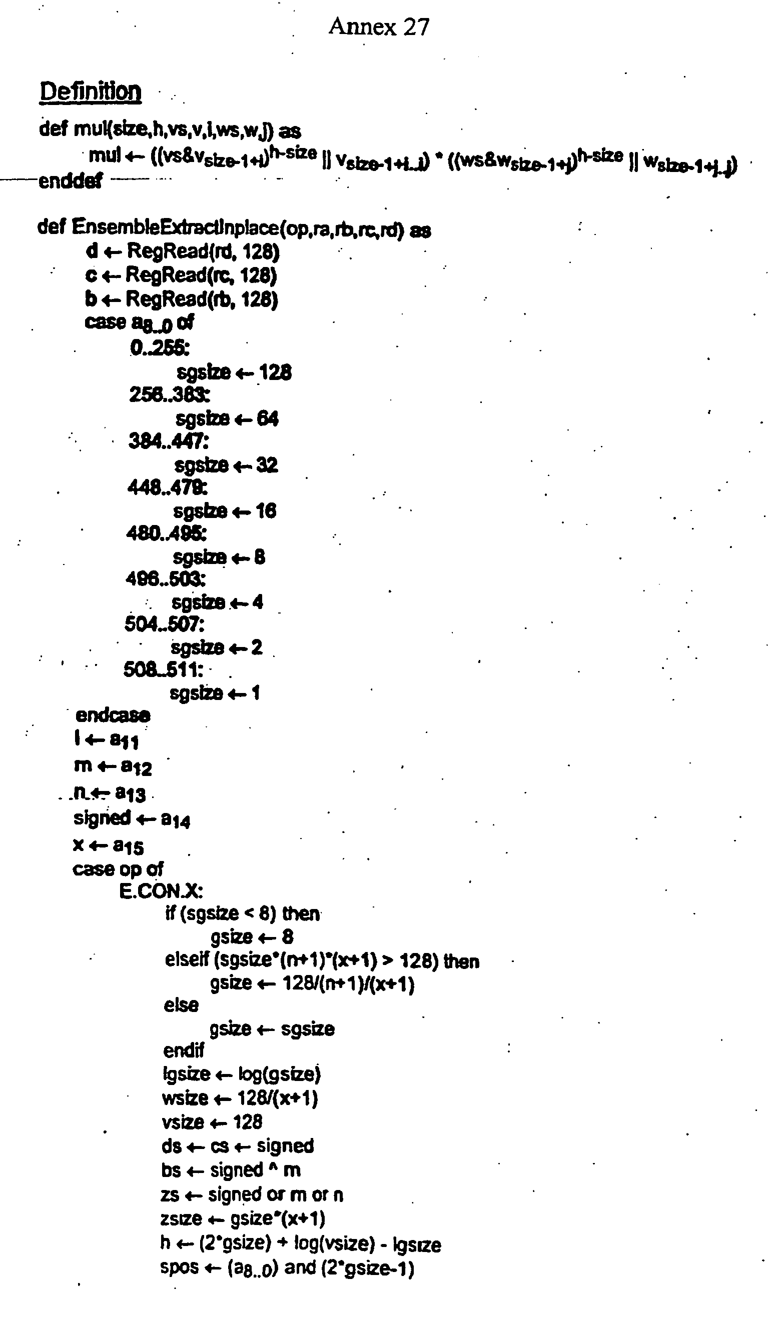

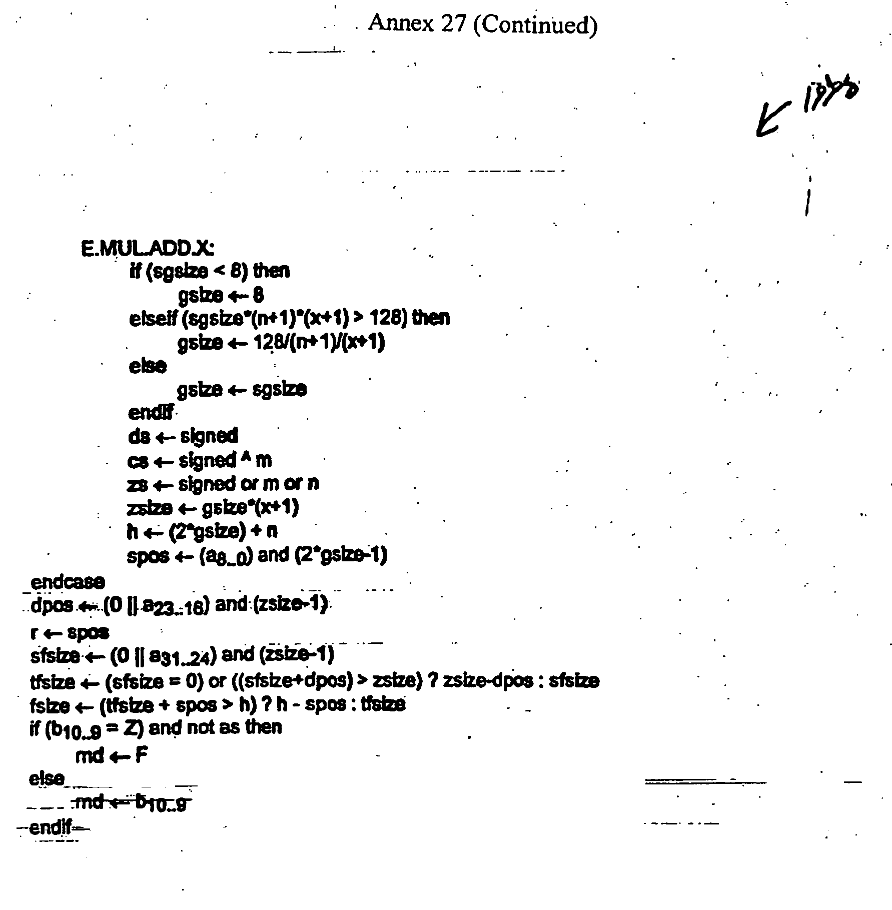

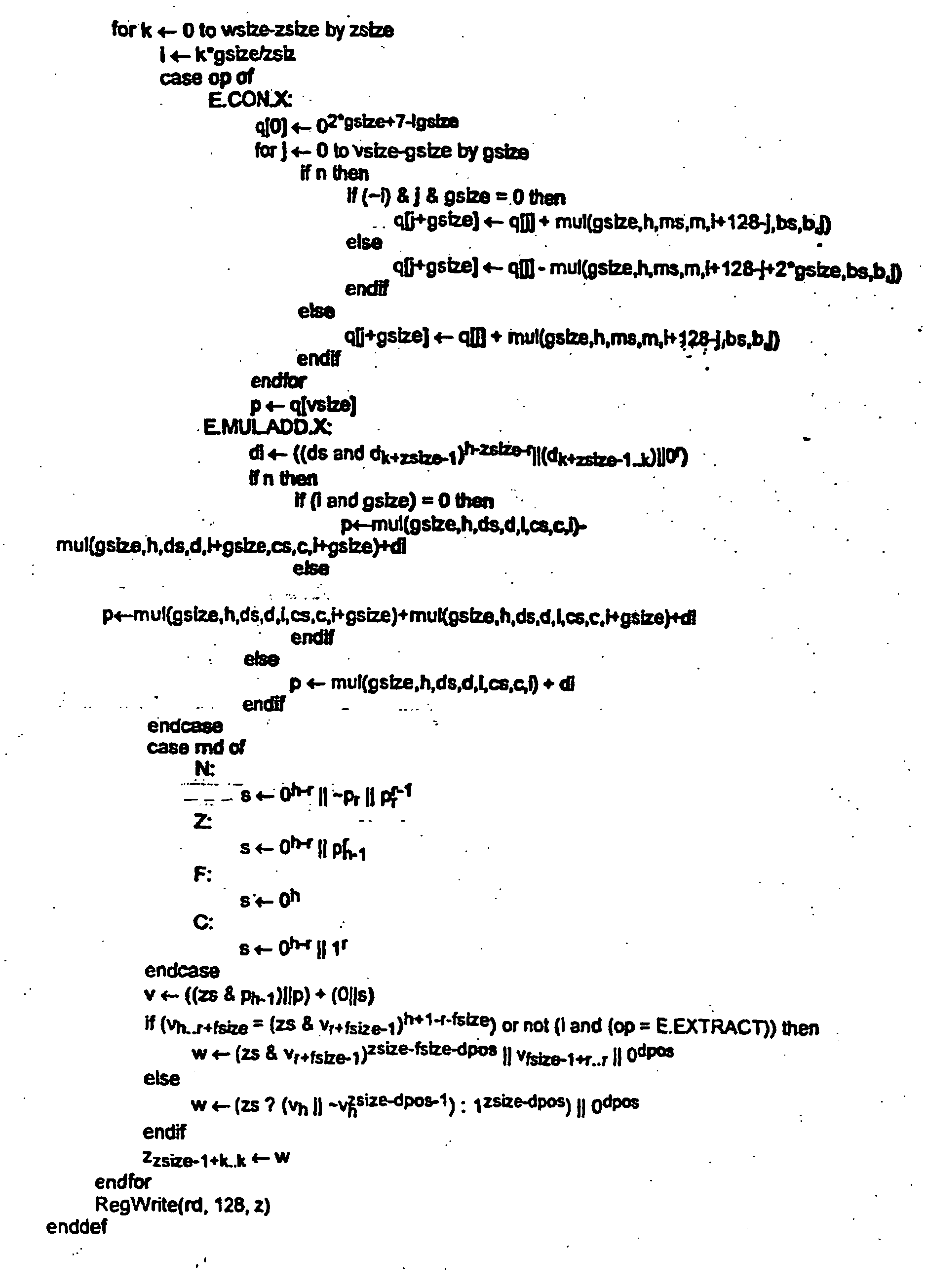

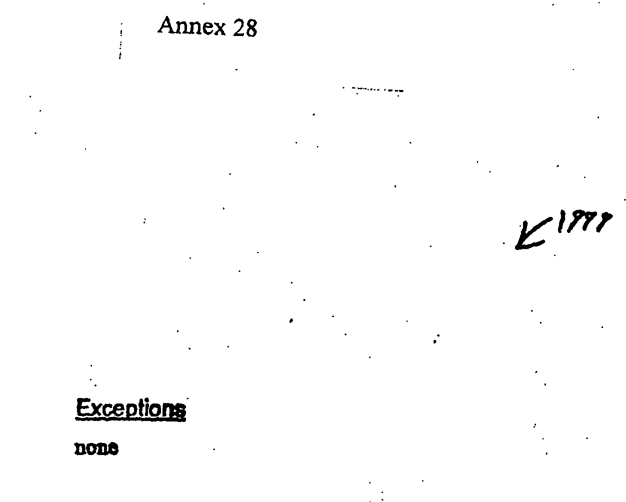

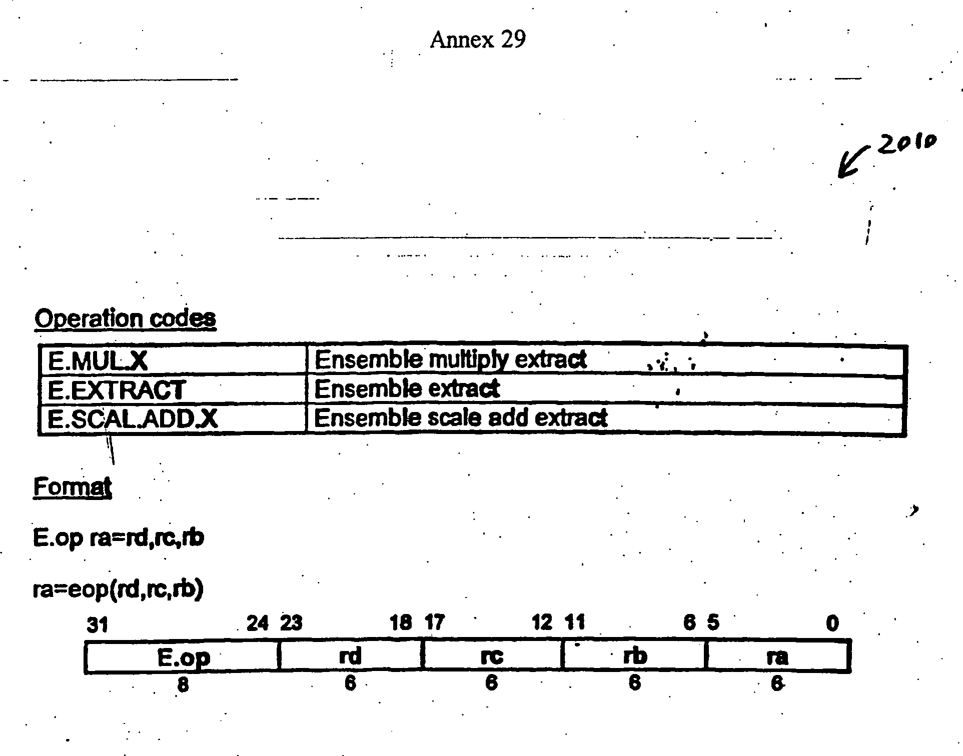

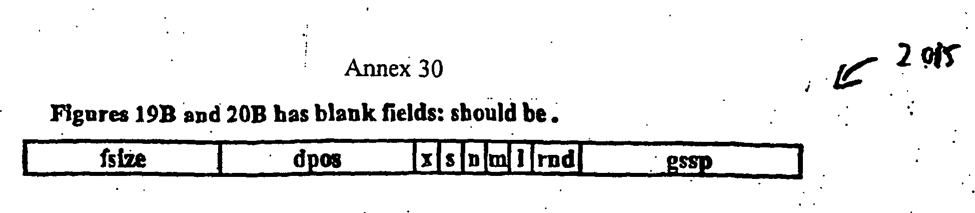

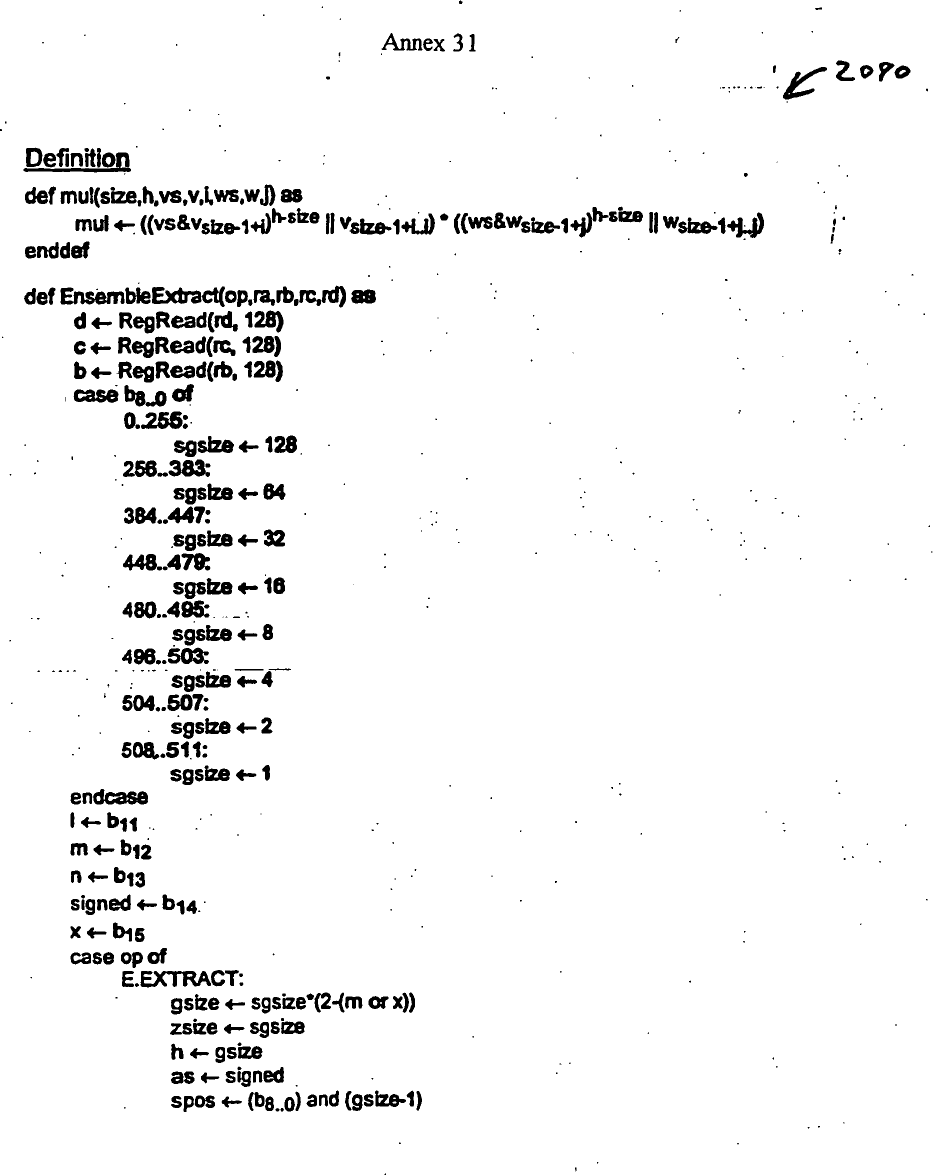

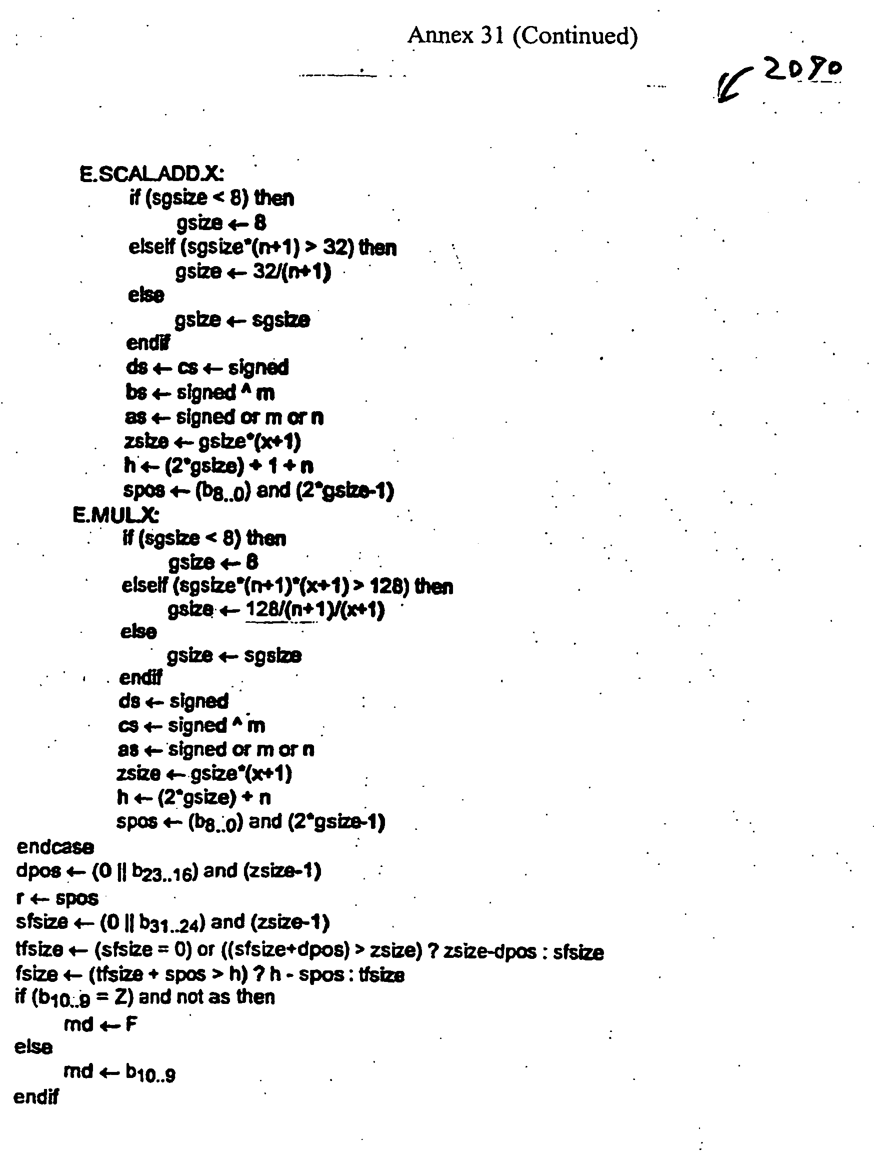

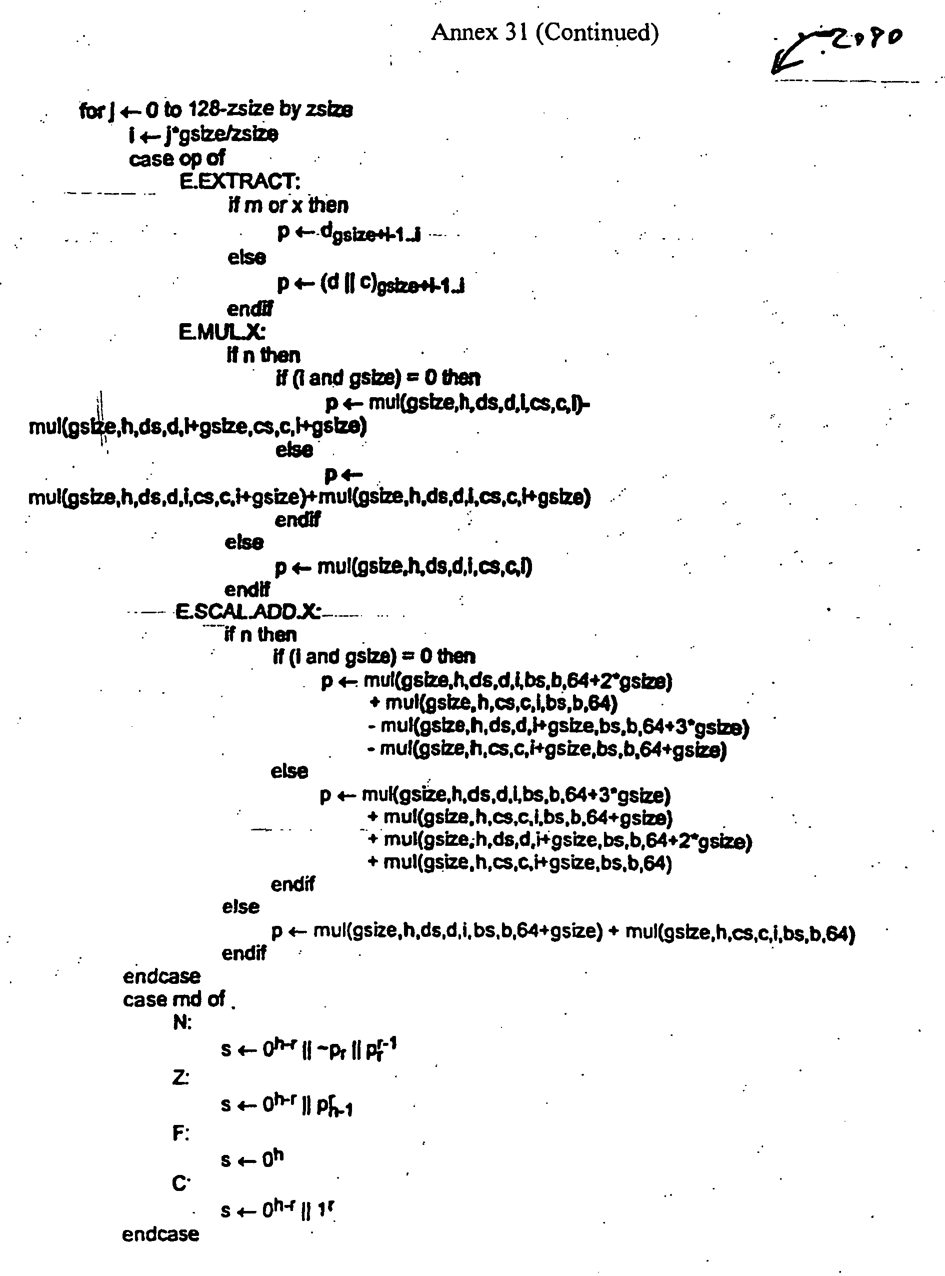

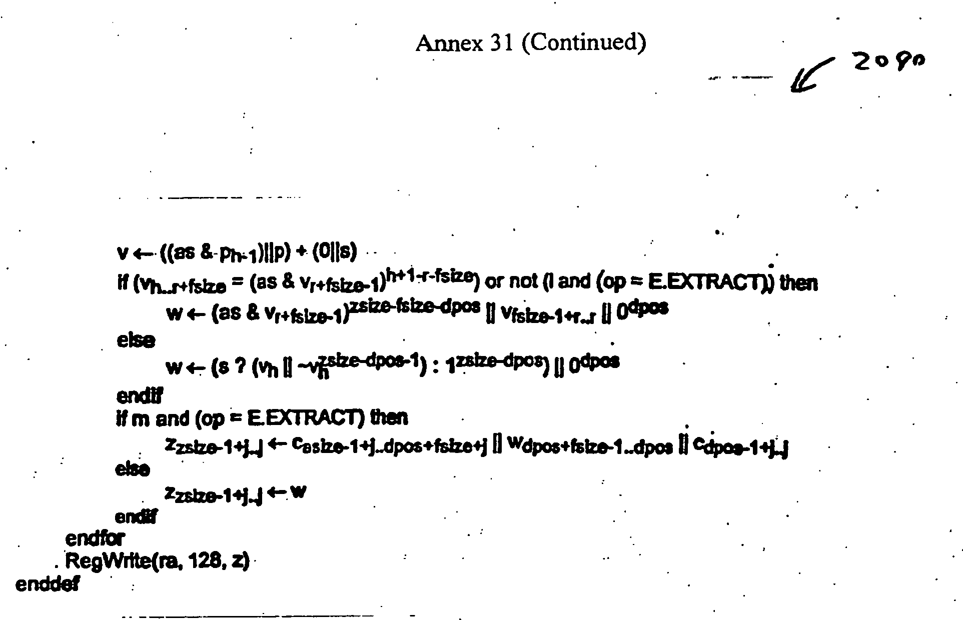

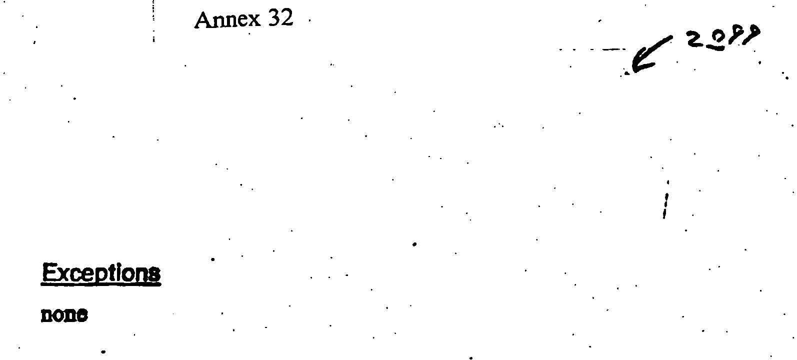

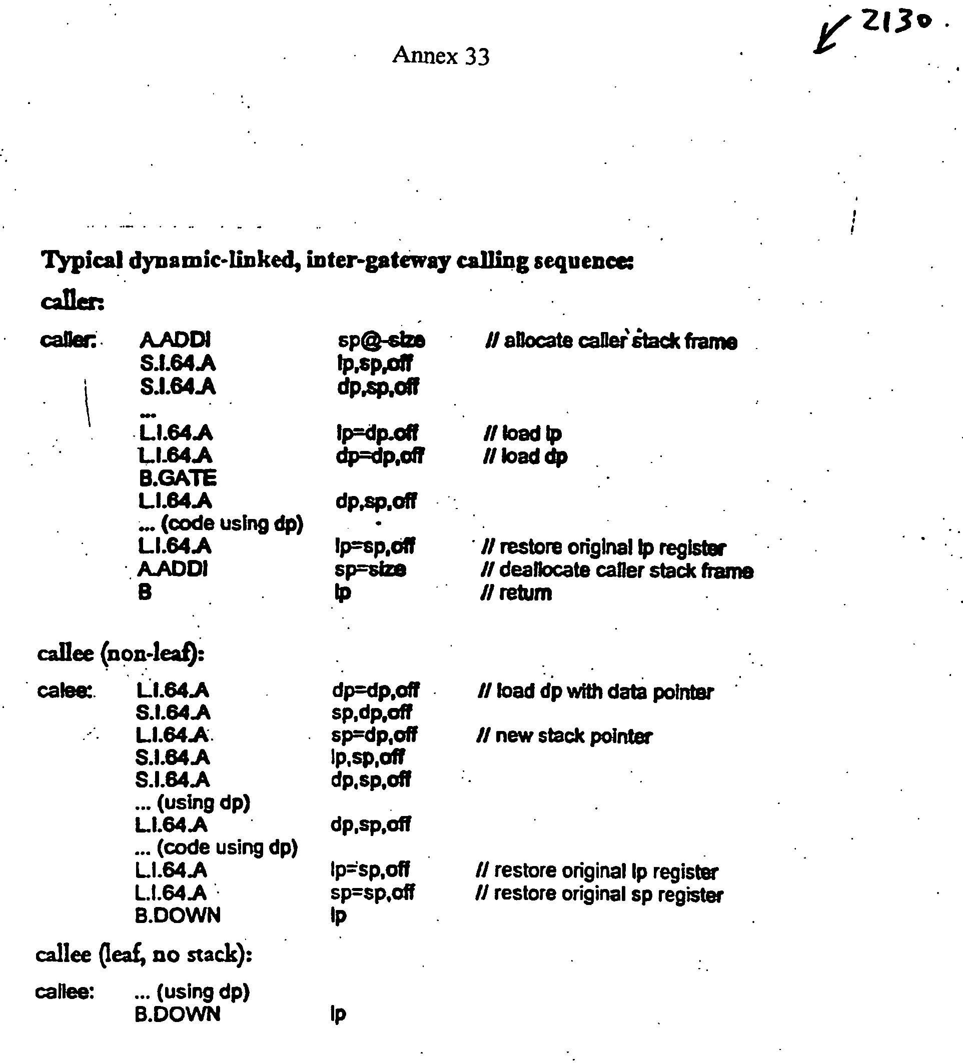

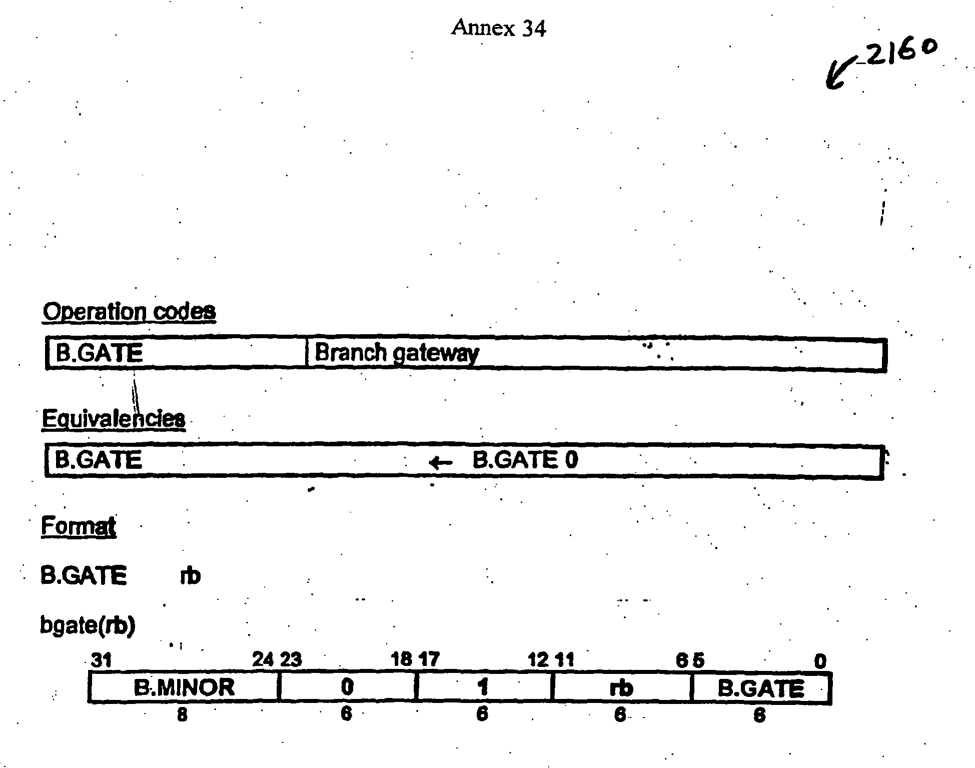

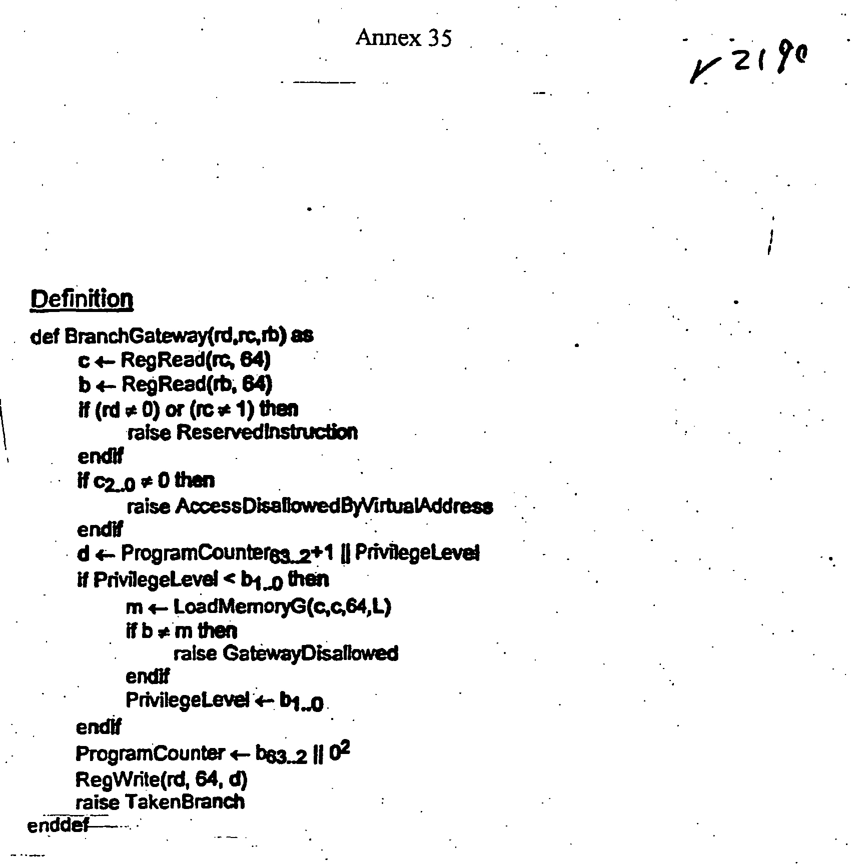

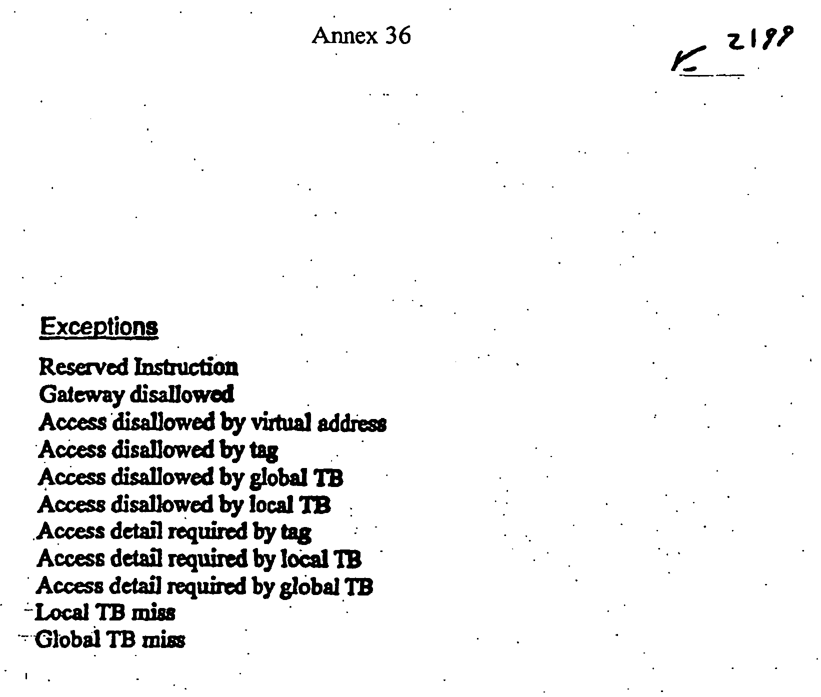

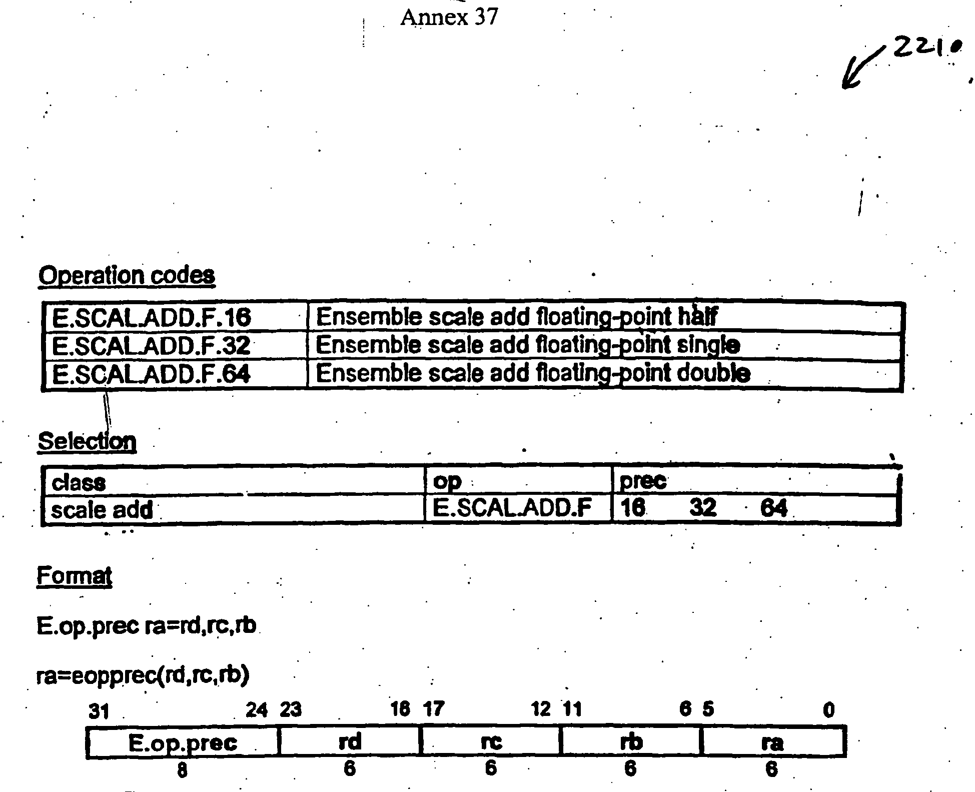

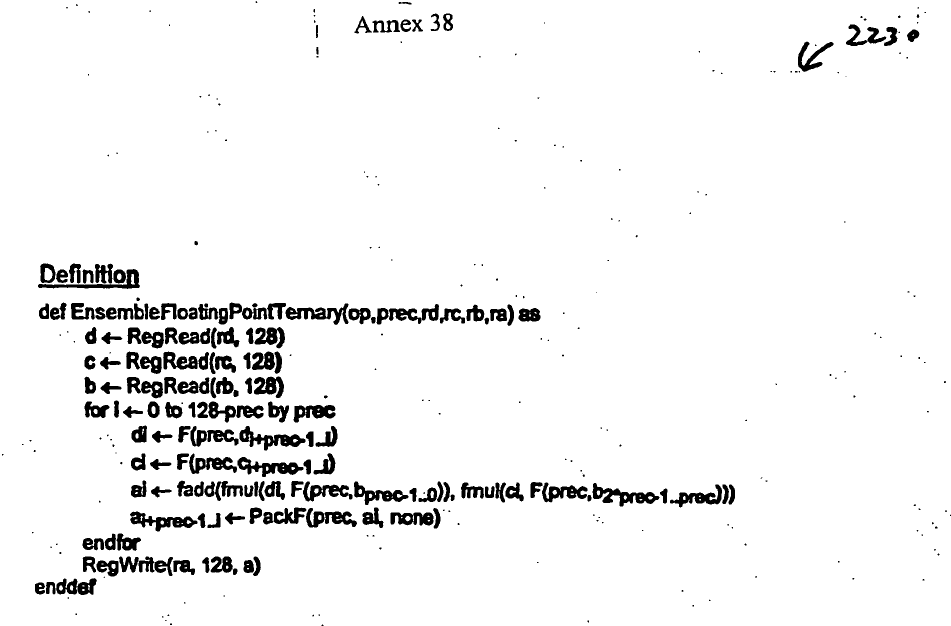

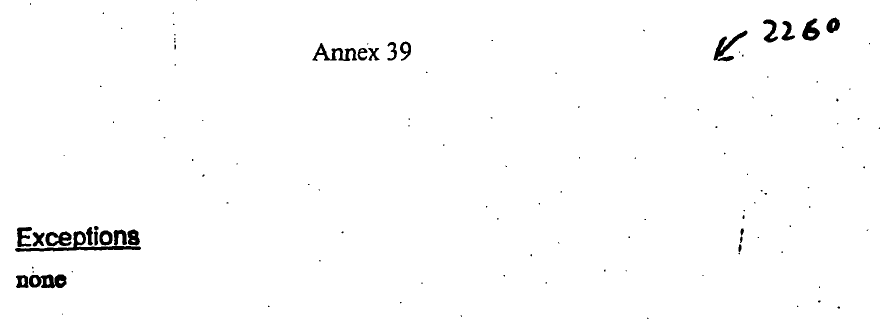

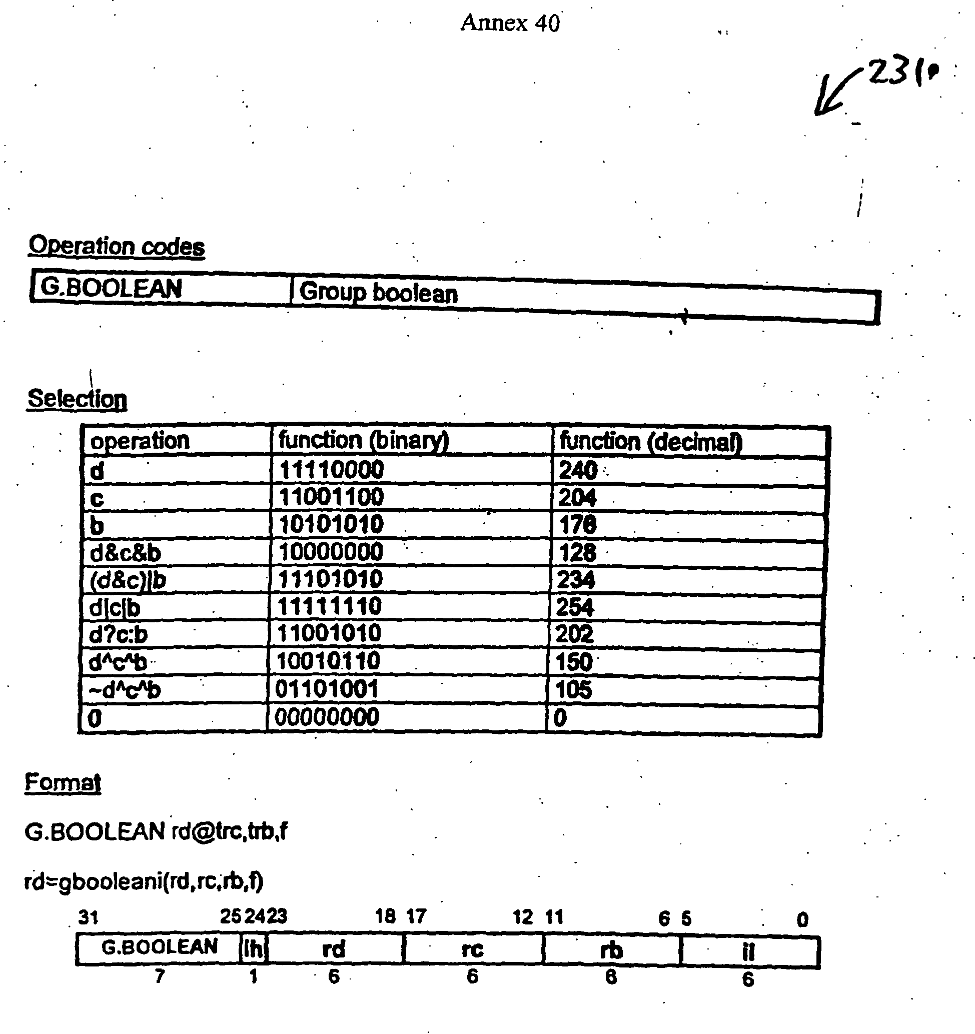

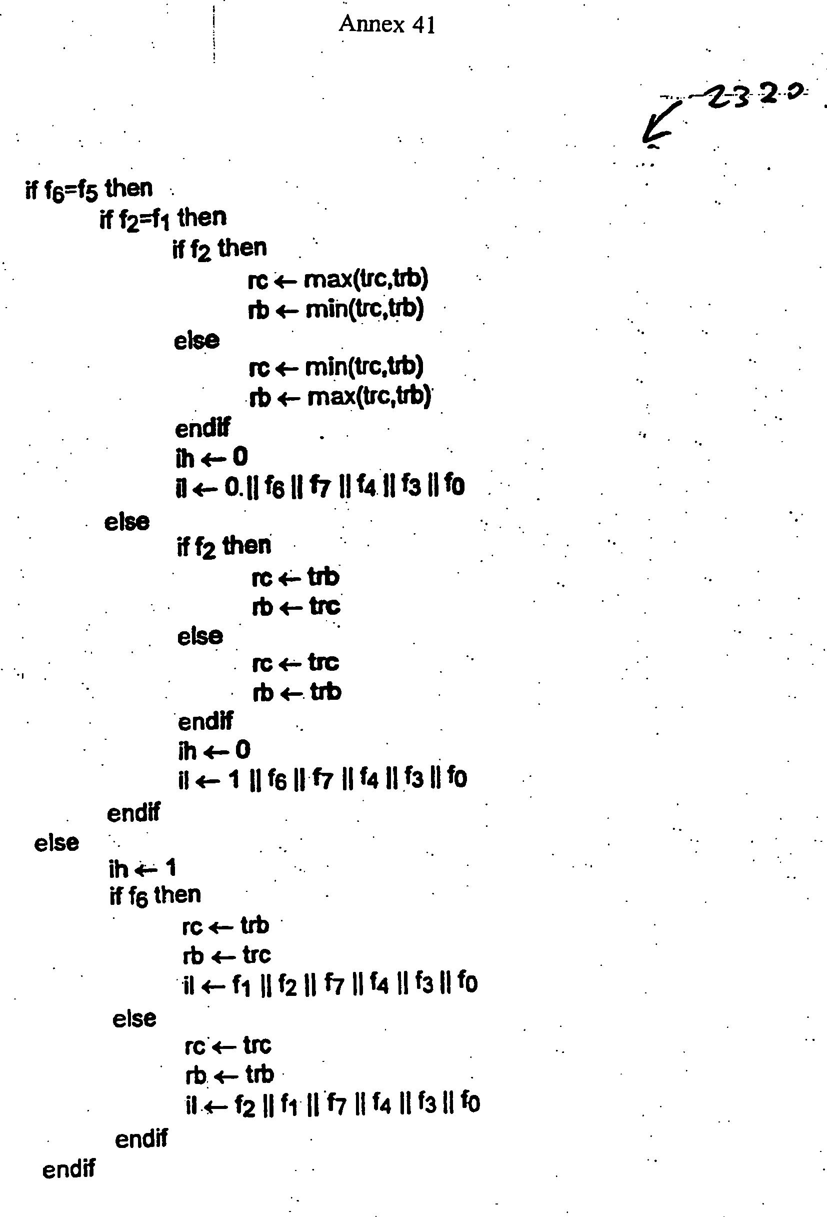

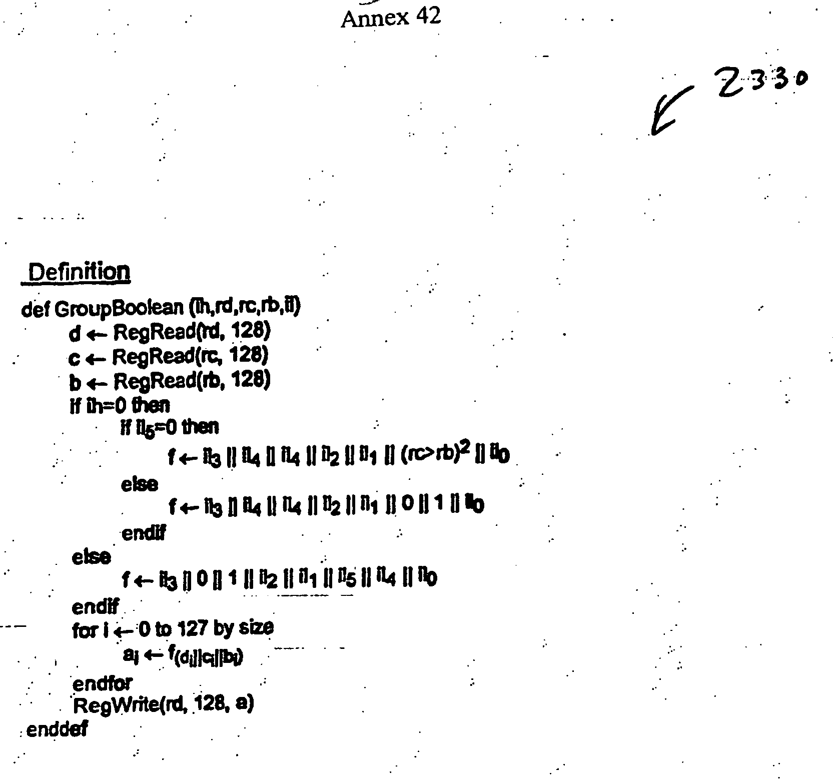

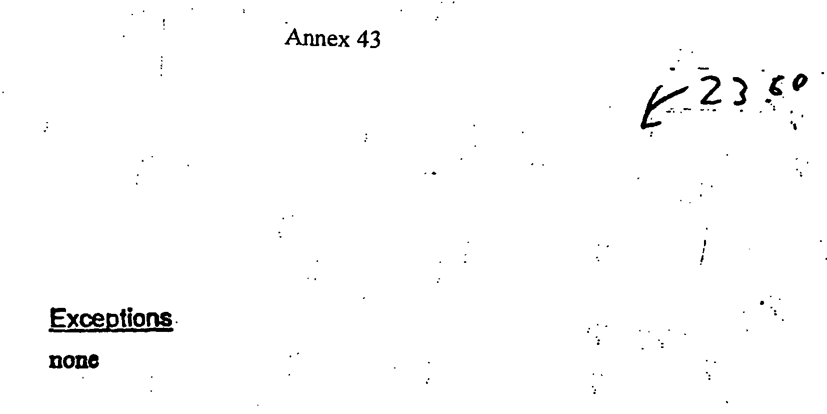

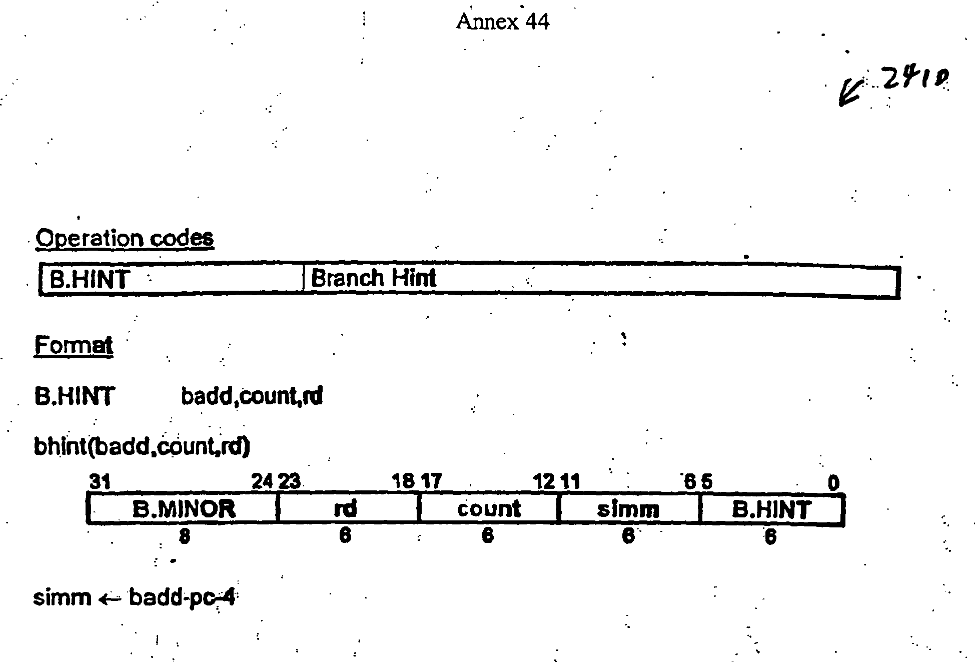

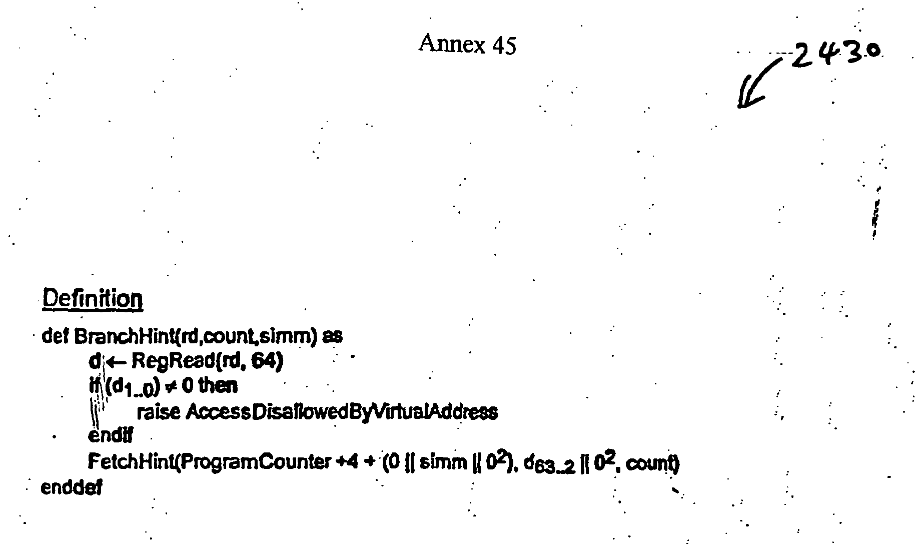

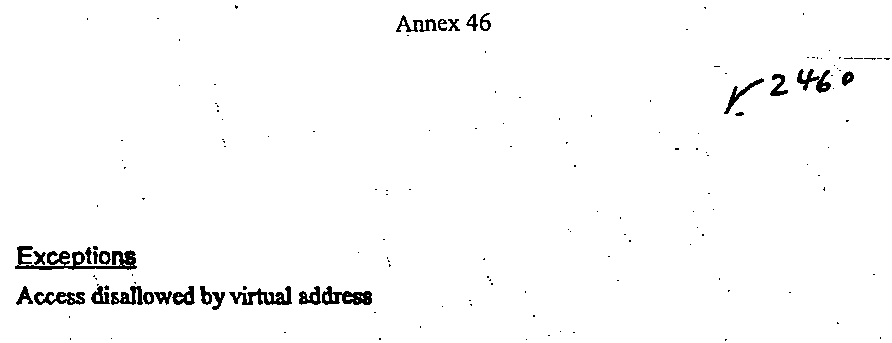

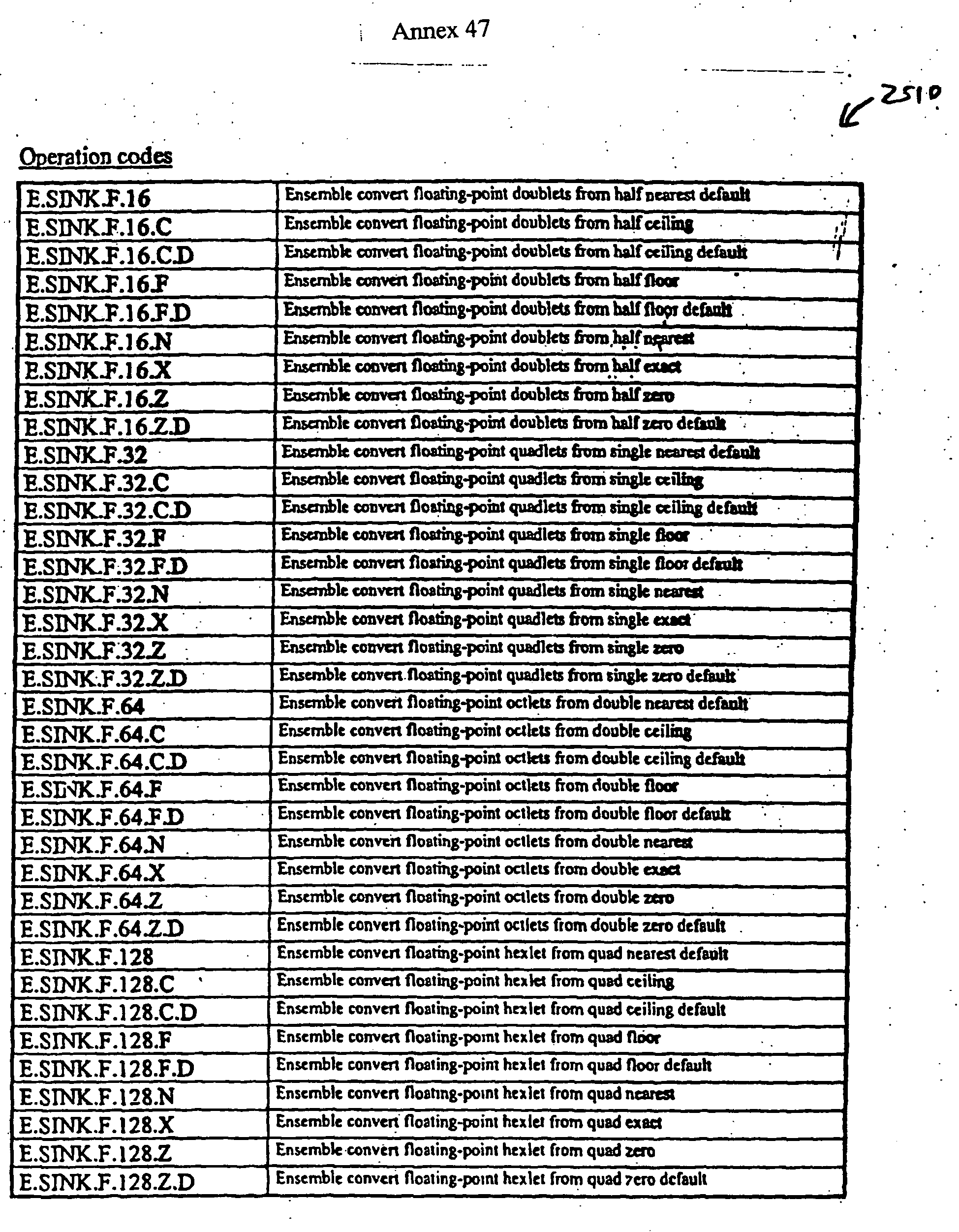

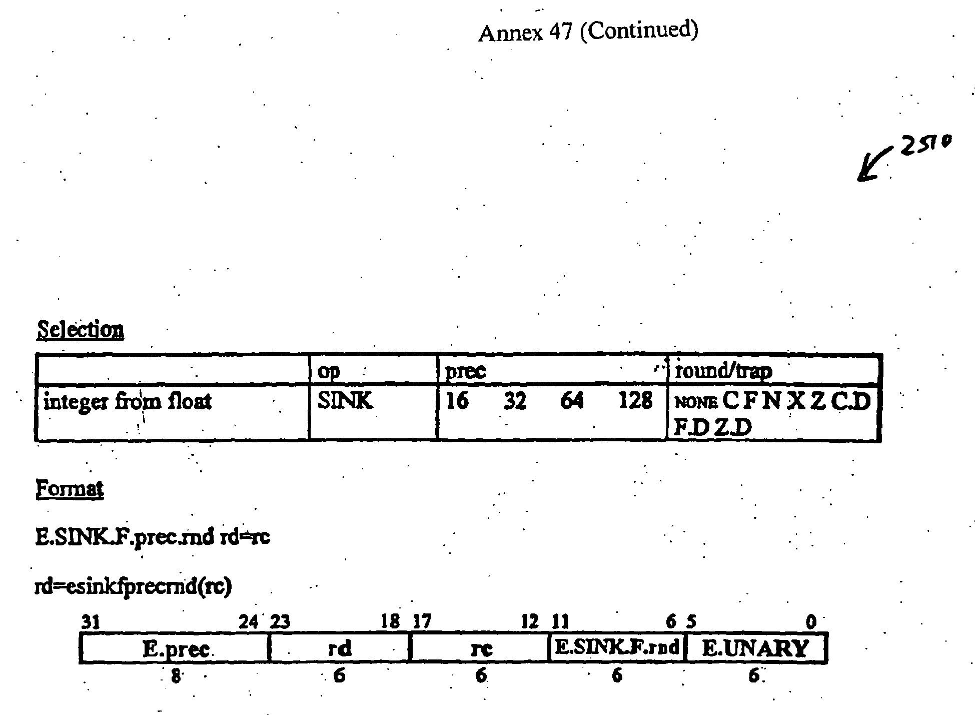

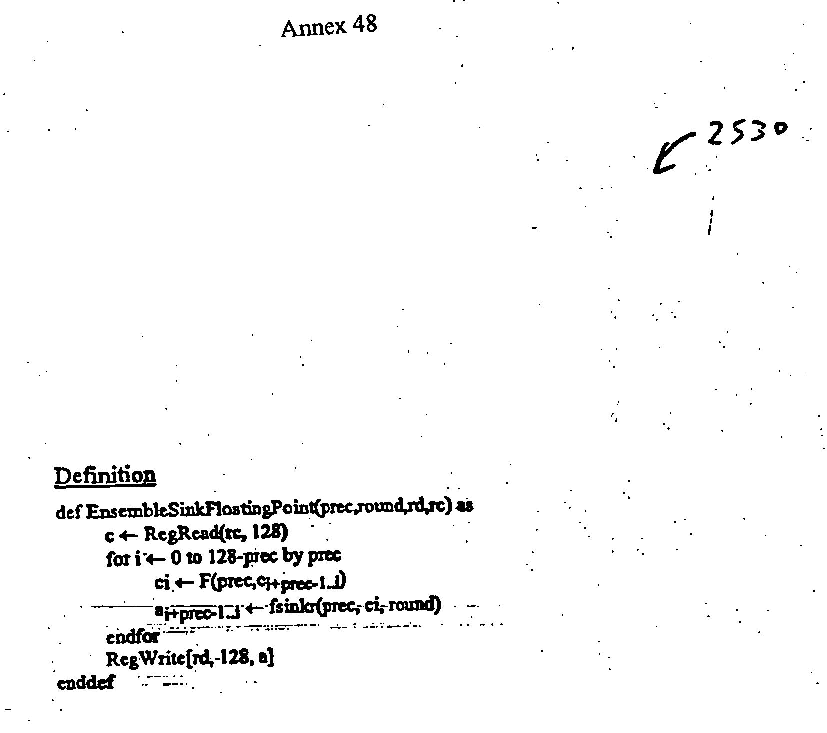

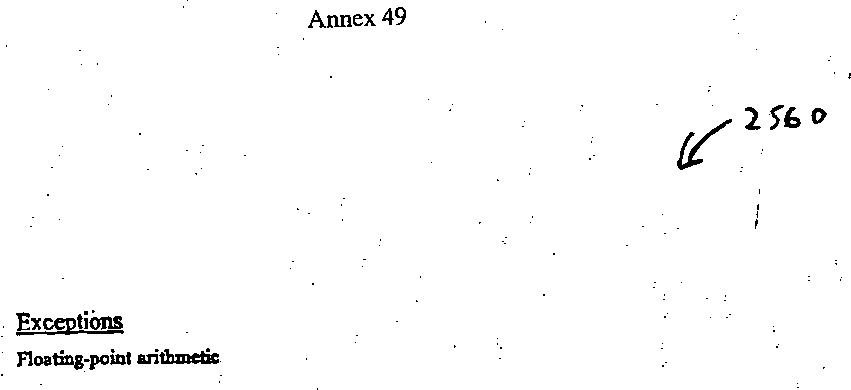

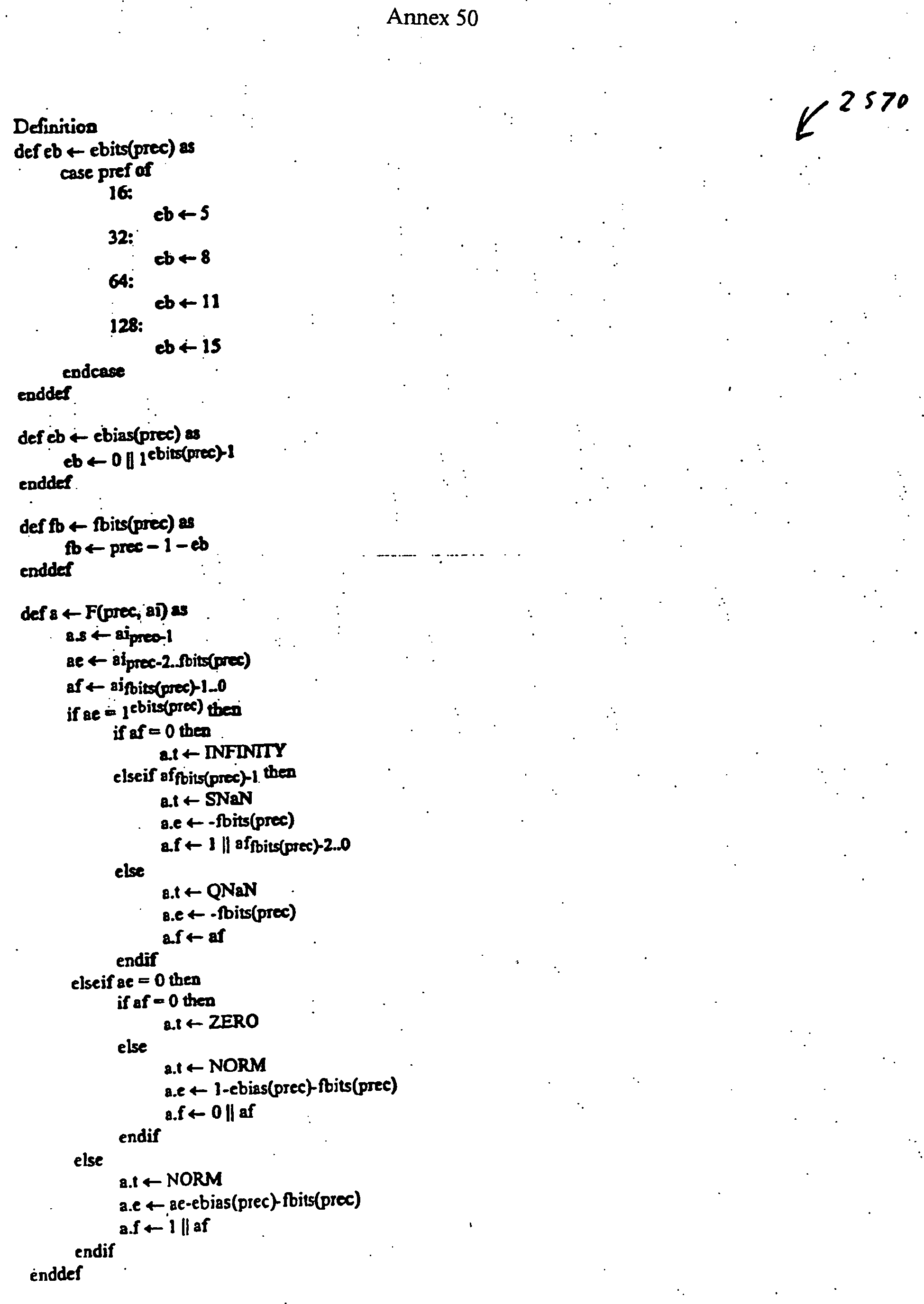

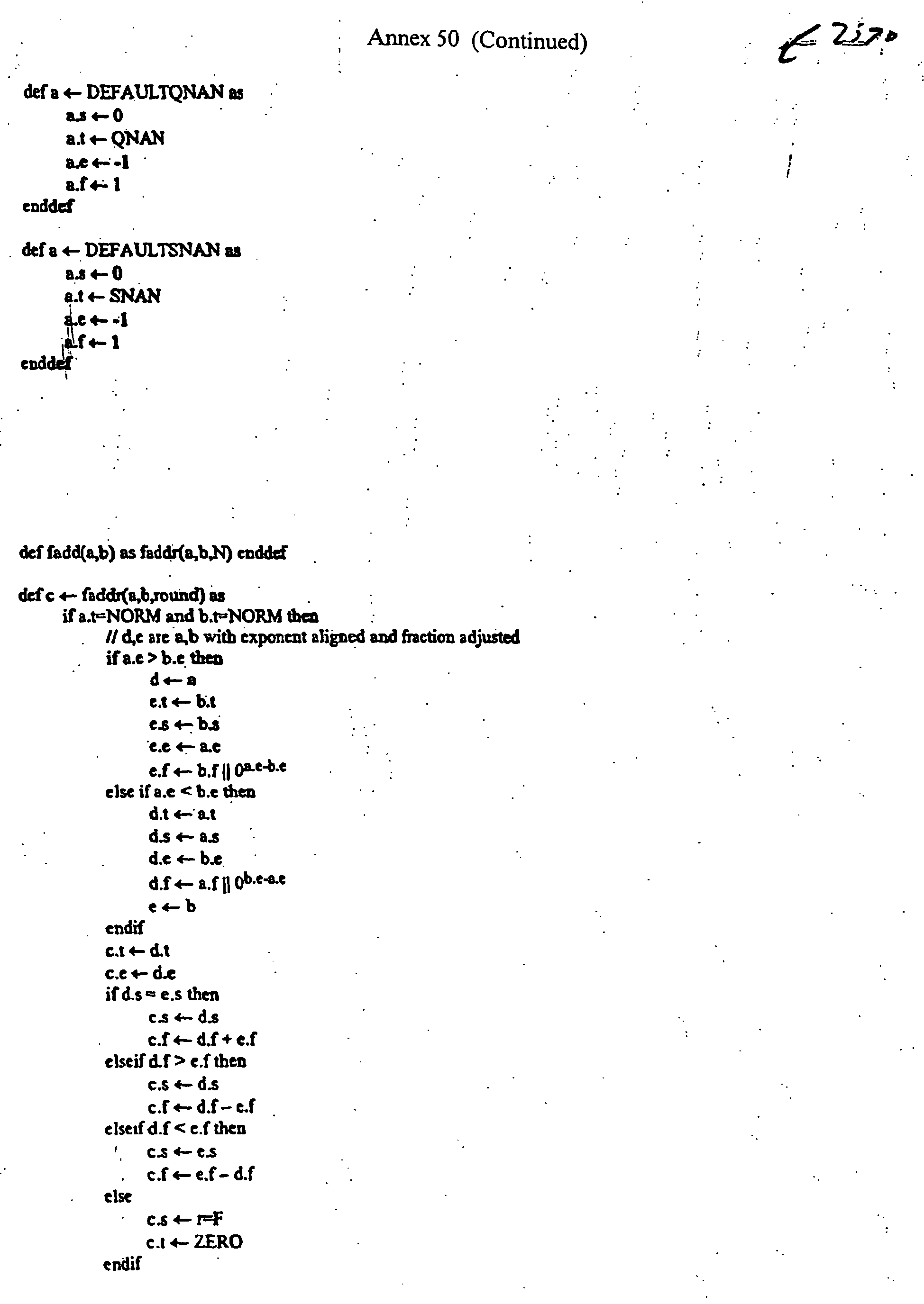

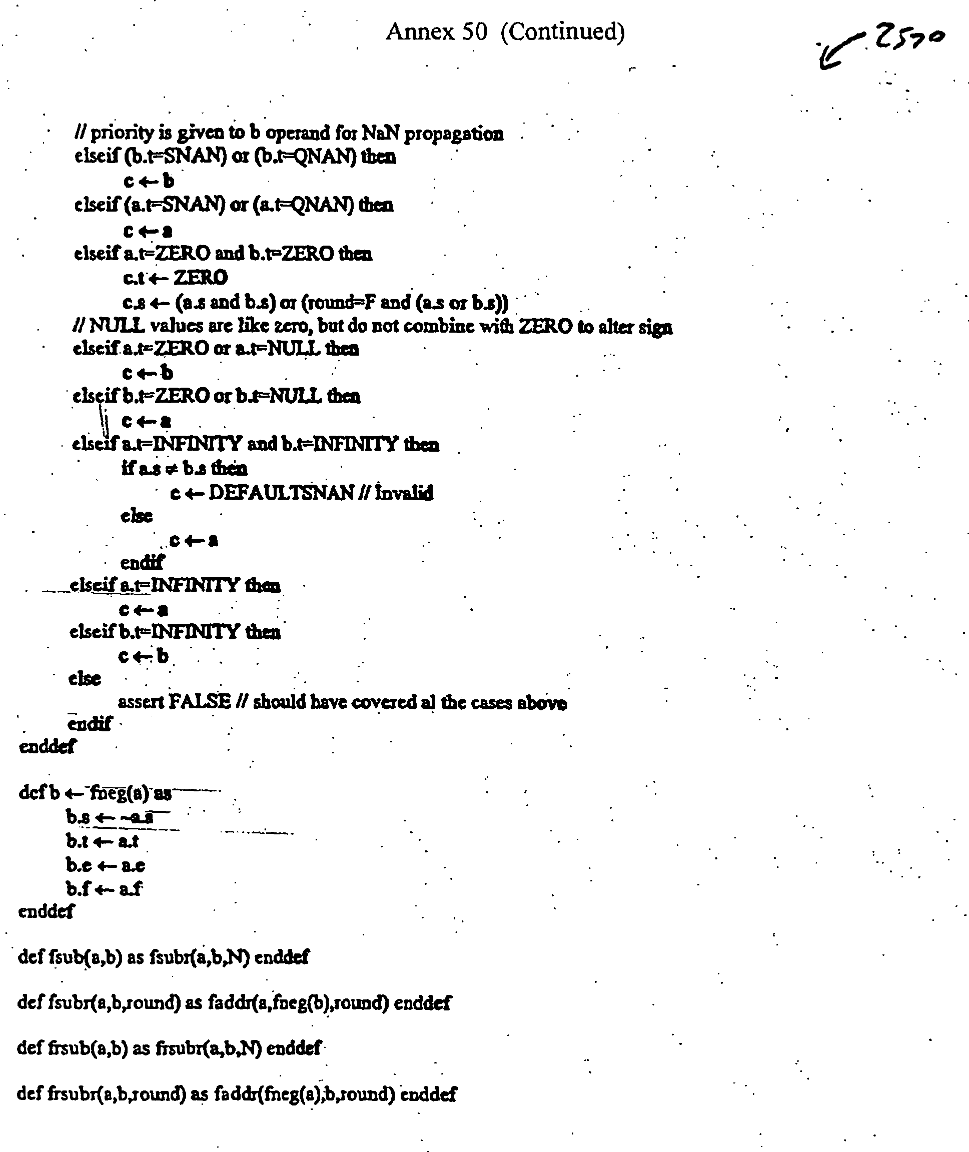

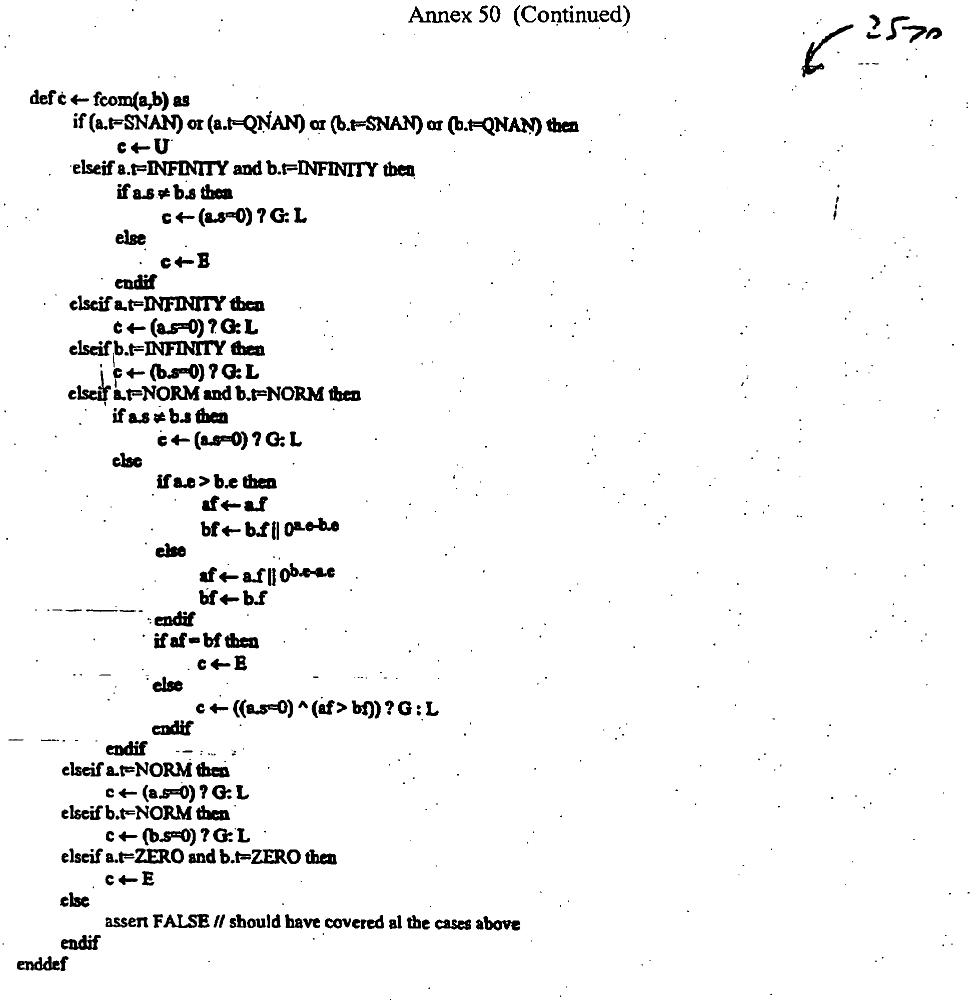

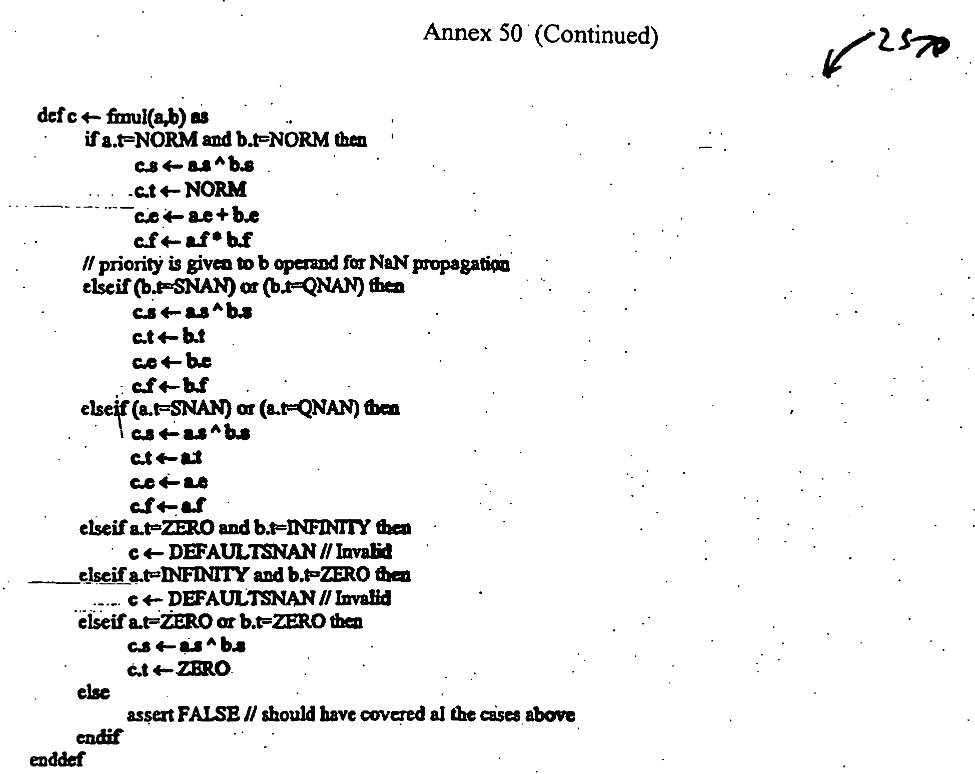

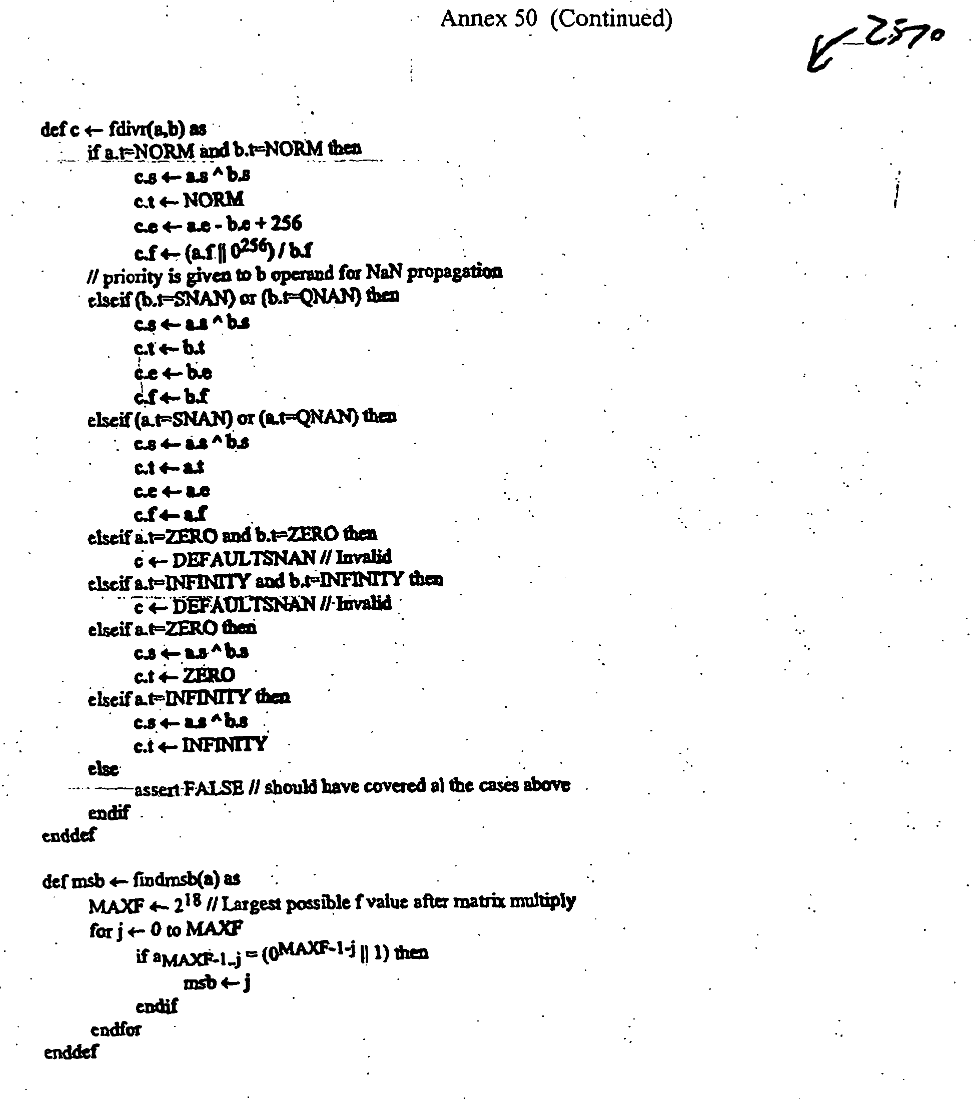

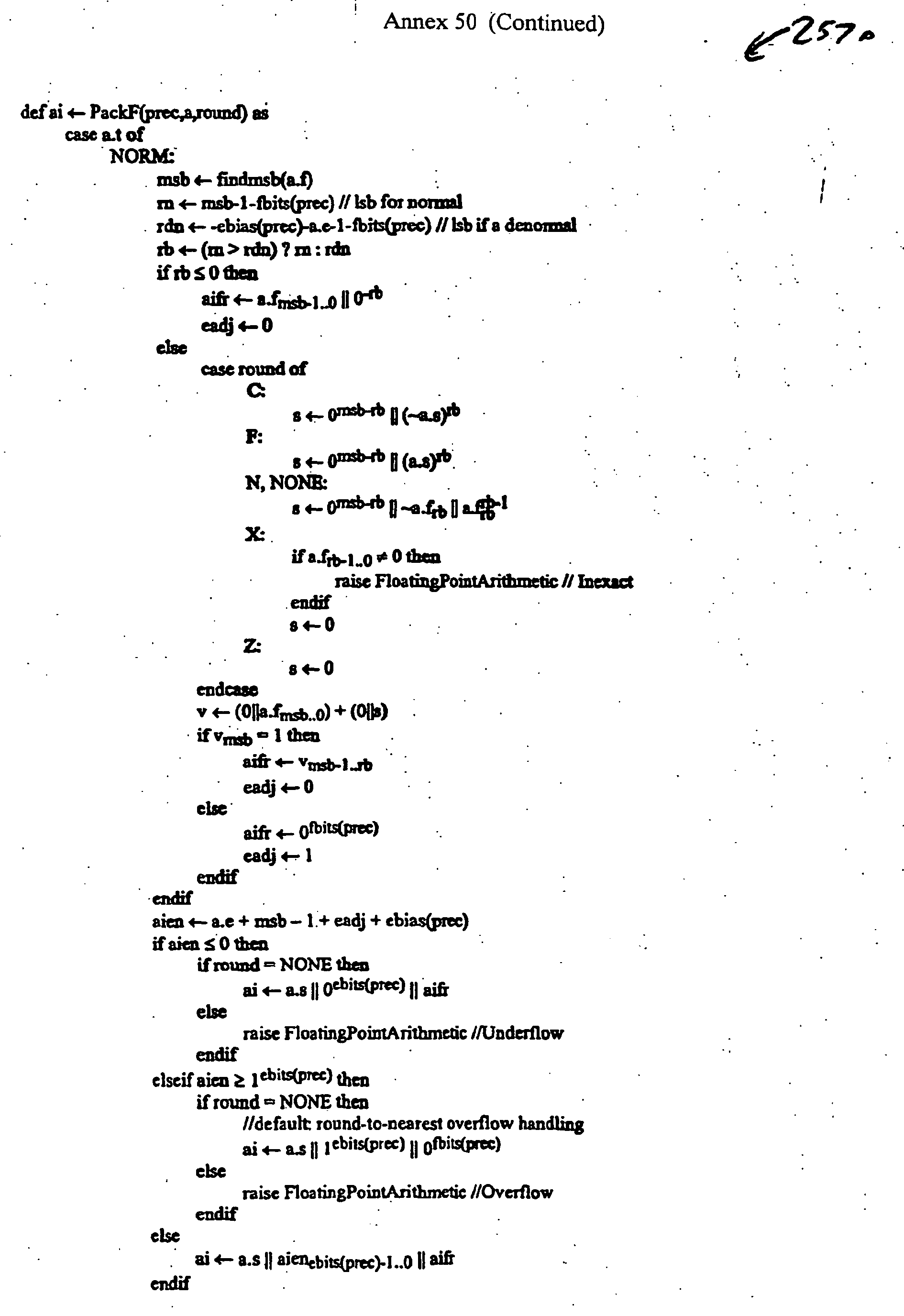

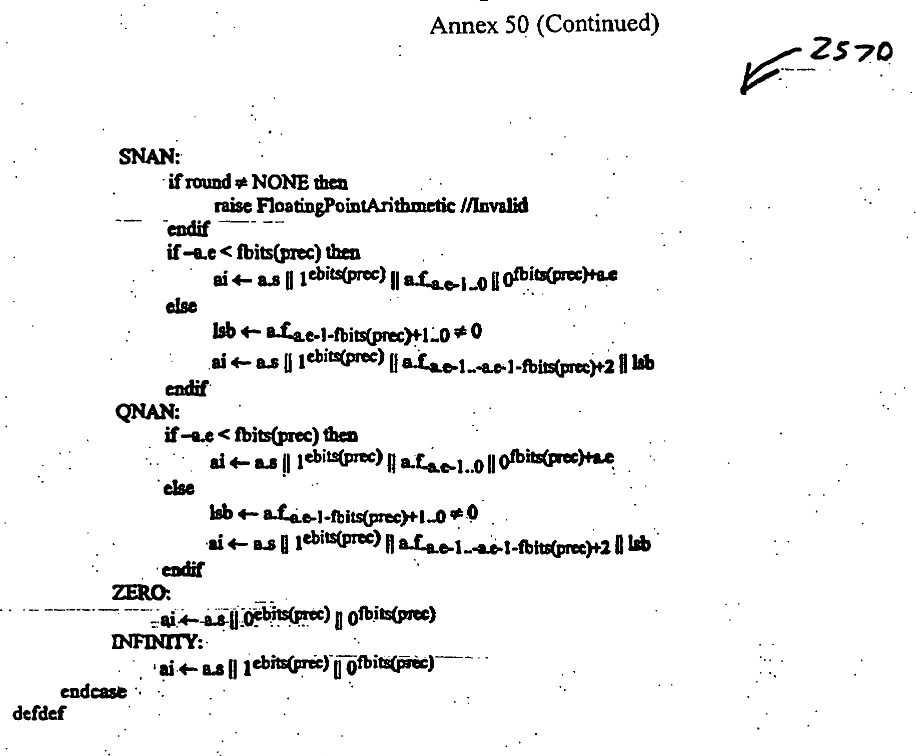

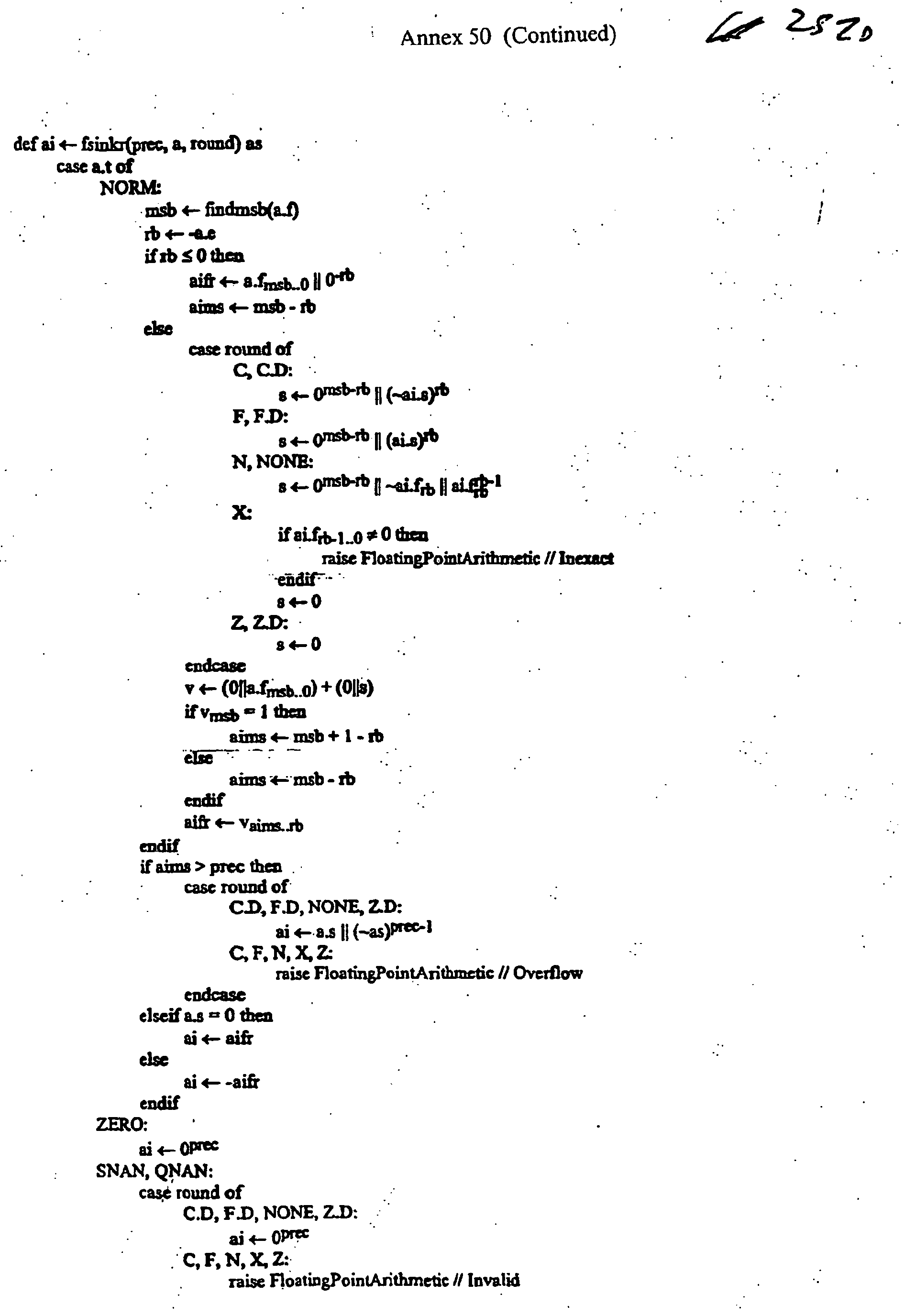

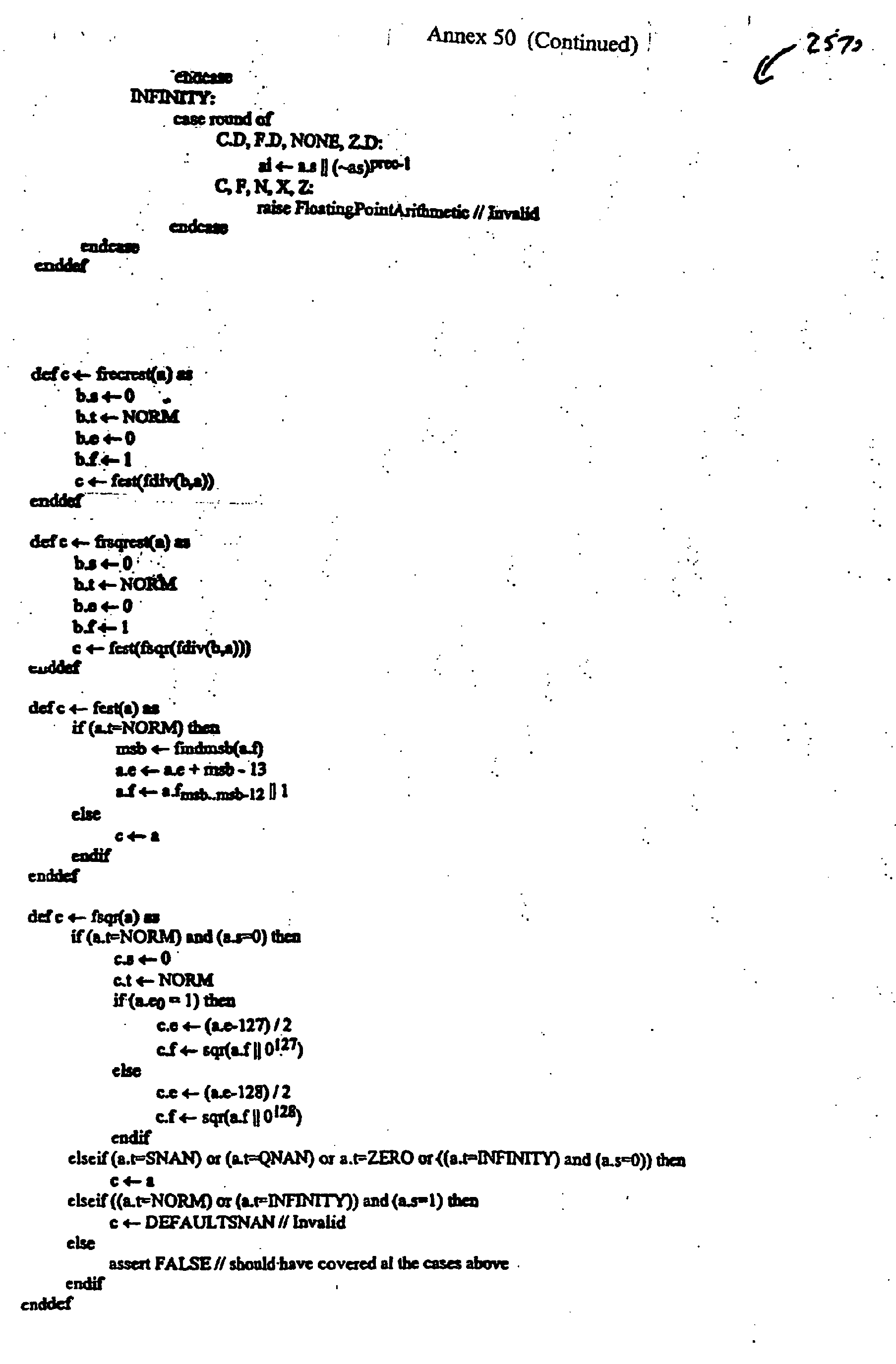

## Claims

1. A method performed in a system comprising a first memory system (117-120) having a first data path width, a second memory system (132-136) having a second data path width, and an execution unit (141, 142, 145, 148, 149) associated with the second memory system, the second data path width being greater than a data path width of the execution unit and greater than the first data path width, the method comprising:
copying a first memory operand portion from the first memory system (117-120) to the second memory system (132-136), the first memory operand portion having the first data path width;
copying a plurality of further memory operand portions from the first memory system (117-120) to the second memory system (132-136), each further memory operand portion having the first data path width, the plurality of further memory operand portions being catenated in the second memory system (132-136) with the first memory operand portion, thereby forming catenated wide-operand data having a width greater than the first data path width and greater than the data path width of the execution unit, and
using the catenated wide-operand data as a wide operand in the execution unit (141, 142, 145, 148, 149) during the execution of a single instruction.

2. The method of claim 1 further comprising specifying with a memory address indicia a memory address from which data having a plurality of data path widths can be read.

3. The method of claim 2 wherein the memory address indicia comprises at least a portion of the memory address, a size of the data being operated on by the execution unit, and a configuration of the data being operated on by the execution unit.

4. The method of claim 1 further comprising checking the validity of the operand portion and, if valid, permitting a subsequent instruction to access the operand portion.

5. The method of claim 4 wherein the checking comprises verifying that the operand portion has not been altered by intervening instructions.

6. The method of claim 1 further comprising executing a Wide Operand instruction, wherein the Wide Operand instruction is selected from the group consisting of 1) a Wide Switch instruction, 2) a Wide Translate instruction, 3) a Wide Multiply Matrix instruction, 4) a Wide Multiply Matrix Extract instruction, 5) a Wide Muliply Matrix Extract Immediate instruction, 6) a Wide Multiply Matrix Floating point instruction, and 7) a Wide Multiply Matrix Galois instruction.

7. The method of claim 1 further comprising performing an extract instruction controlled by a third memory system.

8. The method of claim 7 further comprising specifying the size of a result of the extract instruction, wherein the size of the result is an equal or smaller number of bits than can fit in a fourth memory system storing the result.

9. The method of claim 7 further comprising scaling the result of the extract instruction for use in subsequent operations without concern of overflow or rounding.

10. The method of claim 7 wherein the third memory system stores a single memory value defining a size of symbols within a source operand, a shift amount, a size of the symbols within the result of the extract instruction, a rounding control value, and a format of the source operand.

11. The method of claim 7 wherein the third memory system stores a single memory value defining a size of symbols within a source operand and a shift amount.

12. The method of claim 7 wherein the extract instruction comprises a specific instruction, wherein the specific instruction is selected from the group consisting of 1) Ensemble Convolve Extract, 2) Ensemble Multiply Extract, 3) Ensemble Multiply Add Extract, and 4) Ensemble Scale Add Extract.

13. The method of claim 1 further comprising:
specifying a Wide Operand instruction for little-endian byte ordering in a portion of the Wide Operand instruction; and
specifying the Wide Operand instruction for big-endian byte ordering in a portion of the Wide Operand instruction.

14. The method of claim 13 wherein the byte ordering comprises:
specifying an order in which to deliver data bytes to the execution unit (141, 142, 145, 148, 149) within units of the first data path width; and
specifying the order to place multiple memory words within a larger wide operand.

15. A system comprising:
a first memory system (117-120) having a first data path width;
a second memory system (132-136) having a second data path width;
a execution unit (141, 142, 145, 148, 149) associated with the second memory system, the second data path width being greater than a data path width of the execution unit and greater than the first data path width;
means for copying a first memory operand portion from the first memory system (117-120) to the second memory system (132-136), the first memory operand portion having the first data path width;
means for copying a plurality of further memory operand portions from the first memory system to the second memory system, each further memory operand portion having the first data path width, the plurality of further memory operand portions being catenated in the second memory system (132-136) with the first memory operand portion, thereby forming catenated wide-operand data having a width greater than the first data path width and greater than the data path width of the execution unit, and
wherein the execution unit (141, 142, 145, 148, 149) is operable to use the catenated wide-operand data as a wide operand during the execution of a single instruction.

16. The system of claim 15 further comprising means for specifying with a memory address indicia a memory address from which data having a plurality of data path widths of data can be read.

17. The system of claim 16 wherein the memory address indicia comprises at least a portion of the memory address, an indicia of a size of the data being operated on by the execution unit (141, 142, 145, 148, 149), and an indicia of a configuration of the data being operated on by the execution unit.

18. The system of claim 15 further comprising means for checking the validity of the operand portion and, if valid, for permitting a subsequent instruction to access the operand portion.

19. The system of claim 18 wherein the means for checking comprises means for verifying that the operand portion has not been altered by intervening instructions.

20. The system of claim 15 further comprising means for executing a Wide Operand instruction, wherein the Wide Operand instruction is selected from the group consisting of 1) a Wide Switch instruction, 2) a Wide Translate instruction, 3) a Wide Multiply Matrix instruction, 4) a Wide Multiply Matrix Extract instruction, 5) a Wide Muliply Matrix Extract Immediate instruction, 6) a Wide Multiply Matrix Floating point instruction, and 7) a Wide Multiply Matrix Galois instruction.

21. The system of claim 15 further comprising means for performing an extract instruction controlled by a third memory system.

22. The system of claim 21 further comprising means for specifying the size of a result of the extract instruction, wherein the size of the result is an equal or smaller number of bits than can fit in a fourth memory system storing the result.

23. The system of claim 21 further comprising means for scaling the result of the extract instruction for use in subsequent operations without concern of overflow or rounding.

24. The system of claim 21 wherein the third memory system is operable to store a single memory value defining a size of symbols within a source operand, a shift amount, a size of the symbols within the result of the extract instruction, a rounding control value, and a format of the source operand.

25. The system of claim 21 wherein the third memory system is operable to store a single memory value defining a size of symbols within a source operand and a shift amount.

26. The system of claim 21 wherein the extract instruction comprises a specific instruction, wherein the specific instruction is selected from the group consisting of 1) Ensemble Convolve Extract, 2) Ensemble Multiply Extract, 3) Ensemble Multiply Add Extract, and 4) Ensemble Scale Add Extract.

27. The system of claim 15 further comprising:
means for specifying a Wide Operand instruction for little-endian byte ordering in a portion of the Wide Operand instruction; and
means for specifying the Wide Operand instruction for big-endian byte ordering in a portion of the Wide Operand instruction.

28. The system of claim 27 wherein the byte ordering comprises:
means for specifying an order in which to deliver data bytes to the execution unit within units of the first data path width; and
means for specifying the order to place multiple memory words within a larger wide operand.

29. A computer program or computer program product comprising instructions for performing a method according to any of claims 1 to 14.

## Patentansprüche

1. Verfahren, das in einem System durchgeführt wird, das ein erstes Speichersystem (117-120) mit einer ersten Datenpfadbreite aufweist, ein zweites Speichersystem (132-136) mit einer zweiten Datenpfadbreite, und eine Ausführungseinheit (141, 142, 145, 148, 149), die mit dem zweiten Speichersystem verbunden ist, wobei die zweite Datenpfadbreite größer ist, als eine Datenpfadbreite der Ausführungseinheit und größer, als die erste Datenpfadbreite, wobei das Verfahren umfasst:
Kopieren eines ersten Speicheroperanden-Abschnitts von dem ersten Speichersystem (117-120) in das zweite Speichersystem (132-136), wobei der erste Speicheroperanden-Abschnitt die erste Datenpfadbreite hat;
Kopieren einer Vielzahl von weiteren Speicheroperanden-Abschnitten von dem ersten Speichersystem (117-120) in das zweite Speichersystem (132-136), wobei jeder weitere Speicheroperanden-Abschnitt die erste Datenpfadbreite hat, wobei die Vielzahl von weiteren Speicheroperanden-Abschnitten in dem zweiten Speichersystem (132-136) mit dem ersten Speicheroperanden-Abschnitt verbunden sind, wodurch sie verbundene Daten mit langen Operanden bilden, die eine Breite haben, die größer ist, als die erste Datenpfadbreite und größer als die Datenpfadbreite der Ausführungseinheit; und
Verwenden der verbundenen Daten mit langen Operanden als langen Operanden in der Ausführungseinheit (141, 142, 145, 148, 149) während der Ausführung eines einzelnen Befehls.

2. Verfahren nach Anspruch 1, das des Weiteren das Spezifizieren, mit Speicheradressen-Kennzeichen, einer Speicheradresse umfasst, aus der Daten mit einer Vielzahl von Datenpfadbreiten ausgelesen werden können.

3. Verfahren nach Anspruch 2, wobei die Speicheradressen-Kennzeichen wenigstens einen Abschnitt der Speicheradresse, die Größe der Daten, die durch die Ausführungseinheit bearbeitet werden, und eine Konfiguration der Daten, die durch die Ausführungseinheit bearbeitet werden, aufweisen.

4. Verfahren nach Anspruch 1, das des Weiteren das Prüfen der Gültigkeit des Operanden-Abschnitts umfasst und, wenn er gültig ist, das Zulassen eines Folgebefehls zum Zugreifen auf den Operanden-Abschnitt.

5. Verfahren nach Anspruch 4, wobei das Prüfen das Verifizieren umfasst, dass der Operanden-Abschnitt nicht durch intervenierende Befehle verändert worden ist.

6. Verfahren nach Anspruch 1, das des Weiteren das Ausführen eines Wide Operand Befehls umfasst, wobei der Wide Operand Befehl ausgewählt wird aus der Gruppe bestehend aus 1) einem Wide Switch Befehl, 2) einem Wide Translate Befehl, 3) einem Wide Multiply Matrix Befehl, 4) einem Wide Multiply Matrix Extract Befehl, 5) einem Wide Multiply Matrix Extract Immediate Befehl, 6) einem Wide Multiply Matrix Floating Point Befehl und 7) einem Wide Multiply Matrix Galois Befehl.

7. Verfahren nach Anspruch 1, das des Weiteren das Durchführen eines Extrahier-Befehls umfasst, der durch ein drittes Speichersystem gesteuert wird.

8. Verfahren nach Anspruch 7, das des Weiteren das Spezifizieren der Größe eines Ergebnisses des Extrahier-Befehls umfasst, wobei die Größe des Ergebnisses eine gleiche oder kleinere Anzahl von Bits ist, als diejenigen, die in ein viertes Speichersystem, das das Ergebnis speichert, passen.

9. Verfahren nach Anspruch 7, das des Weiteren das Skalieren des Ergebnisses des Extrahier-Befehls zur Verwendung in Folgeoperationen umfasst, ohne Bedenken hinsichtlich Overflow oder Rundung.

10. Verfahren nach Anspruch 7, wobei das dritte Speichersystem einen einzelnen Speicherwert speichert, der die Größe von Symbolen in einem Source-Operanden definiert, einen Verschiebungsbetrag, die Größe der Symbole in dem Ergebnis des Extrahier-Befehls, einen Rundungssteuerungswert und das Format des Source-Operanden.

11. Verfahren nach Anspruch 7, wobei das dritte Speichersystem einen einzelnen Speicherwert speichert, der die Größe von Symbolen in einem Source-Operanden definiert und einen Verschiebungsbetrag.

12. Verfahren nach Anspruch 7, wobei der Extrahier-Befehl einen spezifischen Befehl aufweist, wobei der spezifische Befehl ausgewählt wird aus der Gruppe bestehend aus 1) Ensemble Convolve Extract, 2) Ensemble Multiply Extract, 3) Ensemble Multiply Add Extract und 4) Ensemble Scale Add Extract.

13. Verfahren nach Anspruch 1, das des Weiteren umfasst:
Spezifizieren eines Wide Operand Befehls für Little Endian Byte-Reihenfolge in einem Abschnitt des Wide Operand Befehls; und
Spezifizieren des Wide Operand Befehls für Big Endian Byte-Reihenfolge in einem Abschnitt des Wide Operand Befehls.

14. Verfahren nach Anspruch 13, wobei das Byte-Anordnen umfasst:
Spezifizieren einer Reihenfolge, in der Datenbytes an die Ausführungseinheit (141, 142, 145, 148, 149) zu liefern sind, in Einheiten mit der ersten Datenpfadbreite; und
Spezifizieren der Reihenfolge, in der mehrere Speicherworte zu platzieren sind, innerhalb eines größeren langen Operanden.

15. System, das aufweist:
ein erstes Speichersystem (117-120) mit einer ersten Datenpfadbreite;
ein zweites Speichersystem (132-136) mit einer zweiten Datenpfadbreite;
eine Ausführungseinheit (141, 142, 145, 148, 149), die mit dem zweiten Speichersystem verbunden ist, wobei die zweite Datenpfadbreite größer ist, als eine Datenpfadbreite der Ausführungseinheit und größer, als die erste Datenpfadbreite;
eine Einrichtung zum Kopieren eines ersten Speicheroperanden-Abschnitts von dem ersten Speichersystem (117-120) in das zweite Speichersystem (132-136), wobei der erste Speicheroperanden-Abschnitt die erste Datenpfadbreite hat;
eine Einrichtung zum Kopieren einer Vielzahl von weiteren Speicheroperanden-Abschnitten von dem ersten Speichersystem in das zweite Speichersystem, wobei jeder weitere Speicheroperanden-Abschnitt die erste Datenpfadbreite hat, wobei die Vielzahl von weiteren Speicheroperanden-Abschnitten in dem zweiten Speichersystem (132-136) mit dem ersten Speicheroperanden-Abschnitt verbunden sind, wodurch sie verbundene Daten mit langen Operanden bilden, die eine Breite haben, die größer ist, als die erste Datenpfadbreite und größer als die Datenpfadbreite der Ausführungseinheit; und
wobei die Ausführungseinheit (141, 142, 145, 148, 149) so betreibbar ist, dass sie die verbundenen Daten mit langen Operanden als langen Operanden während der Ausführung eines einzelnen Befehls verwendet.

16. System nach Anspruch 15, das des Weiteren eine Einrichtung aufweist zum Spezifizieren, mit Speicheradressen-Kennzeichen, einer Speicheradresse, aus der Daten mit einer Vielzahl von Datenpfadbreiten ausgelesen werden können.

17. System nach Anspruch 16, wobei die Speicheradressen-Kennzeichen wenigstens einen Abschnitt der Speicheradresse, Kennzeichen der Größe der Daten, die durch die Ausführungseinheit (141, 142, 145, 148, 149) bearbeitet werden, und Kennzeichen der Konfiguration der Daten, die durch die Ausführungseinheit bearbeitet werden, aufweisen.

18. System nach Anspruch 15, das des Weiteren eine Einrichtung zum Prüfen der Gültigkeit des Operanden-Abschnitts aufweist und, wenn er gültig ist, zum Zulassen eines Folgebefehls zum Zugreifen auf den Operanden-Abschnitt.

19. System nach Anspruch 18, wobei die Einrichtung zum Prüfen eine Einrichtung zum Verifizieren aufweist, dass der Operanden-Abschnitt nicht durch intervenierende Befehle verändert worden ist.

20. System nach Anspruch 15, das des Weiteren eine Einrichtung aufweist zum Ausführen eines Wide Operand Befehls, wobei der Wide Operand Befehl ausgewählt wird aus der Gruppe bestehend aus 1) einem Wide Switch Befehl, 2) einem Wide Translate Befehl, 3) einem Wide Multiply Matrix Befehl, 4) einem Wide Multiply Matrix Extract Befehl, 5) einem Wide Multiply Matrix Extract Immediate Befehl, 6) einem Wide Multiply Matrix Floating Point Befehl und 7) einem Wide Multiply Matrix Galois Befehl.

21. System nach Anspruch 15, das des Weiteren eine Einrichtung aufweist zum Durchführen eines Extrahier-Befehls, der durch ein drittes Speichersystem gesteuert wird.

22. System nach Anspruch 21, das des Weiteren eine Einrichtung aufweist zum Spezifizieren der Größe eines Ergebnisses des Extrahier-Befehls, wobei die Größe des Ergebnisses eine gleiche oder kleinere Anzahl von Bits ist, als diejenigen, die in ein viertes Speichersystem, das das Ergebnis speichert, passen.

23. System nach Anspruch 21, das des Weiteren eine Einrichtung aufweist zum Skalieren des Ergebnisses des Extrahier-Befehls zur Verwendung in Folgeoperationen, ohne Bedenken hinsichtlich Overflow oder Rundung.

24. System nach Anspruch 21, wobei das dritte Speichersystem so betreibbar ist, dass es einen einzelnen Speicherwert speichert, der die Größe von Symbolen in einem Source-Operanden definiert, einen Verschiebungsbetrag, die Größe der Symbole in dem Ergebnis des Extrahier-Befehls, einen Rundungssteuerungswert und das Format des Source-Operanden.

25. System nach Anspruch 21, wobei das dritte Speichersystem so betreibbar ist, dass es einen einzelnen Speicherwert speichert, der die Größe von Symbolen in einem Source-Operanden definiert und einen Verschiebungsbetrag.

26. System nach Anspruch 21, wobei der Extrahier-Befehl einen spezifischen Befehl aufweist, wobei der spezifische Befehl ausgewählt wird aus der Gruppe bestehend aus 1) Ensemble Convolve Extract, 2) Ensemble Multiply Extract, 3) Ensemble Multiply Add Extract und 4) Ensemble Scale Add Extract.

27. System nach Anspruch 15, das des Weiteren aufweist:
eine Einrichtung zum Spezifizieren eines Wide Operand Befehls für Little Endian Byte-Reihenfolge in einem Abschnitt des Wide Operand Befehls; und
eine Einrichtung zum Spezifizieren des Wide Operand Befehls für Big Endian Byte-Reihenfolge in einem Abschnitt des Wide Operand Befehls.

28. System nach Anspruch 27, wobei das Byte-Anordnen umfasst:
eine Einrichtung Spezifizieren einer Reihenfolge, in der Datenbytes an die Ausführungseinheit zu liefern sind, in Einheiten mit der ersten Datenpfadbreite; und
eine Einrichtung zum Spezifizieren der Reihenfolge, in der mehrere Speicherworte zu platzieren sind, innerhalb einem größeren langen Operanden.

29. Computerprogramm oder Computerprogramm-Erzeugnis mit Befehlen zum Durchführen eines Verfahrens nach einem der Ansprüche 1 bis 14.

## Revendications

1. Procédé effectué sur un système comprenant un premier système de mémoire (117 à 120) ayant une première largeur de chemin de données, un deuxième système de mémoire (132 à 136) ayant une deuxième largeur de chemin de données, et une unité d'exécution (141, 142, 145, 148, 149) associée au deuxième système de mémoire, la deuxième largeur de chemin de données étant supérieure à une largeur de chemin de données de l'unité d'exécution et supérieure à la première largeur de chemin de données, le procédé comprenant les étapes consistant à :
copier une première portion d'opérande de mémoire du premier système de mémoire (117 à 120) au deuxième système de mémoire (132 à 136), la première portion d'opérande de mémoire ayant la première largeur de chemin de données ;
copier une pluralité de portions d'opérande de mémoire supplémentaires du premier système de mémoire (117 à 120) au deuxième système de mémoire (132 à 136), chaque portion d'opérande de mémoire supplémentaire ayant la première largeur de chemin de données, la pluralité de portions d'opérande de mémoire supplémentaires étant concaténée dans le deuxième système de mémoire (132 à 136) avec la première portion d'opérande de mémoire, formant ainsi des données d'opérande large concaténées ayant une largeur supérieure à la première largeur de chemin de données et supérieure à la largeur de chemin de données de l'unité d'exécution ; et
utiliser les données d'opérande large concaténées comme un opérande large dans l'unité d'exécution (141, 142, 145, 148, 149) pendant l'exécution d'une seule instruction.

2. Procédé selon la revendication 1, comprenant en outre l'étape consistant à spécifier avec un indice d'adresse de mémoire une adresse de mémoire à partir de laquelle des données ayant une pluralité de largeurs de chemin de données peuvent être lues.

3. Procédé selon la revendication 2, dans lequel l'indice d'adresse de mémoire comprend au moins une portion de l'adresse de mémoire, un volume des données sur lesquelles opère l'unité d'exécution et une configuration des données sur lesquelles opère l'unité d'exécution.

4. Procédé selon la revendication 1, comprenant en outre l'étape consistant à contrôler la validité de la portion d'opérande, et si elle est valide, permettre à une instruction ultérieure d'accéder à la portion d'opérande.

5. Procédé selon la revendication 4, dans lequel le contrôle comprend l'étape consistant à vérifier que la portion d'opérande n'a pas été modifiée par des instructions intervenantes.

6. Procédé selon la revendication 1, comprenant en outre l'étape consistant à exécuter une instruction à opérande large, dans lequel l'instruction à opérande large est sélectionnée dans le groupe composé de 1) une instruction large de commutation, 2) une instruction large de traduction, 3) une instruction large de multiplication de matrice, 4) une instruction large de multiplication d'extrait de matrice, 5) une instruction large de multiplication d'extrait de matrice immédiate, 6) une instruction large de multiplication de matrice en virgule flottante, et 7) une instruction large de multiplication de matrice de type Galois.

7. Procédé selon la revendication 1, comprenant en outre l'étape consistant à effectuer une instruction d'extraction commandée par un troisième système de mémoire.

8. Procédé selon la revendication 7, comprenant en outre l'étape consistant à spécifier la taille d'un résultat de l'instruction d'extraction, dans lequel la taille du résultat est un nombre égal ou inférieur des bits qui peuvent rentrer dans un quatrième système de mémoire stockant le résultat.

9. Procédé selon la revendication 7, comprenant en outre l'étape consistant à mettre à l'échelle le résultat de l'instruction d'extraction pour une utilisation dans des opérations ultérieures sans problème de dépassement ou d'arrondi.

10. Procédé selon la revendication 7, dans lequel le troisième système de mémoire stocke une seule valeur de mémoire définissant une taille des symboles à l'intérieur d'un opérande source, une quantité de décalage, une taille des symboles à l'intérieur du résultat de l'instruction d'extraction, une valeur de commande d'arrondissage et un format de l'opérande source.

11. Procédé selon la revendication 7, dans lequel le troisième système de mémoire stocke une seule valeur de mémoire définissant une taille des symboles à l'intérieur d'un opérande source et une quantité de décalage.

12. Procédé selon la revendication 7, dans lequel l'instruction d'extraction comprend une instruction spécifique, l'instruction spécifique étant sélectionnée dans le groupe composé de 1) extraction de convolution d'ensemble, 2) extraction de multiplication d'ensemble, 3) extraction d'addition de multiplication d'ensemble et 4) extraction d'addition de mise à l'échelle d'ensemble.

13. Procédé selon la revendication 1, comprenant en outre les étapes consistant à :
spécifier une instruction à opérande large pour un classement d'octets petit-boutien dans une portion de l'instruction à opérande large ; et
spécifier l'instruction à opérande large pour un classement d'octets gros-boutien dans une portion de l'instruction à opérande large.

14. Procédé selon la revendication 13, dans lequel le classement des octets comprend les étapes consistant à :
spécifier un ordre dans lequel il convient de fournir des octets de données à l'unité d'exécution (141, 142, 145, 148, 149) dans la limite des unités de la première largeur de chemin de données ; et
spécifier l'ordre pour placer plusieurs mots de mémoire à l'intérieur d'un opérande large plus grand.

15. Système comprenant :
un premier système de mémoire (117 à 120) ayant une première largeur de chemin de données ;
un deuxième système de mémoire (132 à 136) ayant une deuxième largeur de chemin de données ; et
une unité d'exécution (141, 142, 145, 148, 149) associée au deuxième système de mémoire, la deuxième largeur de chemin de données étant supérieure à une largeur de chemin de données de l'unité d'exécution et supérieure à la première largeur de chemin de données ;
des moyens pour copier une première portion d'opérande de mémoire du premier système de mémoire (117 à 120) au deuxième système de mémoire (132 à 136), la première portion d'opérande de mémoire ayant la première largeur de chemin de données ;
des moyens pour copier une pluralité de portions d'opérande de mémoire supplémentaires du premier système de mémoire (117 à 120) au deuxième système de mémoire (132 à 136), chaque portion d'opérande de mémoire supplémentaire ayant la première largeur de chemin de données, la pluralité de portions d'opérande de mémoire supplémentaires étant concaténée dans le deuxième système de mémoire (132 à 136) avec la première portion d'opérande de mémoire, formant ainsi des données d'opérande large concaténées ayant une largeur supérieure à la première largeur de chemin de données et supérieure à la largeur de chemin de données de l'unité d'exécution ; et
dans lequel l'unité d'exécution (141, 142, 145, 148, 149) est opérationnelle pour utiliser des données d'opérande large concaténées comme un opérande large pendant l'exécution d'une seule instruction.

16. Système selon la revendication 15, comprenant en outre des moyens pour spécifier avec un indice d'adresse de mémoire une adresse de mémoire à partir de laquelle des données ayant une pluralité de largeurs de chemin de données peuvent être lues.

17. Système selon la revendication 16, dans lequel l'indice d'adresse de mémoire comprend au moins une portion de l'adresse de mémoire, un indice d'un volume des données sur lesquelles opère l'unité d'exécution (141, 142, 145, 148, 149) et un indice d'une configuration des données sur lesquelles opère l'unité d'exécution.

18. Système selon la revendication 15, comprenant en outre des moyens pour contrôler la validité de la portion d'opérande et, si elle est valide, permettre à une instruction ultérieure d'accéder à la portion d'opérande.

19. Système selon la revendication 18, dans lequel le moyen de contrôle comprend des moyens pour vérifier que la portion d'opérande n'a pas été modifiée par des instructions intervenantes.

20. Système selon la revendication 15, comprenant en outre des moyens pour exécuter une instruction à opérande large, dans lequel l'instruction à opérande large est sélectionnée dans le groupe composé de 1) une instruction large de commutation, 2) une instruction large de traduction, 3) une instruction large de multiplication de matrice, 4) une instruction large de multiplication d'extrait de matrice, 5) une instruction large de multiplication d'extrait de matrice immédiate, 6) une instruction large de multiplication de matrice en virgule flottante et 7) une instruction large de multiplication de matrice de type Galois.

21. Système selon la revendication 15, comprenant en outre des moyens pour effectuer une instruction d'extraction commandée par un troisième système de mémoire.

22. Système selon la revendication 21, comprenant en outre des moyens pour spécifier la taille d'un résultat de l'instruction d'extraction, dans lequel la taille du résultat est un nombre égal ou inférieur des bits qui peuvent rentrer dans un quatrième système de mémoire stockant le résultat.

23. Système selon la revendication 21, comprenant en outre des moyens pour mettre à l'échelle le résultat de l'instruction d'extraction pour une utilisation dans des opérations ultérieures sans problème de dépassement ou d'arrondi.

24. Système selon la revendication 21, dans lequel le troisième système de mémoire est opérationnel pour stocker une seule valeur de mémoire définissant une taille des symboles à l'intérieur d'un opérande source, une quantité de décalage, une taille des symboles à l'intérieur du résultat de l'instruction d'extraction, une valeur de commande d'arrondissage et un format de l'opérande source.

25. Système selon la revendication 21, dans lequel le troisième système de mémoire est opérationnel pour stocker une seule valeur de mémoire définissant une taille des symboles à l'intérieur d'un opérande source et une quantité de décalage.

26. Système selon la revendication 21, dans lequel l'instruction d'extraction comprend une instruction spécifique, l'instruction spécifique étant sélectionnée dans le groupe composé de 1) extraction de convolution d'ensemble, 2) extraction de multiplication d'ensemble, 3) extraction d'addition de multiplication d'ensemble et 4) extraction d'addition de mise à l'échelle d'ensemble.

27. Système selon la revendication 15, comprenant en outre :
des moyens pour spécifier une instruction à opérande large pour un classement d'octets petit-boutien dans une portion de l'instruction à opérande large ; et
des moyens pour spécifier l'instruction à opérande large pour un classement d'octets gros-boutien dans une portion de l'instruction à opérande large.

28. Système selon la revendication 27, dans lequel le classement des octets comprend :
des moyens pour spécifier un ordre dans lequel il convient de fournir des octets de données à l'unité d'exécution dans la limite des unités de la première largeur de chemin de données ; et
des moyens pour spécifier l'ordre pour placer plusieurs mots de mémoire à l'intérieur d'un opérande large plus grand.

29. Programme informatique ou produit de programme informatique comprenant des instructions pour effectuer un procédé selon l'une quelconque des revendications 1 à 14.
